# EUROPEAN PATENT SPECIFICATION

(11) **EP 4 039 861 B1**
(45) Date of publication and mention of the grant of the patent: **04.11.2026**
(21) Application number: 22155580.8
(22) Date of filing: 08.02.2022
(51) Int. Cl.: D06F 34/08, D06F 58/20, D06F 39/12, D06F 58/24

(54) **LAUNDRY TREATING APPARATUS**
WÄSCHEBEHANDLUNGSVORRICHTUNG
APPAREIL DE TRAITEMENT DU LINGE

(30) Priority: 08.02.2021 KR 20210017569; 24.06.2021 KR 20210082252
(43) Date of publication of application: 10.08.2022
(60) Divisional application: 26207931.2
(73) Proprietor: LG Electronics Inc., SEOUL 07336 (KR)
(72) Inventor: YOON, Juhan, 08592 Seoul (KR); JIN, Donghyun, 08592 Seoul (KR); LEE, Manseok, 08592 Seoul (KR); JEONG, Jaehun, 08592 Seoul (KR)
(74) Representative: Vossius & Partner Patentanwälte Rechtsanwälte mbB

(56) References cited:
- EP-A1- 2 650 425
- WO-A2-2010/077110
- KR-A- 20110 087 926
- KR-A- 20190 102 821

## Description

### BACKGROUND

### Field

The present invention relates to a laundry treating apparatus, and more particularly, to a laundry treating apparatus including a driving unit directly connected to a drum configured to accommodate laundry so as to rotate the drum.

### Discussion of the Related Art

In general, laundry treating apparatuses are apparatuses configured to remove dust and foreign substances from laundry by applying physical force thereto, and include washers, dryers, clothes refreshers (i.e., clothes stylers), etc.

The washers are configured to perform a washing cycle in which foreign substances may be separated and removed from laundry by supplying water and detergent.

The dryers are classified into an exhaust-type dryer and a circulation-type dryer, and both dryers are configured in common to perform a drying cycle in which moisture is removed from laundry by producing hot air having a high temperature through a heater and exposing the laundry to the hot air.

Recently, a dryer may be configured to intensively perform the drying cycle by omitting components configured to supply water to laundry or to drain water and omitting a tub provided in a cabinet to receive water. Thereby, the inner structure of the dryer may be simplified, and drying efficiency may be improved by directly supplying hot air to the drum configured to accommodate the laundry.

Such a dryer may include a drum configured to accommodate laundry, a hot air supplier configured to supply hot air to the drum, and a driving unit configured to rotate the drum. The dryer may dry the laundry accommodated in the drum by supplying hot air to the inside of the drum, and may uniformly expose the surface of the laundry to hot air by rotating the drum. Consequently, drying of the laundry may be completed through uniform contact of the overall surface of the laundry with hot air.

In order to rotate the drum, the driving unit needs to be fixed to the inside of the cabinet. Further, when the driving unit is provided to rotate a rotating shaft coupled to the drum, the driving unit needs to be provided parallel to the rotating shaft. However, the dryer does not include a tub fixed to the inside of the cabinet, and thus has a difficulty in fixing the driving unit to the tub in the same manner as the washer.

In order to solve this drawback, dryers configured such that a driving unit is fixed to the rear surface of a cabinet have appeared (refer to Japanese Patent Publication No. JP S55-081914A, Japanese Patent Publication No. JP S55-115455A, Japanese Patent Publication No. JP S57-063724A, and Japanese Patent Publication No. JP S57-124674A).

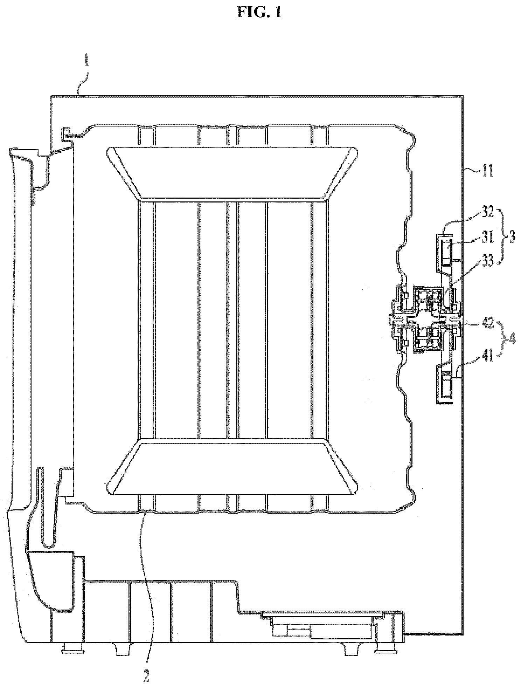

FIG. 1 shows the structure of a conventional dryer configured such that a driving unit is fixed to the rear surface of a cabinet.

The above dryer may include a cabinet 1 configured to form the external appearance of the dryer, a drum 2 rotatably provided within the cabinet 1 so as to accommodate laundry, and a driving unit 3 provided so as to rotate the drum 2.

The driving unit 2 may be disposed on the rear surface of the drum 2 so as to rotate the drum 2, and may be fixedly coupled to a rear panel 11 forming the rear surface of the cabinet 1. Therefore, the driving unit 3 may be fixed to the cabinet 1, and may thus rotate the drum 2.

The driving units 3 of the above-described conventional dryers may include in common a stator 31 fixed to the rear panel 11, a rotor 32 rotated by the stator 31, and a rotating shaft 33 coupled to the rotor 32 so as to rotate the drum 2, and may further include a reducer 37 provided to increase torque while reducing the RPM of the rotating shaft 33 so as to rotate the drum 2.

Further, the conventional dryers may further include in common a fixing unit 4 configured to fix the driving unit 3 to the rear panel 11. The fixing unit 4 may include at least one of a first fixing member 41 configured to fix the stator 31 to the rear panel 111, and a second fixing member 42 configured to fix the rotating shaft 33 to the rear panel 11. Therefore, in the conventional dryers, the driving unit 3 is disposed parallel to the rotating shaft 33 coupled to the drum 2, and may thus stably rotate the drum 2.

However, the rear panel 11 of the cabinet 1 is provided as a thin steel plate, and is thus easily deformed or vibrated even by a considerably small external force. Further, the rear panel 11 receives not only the load of the driving unit 3 but also the load of the drum 2 through the rotating shaft 33, and maintaining the shape of the rear panel 11 may thus be difficult.

Further, when laundry is eccentrically disposed in the drum 2 or repeatedly falls in the drum 2 during the rotating process of the drum 2, external force is repeatedly transmitted to the rear panel 11, and thus, the rear panel 11 may be vibrated.

When the rear panel 11 is even temporarily bent or deformed due to vibration or external force transmitted thereto, the rotating shaft 33 configured to connect the driving unit 3 to the drum 2 may be distorted. Accordingly, the driving unit 3 may generate unnecessary vibration or noise and, in severe cases, the rotating shaft 33 may be damaged. Further, bending or deformation of the rear panel 11 may generate unnecessary noise.

Further, during a process of vibrating the rear panel 11, the distance between the rotor 32 and the stator 31 is temporarily varied, and may thus cause collision between the rotor 32 and the stator 31 or generate unnecessary vibration and noise.

Moreover, when the driving unit 3 further includes the reducer 37, the rotating shaft 33 coupled to the reducer 37 and a reduction shaft 33a configured to connect the reducer 37 to the drum 2 are separated from each other. Here, since the reducer 37 is supported by the rear panel 11 through the stator 31 or the rotating shaft 33, when the rear panel 11 is deformed even slightly, the reduction shaft 33a and the rotating shaft 33 may be distorted or misaligned with each other.

That is to say, the reduction shaft 33a connected to the drum 2 has a less position change than the rotating shaft 33 coupled to the driving unit 3 due to the load of the drum 2. Therefore, when the rear panel 11 is temporarily bent or deformed, the tilting degrees of the rotating shaft 33 and the reduction shaft 33a are different, and thus, the rotating shaft 33 and the reduction shaft 33a are misaligned with each other.

Therefore, in the above conventional laundry treating apparatus, whenever the driving unit 3 is operated, the rotating shaft 33 and the reduction shaft 33a are misaligned with each other, and thus, reliability of the reducer 37 may not be secured and the reducer 37 may be damaged.

Accordingly, the above-described dryer is disclosed in Patent Document, but may not be launched as an actual product.

Further, such a conventional dryer does not suggest a flow path in which air of the drum flows in the base located below the drum, or an explicit implication or structure as to how to treat water condensed in the flow path. Therefore, the conventional dryer does not provide an implication as to how to change the structure of the base when the position of the driving unit 3 is changed.

Another conventional dryer which is on the market is configured such that a driving unit 3 is fixed to the bottom surface of a cabinet 1 (refer to Korean Patent Unexamined Publication No. 10-2019-0121656).

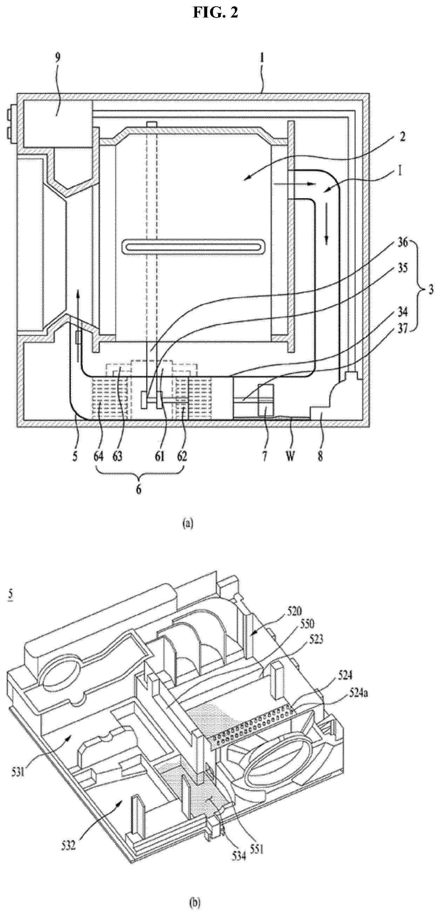

FIGS. 2(a) and 2(b) show the dryer in which the driving unit 3 is fixed to the bottom surface of the cabinet 1 or a base 5.

The dryer includes the cabinet 1 and a drum 2, and may further include a circulation flow path 5 configured to circulate air of the drum 2 to the outside, and a heat pump 6 accommodated in the circulation flow path 5 and configured to condense air and reheat air. Water condensed by the heat pump 6 may be collected in a storage tank 9 using a pump 8.

Even when the driving unit 3 is vibrated or external force is temporarily transmitted to the cabinet 1 through the driving unit 3, the bottom surface of the cabinet 1 may not be deformed or tilted.

Therefore, such a conventional dryer is provided such that the driving unit 3 is fixed to the bottom surface of the cabinet 1 or the base 5 fixed to the bottom surface of the cabinet 1 below the drum 2. In the dryer, the driving unit 3 is not disposed parallel to the axis of rotation of the drum 2, and thus, the drum 2 is rotated using an additional element.

Specifically, the driving unit 3 may include a motor 34 fixed to the bottom surface of the cabinet 1, a rotating shaft 37 rotated by the motor 34, a pulley 35 rotated by the rotating shaft 37, and a belt 36 provided to connect the outer circumferential surface of the drum 2 to the outer circumferential surface of the pulley 35.

Thereby, when the motor 34 rotates the rotating shaft 37, the pulley 35 may rotate the belt 36, and the belt 36 may rotate the drum 2. Here, since the diameter of the pulley 35 is much smaller than the diameter of the drum 2, the dryer may omit a reducer.

However, in the above dryer, since the diameter of the pulley 35 is much smaller than the diameter of the drum 2, when the motor 34 is rapidly rotated, the belt 36 slips on the drum 2 or the pulley 35. Therefore, the dryer has problems that the rotational acceleration of the motor 34 should be limited to a designated level or less, and the motor 34 should be slowly accelerated or decelerated so as to prevent slip of the belt 36 when the drum 2 is rotated.

Therefore, the conventional dryer may not rapidly change the rotating direction of the drum 2, thus being incapable of controlling rotation of the drum 2 or changing the rotating direction of the drum 2. Thereby, the dryer cannot control the rotating direction and the rotational velocity of the drum 2 during the drying cycle, and thus cannot maximally increase drying efficiency.

Referring to FIG. 2(b), the base 5 of the conventional dryer includes a motor installation part 531 configured such that the motor 34 is installed thereon, a circulation flow path part 520 configured such that air of the drum 2 flows therein, a compressor installation part 532 provided outside the circulation flow path part 520 such that a compressor is installed on the compressor installation part 532, and a water collection part 534 configured to collect water condensed in the circulation flow path part 520. An evaporator fixing part 524 configured to fix an evaporator and a condenser fixing part 523 configured to fix a condenser may be provided in the circulation flow path part 520. Water condensed in the evaporator fixing part 524 may be collected in the water collection part 534 through a communication hole 551.

Further, the compressor installation part 532 may be installed as close to the circulation flow path part 520 as possible so as to reduce heat loss of a refrigerant. Further, the water collection part 534 needs to be installed as close to the circulation flow path part 520 as possible so as to accommodate the condensed water.

Here, the motor 34 is provided to have a considerable volume so as to generate power to rotate the drum 2, and change in the installed position of the motor 34 is limited in order to rotate the drum 2 through the belt 36. Therefore, the motor installation part 531 needs to occupy a specific area or more of the base 5 at one side of the circulation flow path part 520, and disposition of the motor installation part 531 needs to be determined before the compressor installation part 532 and the water collection part 534.

Therefore, the compressor installation part 532 and the water collection part 534 need to be installed so as to avoid the motor installation part 531, and need to be installed in a region of the base 5 other than the circulation flow path part 520 and the motor installation part 531.

The compressor 61 should also occupy a considerable volume, and thus, the compressor installation part 532 and the water collection part 534 may not be disposed in the extending direction (for example, in the forward and rearward directions) of the circulation flow path part 520.

Here, the water collection part 534 should be disposed immediately adjacent to the circulation flow path part 520, and thus, the water collection part 534 needs to be disposed between the compressor installation part 532 and the circulation flow path part 520.

Further, among conventional dryers, there is a dryer provided with a heat pump configured to circulate air in a drum so as to dry laundry accommodated in the drum (Korean Patent Unexamined Publication No. 10-2019-0128468). A motor configured to transmit rotational power to a drum through a belt is installed on a base of a laundry treating apparatus provided with a heat pump. There is no space on the base for installation of a controller, which controls operation of the laundry treating apparatus, due to a space occupied by the motor, and thus, the controller is installed on the upper portion of a cabinet so as to be spaced apart from the base.

Since the base is provided on the upper portion of the cabinet, connection wires configured to connect the controller to other elements may interfere with a drum, and may thus be short-circuited. Further, since the controller is disposed on the upper portion of the cabinet so as to be spaced apart from the base, the lengths of connection wires configured to connect the controller to elements installed on the base are increased. As the lengths of the connection wires are increased, noise is generated and thus reliability of the controller is reduced.

EP 2 650 425 A1 and KR 2019 0102821 A are related prior art documents.

### SUMMARY

The present invention has been made in view of the above problems, and an object of the present invention is to provide a laundry treating apparatus which includes a driving unit configured to reduce the rotational velocity of a rotor and then to transmit the reduced rotational velocity to a drum, and allowing the center of rotation of the rotor and the center of rotation of the drum to form a concentric axis.

Another object of the present invention is to provide a laundry treating apparatus which may effectively use the remainder of a space on a base other than a circulation flow path part configured to circulate air in a drum.

Another object of the present invention is to provide a laundry treating apparatus which may install a control box configured to control operation of the laundry treating apparatus on a base.

Another object of the present invention is to provide a laundry treating apparatus which includes a control box installation part allowing a control box configured to control the laundry treating apparatus to be installed on a base adjacent to a side panel of a cabinet.

Another object of the present invention is to provide a laundry treating apparatus which may shorted the lengths of connection wires configured to connect a control box configured to control operation of the laundry treating apparatus to other elements so as to reduce noise and to increase reliability.

Another object of the present invention is to provide a laundry treating apparatus which may improve a control box installed on a base so as to increase a control box cooling effect.

The present invention is not limited to the above-described objects, and it is to be understood that other objects which are not described herein will be apparent to those skilled in the art from the following description. The invention is specified by the independent claim 1. Preferred embodiments are defined in the dependent claims.

In order to accomplish the above and other objects, a laundry treating apparatus according to one aspect of the present invention includes a cabinet, a drum rotatably provided in the cabinet so as to accommodate laundry, a base disposed below the drum so as to provide a space configured such that air in the drum is circulated therein or moisture in the air is condensed therein, a motor configured to provide power to rotate the drum, a heat exchange unit including a first heat exchanger placed on the base so as to condense the moisture in the air, a second heat exchanger placed on the base so as to heat the air, and a compressor configured to supply a refrigerant for exchange of heat with the air to the first heat exchanger or the second heat exchanger, and a control box including a blower fan configured to draw in the air in the drum and to resupply the air to the drum, and a PCB configured to control operation of the motor, the compressor or the blower fan and to supply power, wherein the motor is disposed behind the drum so as to be separated from and spaced apart from the base, and the base includes a circulation flow path part formed on one side of the base so as to communicate with the drum, configured to circulate the air in the drum, and provided with the first heat exchanger and the second heat exchanger disposed therein, and a control box installation part provided on a remaining side of the base in a lateral direction of a flow path, and configured such that the control box is mounted in the control box installation part.

The laundry treating apparatus further includes a water collection part provided outside the circulation flow path part and configured to communicate with the circulation flow path part so as to collect water condensed in the circulation flow path part.

The water collection part is located between the control box installation part and the circulation flow path part.

The control box installation part may be disposed to overlap the water collection part in leftward and rightward directions.

The base may further include a collection guide part recessed from a portion of a bottom surface of the circulation flow path part facing the first heat exchanger so as to guide the condensed water to the water collection part, and the control box installation part may be located to overlap the collection guide part in leftward and rightward directions.

The collection guide part may include a water collection communication hole formed through one surface of the circulation flow path part facing the water collection part so as to make the collection guide part and the water collection part communicate with each other, and the control box installation part may be located to overlap the water collection communication hole in the leftward and rightward directions.

The base may further include a compressor installation part provided to be spaced apart from the circulation flow path part such that the compressor is placed on the compressor installation part, and a portion of the control box installation part may be located to overlap the compressor installation part in leftward and rightward directions.

The control box installation part may be located in front of the compressor installation part.

The control box installation part may be located to overlap the water collection part in the leftward and rightward directions.

The cabinet may include side panels configured to form side surfaces thereof, and the control box installation part may be located between the circulation flow path part and any one of the side panels.

The control box installation part may be located between the water collection part and the side panel.

The control box may be installed parallel to the side panel in the control box installation part.

The control box may be mounted in the control box installation part so as to come into contact with the side panel.

The laundry treating apparatus may further include a rear plate installed on the base and located between the drum and the motor so as to guide air discharged from the circulation flow path part to the drum.

The laundry treating apparatus may further include a reducer fixed to a rear surface of the rear plate, located between the drum and the motor, and configured to reduce power supplied by the motor so as to rotate the drum.

The motor may be fixed to the reducer so as to be spaced apart from the rear plate.

The water collection part may be located behind the compressor installation part.

The compressor installation part may be located to overlap the first heat exchanger in the leftward and rightward directions, and the water collection part may be located to overlap the second heat exchanger in the leftward and rightward directions.

The control box may further include a stationary plate coupled to the base and configured such that the PCB is fixed to one surface of the stationary plate, a cover plate coupled to the stationary plate and formed in a box shape so as to cover the PCB, and a cooling fan provided on one side of the cover plate and configured to generate flow of air in a space formed by the cover plate.

A plurality of support protrusions may be formed on a lower end of the stationary plate, and a plurality of support protrusion insert recesses may be formed in the base such that the support protrusions are fixedly inserted into the support protrusion insert recesses.

The cover plate may include a cover panel spaced apart from the stationary plate, upper panels configured to extend from an upper portion of the cover panel to an upper portion of the stationary plate, and side panels configured to extend from both side surfaces of the cover panel to both side surfaces of the stationary plate, and the cooling fan may be provided on one of the side panels.

The upper panels may be formed to be inclined downwards towards the cover panel.

Rear surface discharge holes configured to discharge air moved by the cooling fan therethrough may be formed in a portion of the cover panel adjacent to the upper panels.

The upper panels may include at least two upper panels having different heights, and rear surface discharge holes configured to discharge air moved by the cooling fan therethrough may be formed in a portion of the cover panel adjacent to one upper panel having a relatively high height out of the at least two upper panels,.

The PCB may include at least two power supply units configured to supply power to respective elements, and air moved by the cooling fan may sequentially pass through the at least two power supply units.

Each of the at least two power supply units may include radiation fins configured to extend in a direction parallel to a flow direction of the air.

A plurality of radiation grooves configured to correspond to disposition of the at least two power supply units may be formed on the cover panel.

The cover panel, the upper panels and the side panels may be integrally formed by press working using a metal plate having a designated thickness.

### BRIEF DESCRIPTION OF THE DRAWINGS

The accompanying drawings, which are included to provide a further understanding of the invention and are incorporated in and constitute a part of this application, illustrate embodiment(s) of the disclosure and together with the description serve to explain the principle of the invention. In the drawings:
FIG. 1 is a cross-sectional view illustrating the structure of one exemplary conventional dryer;
FIGS. 2(a) and 2(b) are views illustrating the structure of another exemplary conventional dryer;
FIG. 3 is a perspective view illustrating a laundry treating apparatus according to one embodiment of the present disclosure;
FIG. 4 is a cross-sectional view illustrating the inside of the laundry treating apparatus according to one embodiment of the present disclosure;
FIG. 5 is an exploded perspective view of the laundry treating apparatus according to one embodiment of the present disclosure;
FIGS. 6(a) and 6(b) are perspective views illustrating a reducer of the laundry treating apparatus according to one embodiment of the present disclosure;
FIG. 7 is an enlarged cross-sectional view of a portion of FIG. 4 shown in a dotted line;
FIG. 8 is a front view illustrating a coupling structure between a rear plate and a base of the laundry treating apparatus according to one embodiment of the present disclosure;
FIG. 9 is an exploded perspective view illustrating coupling of the reducer and a motor to the rear surface of the rear plate of the laundry treating apparatus according to one embodiment of the present disclosure;
FIG. 10 is a view illustrating a coupling structure between the reducer and a stator of the laundry treating apparatus according to one embodiment of the present disclosure;
FIG. 11 is a plan view illustrating a coupling structure between the reducer and the motor of the laundry treating apparatus according to one embodiment of the present disclosure;
FIG. 12 is a perspective view illustrating a base of the laundry treating apparatus according to one embodiment of the present disclosure;
FIG. 13 is an exploded perspective view illustrating a water collection cover and a duct cover coupled to the base of the laundry treating apparatus according to one embodiment of the present disclosure;
FIGS. 14(a) and 14(b) are top views of the base of the laundry treating apparatus according to one embodiment of the present disclosure;
FIG. 15 is a cross-sectional view taken along line A-A of FIG. 14(a);
FIG. 16 is a perspective view illustrating the base of the laundry treating apparatus according to one embodiment of the present disclosure;
FIG. 17 is a top view illustrating the base of the laundry treating apparatus according to one embodiment of the present disclosure;
FIG. 18 is a cross-sectional view taken along line D-D of FIG. 17;
FIG. 19 is a cross-sectional view taken along line C-C of FIG. 17;
FIG. 20 is a cross-sectional view taken along line B-B of FIG. 14(a);
FIG. 21 is a perspective top view of a water cover according to one embodiment of the present disclosure;
FIG. 22 is a perspective bottom view of the water cover according to one embodiment of the present disclosure;
FIGS. 23(a) and 23(b) are top views of a base according to another embodiment of the present disclosure;
FIG. 24 is a cross-sectional view taken along line F-F of FIG. 23(a), as seen from the right;
FIG. 25 is a cross-sectional view taken along line E-E of FIG. 23(a), as seen from the front;
FIG. 26 is a perspective view illustrating the base and a control box according to one embodiment of the present disclosure;
FIG. 27 is a side view illustrating the base and the control box according to one embodiment of the present disclosure;
FIG. 28 is a rear view of the control box according to one embodiment of the present disclosure; and
FIG. 29 is a side view of a portion of the control box according to one embodiment of the present disclosure.

### DETAILED DESCRIPTION

Reference will now be made in detail to exemplary embodiments of the present invention, examples of which are illustrated in the accompanying drawings, to make the description of the present invention thorough and to fully convey the scope of the present disclosure to those skilled in the art.

However, the present invention is not limited to aspects disclosed herein and may be implemented in various different forms. In the drawings, in order to clearly describe the present invention, descriptions of elements which are not related to the present invention are omitted, and the same or similar elements are denoted by the same reference numerals even when they are depicted in different drawings.

In the following description of the embodiments of the present invention, redundant description of the same elements will be omitted.

When an element or layer is referred to as being "engaged with", "connected to", or "coupled to" another element or layer, it may be directly engaged with, connected to or coupled to the other element or layer, or intervening elements or layers may be present. In contrast, when an element is referred to as being "directly engaged with" "directly connected to", or "directly coupled to" another element or layer, there may be no intervening elements or layers present.

The terminology used herein is for the purpose of describing particular embodiments only and is not intended to be limiting.

As used herein, singular forms may be intended to include plural forms as well, unless the context clearly indicates otherwise.

Further, in the following description of the embodiments of the present invention, the terms "comprising," "including," and/or "having" are inclusive and therefore specify the presence of stated features, integers, steps, operations, elements, components, and/or combinations thereof, but do not preclude the presence or addition of one or more other features, integers, steps, operations, elements, components, and/or combinations thereof.

Further, as used herein, the term "and/or" includes any and all combinations of one or more of the associated listed items. In the following description of the embodiments of the present disclosure, "A or B" may include "A", "B" or "both A and B".

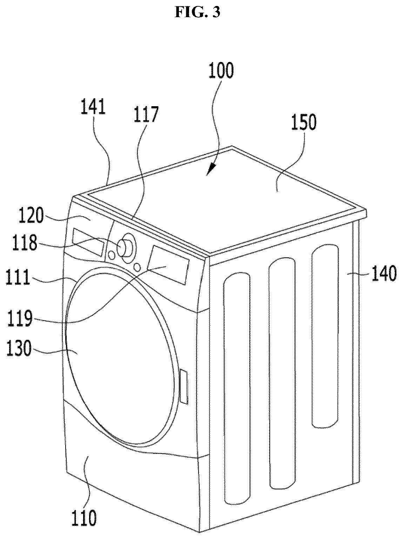

FIG. 3 illustrates the external appearance of a laundry treating apparatus according to one embodiment of the present disclosure.

The laundry treating apparatus according to one embodiment of the present disclosure includes a cabinet 100 configured to form the external appearance of the laundry treating apparatus.

The cabinet 100 may include a front panel 110 configured to form the front surface of the laundry treating apparatus, an upper panel 150 configured to form the upper surface of the laundry treating apparatus, and side panels 140 configured to form the side surfaces of the laundry treating apparatus. The side panels 140 may include a left side panel 141 configured to form the left side surface of the laundry treating apparatus. The front panel 110 may be provided with an opening 111 provided to communicate with the inside of the cabinet 100, and a door 130 rotatably coupled to the cabinet 100 so as to open and close the door 130.

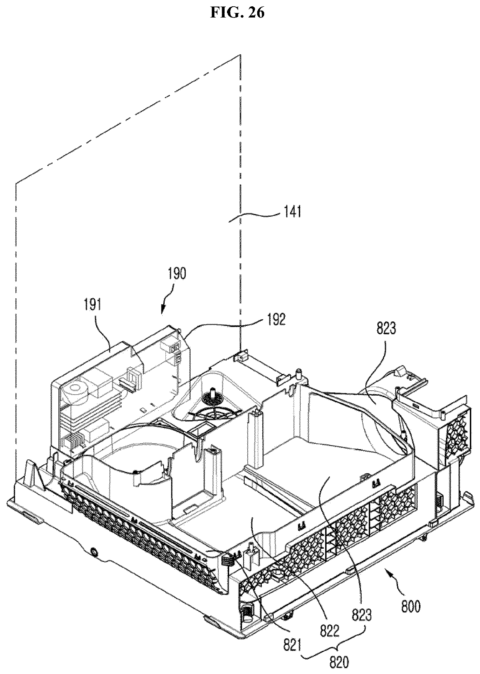

A control panel 117 may be installed on the front panel 110. The control panel 117 may include an input unit 118 configured to receive control commands from a user, and a display 119 configured to output information, such as control commands selectable by the user. The control commands may include control commands for selecting a drying course configured to perform a series of drying processes or selecting drying options. A control box 190 (with reference to FIG. 26) configured to control the inner elements of the laundry treating apparatus so as to perform a control command input through the input unit 118 may be installed in the cabinet 100. The control box 190 may be connected to the inner elements of the laundry treating apparatus, and may thus control the corresponding elements so as to perform the input control command.

The input unit 118 may include a power supply request unit configured to request supply of power of the laundry treating apparatus, a course input unit configured to allow a user to select a desired one out of a plurality of courses, and an execution request unit configured to request starting of the course selected by the user.

The display 119 may include at least one of a display panel configured to output text and graphics or a speaker configured to output a voice signal and sound.

Further, the laundry treating apparatus according to the present disclosure may include a water storage tank 120 configured to separately store moisture generated during a process of drying the laundry. The water storage tank 120 may include a handle provided on one side of the front panel 110 so as to withdraw the water storage tank 120 to the outside therethrough. The water storage tank 120 may be provided to collect condensed water generated during the drying cycle. Therefore, the user may withdraw the water storage tank 120 from the cabinet 100, may remove the condensed water, and may then insert the water storage tank 120 again into the cabinet 100. Thereby, the laundry treating apparatus according to the present disclosure may be installed even in a place in which there is no drain.

The water storage tank 120 may be disposed above the door 130. Therefore, when the user withdraws the water storage tank 120 from the front panel 110, the user may bend his/her back relatively little and thus user convenience may be increased.

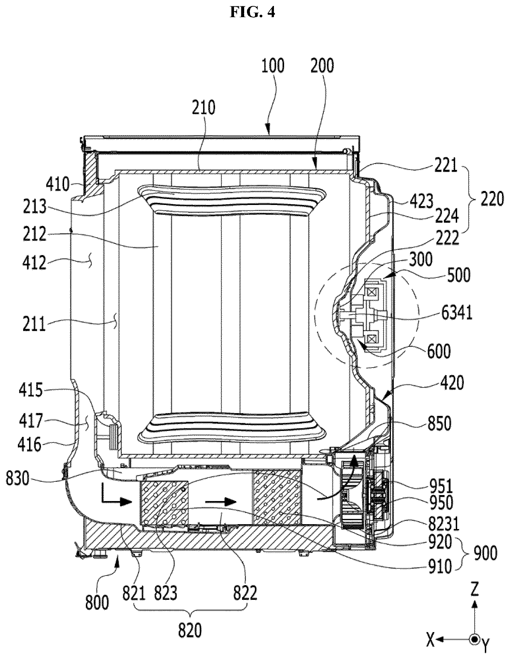

FIG. 4 schematically illustrates the inside of the laundry treating apparatus according to the present disclosure. The laundry treating apparatus according to the present disclosure includes a drum 200 provided in the cabinet 100 so as to accommodate laundry, a driving unit configured to rotate the drum 200, a heat exchange unit 900 provided to supply hot air to the drum 200, and a base 800 provided with a circulation flow path part 820 formed therein. The circulation flow path part 820 is provided to communicate with the drum 200. Air discharged from the drum 200 may be supplied to the circulation flow path part 820. Further, air discharged from the circulation flow path part 820 may be supplied again to the drum 200.

The driving unit includes a motor 500 configured to provide power to rotate the drum 200. The driving unit may be directly connected to the drum 200 so as to rotate the drum 200. For example, the driving unit may be provided in a direct drive unit (DD) type. Therefore, the driving unit may directly rotate the drum 200 while omitting components, such as a belt, a pulley, etc., thus being capable of controlling the direction of rotation of the drum 200 or the rotational velocity of the drum 200.

The motor 500 may be rotated at a high RPM. For example, the motor 500 may be rotated at a much higher RPM than the RPM at which the drum 200 may be rotated in the state in which laundry is adhered to the inner wall of the drum 200.

However, when the drum 200 is continuously rotated in the state in which the laundry is adhered to the inner wall of the drum 200, portions of the laundry adhered to the inner wall of the drum 200 are not exposed to hot air, and thus, drying efficiency may be reduced.

When a rotor 520 is rotated at a low RPM in order to tumble or agitate the laundry in the drum 200 without being adhered to the inner wall of the drum 200, output or torque which may be generated by the driving unit is not properly used.

Therefore, the driving unit of the laundry treating apparatus according to the present disclosure may further include a reducer 600 configured to increase torque while reducing the RPM so as to utilize the maximum output of the motor 500.

Further, the driving unit may include a drum rotating shaft 6341 connected to the drum 200 so as to rotate the drum 200.

The drum 200 is provided in a cylindrical shape so as to accommodate laundry. Further, in contrast to a drum used in the washing cycle, in case of the drum 200 used only in the drying cycle, it is not necessary to put water into the drum 200 and to discharge water in a condensed liquid state from the drum 200 to the outside of the drum 200. Therefore, through holes formed through the circumferential surface of the drum 200 may be omitted. That is, the drum 200 used only in the drying cycle may be formed in a different structure from the drum used also in the washing cycle.

The drum 200 may be formed in an integrated cylindrical shape, and may be configured such that a drum body 210 including a circumferential surface and a drum rear surface 220 forming the rear surface of the drum 200 are coupled to each other.

An inlet 211 through which laundry enters or exits the drum 200 may be provided in the front surface of the drum body 210. The driving unit configured to rotate the drum 200 may be connected to the drum rear surface 220. The drum body 210 and the drum rear surface 220 may be coupled to each other by fastening members, such as bolts, but the present disclosure is not limited thereto and the drum body 210 and the drum rear surface 220 may be coupled to each other using various methods as long as the drum body 210 and the drum rear surface 220 may be coupled to each other so as to be rotatable together therewith.

Lifts 213 configured to move laundry in the drum body 210 upwards so as to mingle the laundry depending on rotation of the drum 200 may be provided on the drum body 210. When the drum 200 is rotated, laundry accommodated in the drum 200 may be repeatedly lifted and dropped, and may thus evenly contact hot air. Therefore, drying efficiency may be increased, and a drying time may be shortened.

Reinforcing beads 212 may be formed on the circumferential surface of the drum body 210. The reinforcing beads 212 may be provided to be recessed from or protrude from the inner or outer circumferential surface of the drum 200. The reinforcing beads 212 may be provided in plural, and may be spaced apart from each other. The reinforcing beads 212 may be provided in a designated pattern on the inner or outer circumferential surface of the drum 200.

The reinforcing beads 212 may increase stiffness of the drum body 210. Therefore, even when a large amount of laundry is accommodated in the drum body 210 or sudden rotational power is transmitted to the drum body 210 through the driving unit, torsion of the drum body 210 may be prevented. Further, the reinforcing beads 212 may increase a distance between the inner circumferential surface of the drum body 210 and the laundry compared to the case in which the circumferential surface of the drum body 210 is flat, thereby allowing hot air supplied to the drum 200 to more effectively flow to a gap between the laundry and the drum 200. The reinforcing beads 212 may increase durability of the drum 200 and increase drying efficiency of the laundry treating apparatus.

In general, in a conventional DDT-type washer, a driving unit may be fixedly coupled to a tub configured to receive a drum, and the drum may be coupled to the driving unit so as to be supported by the tub. However, the laundry treating apparatus according to the present disclosure is provided so as to concentratedly perform the drying cycle, and thus omits a tub fixed to the cabinet 100 so as to accommodate the drum 200.

Therefore, the laundry treating apparatus according to the present disclosure may further include a support unit 400 provided to support or fix the drum 200 or the driving unit to the inside of the cabinet 100.

The support unit 400 may include a front plate 410 disposed in front of the drum 200, and a rear plate 420 disposed behind the drum 200. The front plate 410 and the rear plate 420 are provided in a plate shape, and may be disposed so as to face the front and rear ends of the drum 200. The distance between the front plate 410 and the rear plate 420 may be set to be equal to the length of the drum 200, or to be greater than the length of the drum 200. The front plate 410 and the rear plate 420 may be fixedly supported by the bottom surface of the cabinet 100 or the base 800.

The front plate 410 may be disposed between the front panel 110 configured to form the front surface of the cabinet 100 and the drum 200. Further, an inlet communication hole 412 configured to communicate with the inlet 211 may be provided in the front plate 410. Since the inlet communication hole 412 is provided in the front plate 410, the front surface of the drum 200 may be supported and laundry may be put into or withdrawn from the drum 200.

The front plate 410 may include a duct connector 416 provided under the inlet communication hole 412. The duct connector 416 may form the lower portion of the front plate 410.

The front plate 410 may include a duct communication hole 417 formed through the duct connector 416. The duct communication hole 417 may be provided in a hollow shape, and may guide air discharged from the inlet 211 of the drum 200 to a region under the drum 200. Further, the duct communication hole 417 may guide air discharged from the drum 200 to the circulation flow path part 820 located under the drum 200.

A filter (not shown) may be installed in the duct communication hole 417 so as to filter out lint or foreign substances having a large particle size generated from laundry. The filter may filter air discharged from the drum 200, and may thus prevent accumulation of foreign substances in the laundry treating apparatus and disturbance of air circulation due to the accumulated foreign substances.

Since the inlet 211 is disposed at the front part of the laundry treating apparatus, the inlet may be installed on the rear plate 420 rather than the front plate 410. The driving unit may be mounted on the rear plate 420 so as to be supported thereby. Therefore, the driving unit may rotate the drum 200 in the state in which the position of the driving unit is stably fixed by the rear plate 420.

At least one of the front plate 410 or the rear plate 420 may be rotatably support the drum 200. At least one of the front plate 410 or the rear plate 420 may rotatably accommodate the front end or the rear end of the drum 200.

For example, the front part of the drum 200 may be rotatably supported by the front plate 410, and the rear part of the drum 200 may be spaced apart from the rear plate 420 so as to be connected to the motor 500 mounted on the rear plate 420 and may thus be indirectly supported by the rear plate 420. Therefore, a contact or friction area between the drum 200 and the support unit 400 may be minimized, and generation of unnecessary noise and vibration may be prevented.

Of course, the drum 200 may be provided to be rotatably supported by both the front plate 410 and the rear plate 420.

One or more support wheels 415 configured to support the front part of the drum 200 may be provided at the lower part of the front plate 410. The support wheels 415 may be rotatably provided on the rear surface of the front plate 410. The support wheels 415 may be rotated in the state in which the support wheels 415 come into contact with the lower surface of the drum 200.

When the drum 200 is rotated by the driving unit, the drum 200 may be supported by the drum rotating shaft 6341 connected to the rear surface of the drum 200. When laundry is accommodated in the drum 200, load applied to the drum rotating shaft 6341 may be increased due to the laundry. Therefore, the drum rotating shaft 6341 may be bent by the load.

When the support wheels 415 support the lower surface of the front part of the drum 20, the support wheels 415 may alleviate the load applied to the drum rotating shaft 6341. Therefore, the support wheels 415 may prevent the drum rotating shaft 6341 from being bent, and may prevent generation of noise due to vibration.

The support wheels 415 may be provided at positions symmetrical to each other with respect to the center of rotation of the drum 200 so as to support the load of the drum 200. The support wheels 415 may be provided at the lower parts of the left and right sides of the drum 200 so as to support the drum 200. However, the present disclosure is not limited thereto, and a larger number of support wheels 415 may be provided depending on the operating environment of the drum 200.

The circulation flow path part 820 provided on the base 800 may form a flow path along which air in the drum 200 is circulated and is then returned to the inside of the drum 200.

The circulation flow path part 820 may include an inflow duct 821 configured such that air discharged from the drum 200 flows thereinto, a discharge duct 823 configured to supply air to the drum 200, and a transfer duct 822 configured to connect the inflow duct 821 to the discharge duct 823.

When air is discharged from the front part of the drum 200, the inflow duct 821 may be located at the front portion of the circulation flow path part 820. Further, the discharge duct 823 may be located at the rear portion of the circulation flow path part 820.

The discharge duct 823 may include an air blowing part 8231 configured to discharge air to the outside of the circulation flow path part 820. The air blowing part 8231 may be provided at the rear part of the discharge duct 823. Air discharged through the air blowing part 8231 may flow towards the drum 200.

A duct cover 830 may be coupled to the upper portion of the circulation flow path part 820 so as to shield a part of the opened upper surface of the circulation flow path part 820. The duct cover 830 may prevent air from leaking to the outside of the circulation flow path part 820. That is to say, the duct cover 830 may form one surface of the flow path in which air is circulated.

Further, the heat exchange unit 900 provided on the base 800 may include a first heat exchanger 910 provided inside the circulation flow path part 820 so as to cool air, and a second heat exchanger 920 provided inside the circulation flow path part 820 so as to heat the air cooled by the first heat exchanger 910.

The first heat exchanger 910 may dehumidify air discharged from the drum 20, and the second heat exchanger 920 may heat the dehumidified air. The heated air may be supplied again to the drum 200 so as to dry laundry accommodated in the drum 200.

The first heat exchanger 910 and the second heat exchanger 920 may be provided as heat exchangers in which a refrigerant flows. When the first heat exchanger 910 and the second heat exchanger 920 are provided as heat exchangers in which the refrigerant flows, the first heat exchanger 910 may be provided as an evaporator, and the second heat exchanger 920 may be provided as a condenser. The first heat exchanger 910 and the second heat exchanger 920 may be provided such that the refrigerant flowing along the first heat exchanger 910 and the second heat exchanger 920 exchanges heat with air discharged from the drum 200.

The heat exchange unit 900 may include a circulation flow path fan 950 installed in the circulation flow path part 820 so as to generate air flow in the circulation flow path part 820. Further, the heat exchange unit 900 may further include a circulation flow path fan motor 951 configured to rotate the circulation flow path fan 950. The circulation flow path fan 950 may be rotated by rotational power supplied from the circulation flow path fan motor 951. When the circulation flow path fan 950 is operated, air dehumidified by the first heat exchanger 910 and heated by the second heat exchanger 920 may flow towards the rear part of the drum 200.

The circulation flow path fan 950 may be installed in any one of the inflow duct 821, the transfer duct 822 and the discharge duct 823. The circulation flow path fan 950 is provided to be rotated and, thus, when the circulation flow path fan 950 is rotated, noise may be generated. Therefore, the circulation flow path fan 950 may be disposed at the rear portion of the circulation flow path part 820.

The circulation flow path fan 950 may be installed at the air blowing part 8231. Further, the circulation flow path fan motor 951 may be located behind the air blowing part 8231. When the circulation flow path fan 950 is rotated by the circulation flow path fan motor 951, air inside the circulation flow path part 820 may be discharged to the outside of the circulation flow path part 820 through the air blowing part 8231.

The inlet 211 of the drum 200 may be disposed at a relatively high position in order to allow a user to easily take laundry out of the drum 200, and thus, the circulation flow path part 820 and the heat exchange unit 900 may be disposed under the drum 200.

The rear plate 420 configured to guide air discharged from the circulation flow path part 820 to the drum 200 may be provided behind the drum 200. The rear plate 420 may be spaced apart from the drum rear surface 220. The circulation flow path part 820 may receive air from the inside of the drum 200 through the front plate 410, and may supply air to the drum 200 through the rear plate 420. Air discharged from the circulation flow path part 820 may pass through the rear plate 420 and may then be guided to the drum 200.

The base 800 may further include a connector 850 configured to guide air discharged from the circulation flow path part 820 to the rear plate 420. The connector 850 may uniformly disperse the air discharged from the circulation flow path part 820 throughout the rear plate 420.

The connector 850 may be installed at the air blowing part 8231. That is, the connector 850 may guide air discharged from the circulation flow path part 820 to the rear plate 420. Hot air supplied to the rear plate 420 may flow into the drum 200 through the drum rear surface 220.

The drum 200 of the laundry treating apparatus according to the present disclosure is not coupled to a belt or the like so as to be indirectly rotated, and may be directly connected to the driving unit located behind the drum 200 so as to be rotated. Therefore, in contrast to the drum of the conventional dryer provided as a cylindrical shape having open front and rear ends, the rear end of the drum 200 of the laundry treating apparatus according to the present disclosure may be closed so as to be directly connected to the driving unit.

As described above, the drum 200 may include the drum body 210 provided in a cylindrical shape so as to accommodate laundry and the drum rear surface 220 coupled to the rear end of the drum body 210 so as to form the rear surface of the drum 200.

The drum rear surface 220 may provide a coupling surface provided to close the rear part of the drum body 210 and directly coupled to the driving unit. That is, the drum rear surface 220 may be connected to the driving unit, and may rotate the entirety of the drum 200 by rotational power supplied from the driving unit. Accordingly, the inlet 211 configured to put laundry into the drum 200 therethrough may be formed through the front part of the drum body 210, and the rear part of the drum body 210 may be closed by the drum rear surface 220.

A bushing 300 configured to connect the driving unit to the drum rear surface 220 may be provided on the drum rear surface 220. The bushing 300 provided on the drum rear surface 220 may form the center of rotation of the drum 200. The bushing 300 may be provided integrally with the drum rear surface 220, or may be formed of a material having greater stiffness and durability than the drum rear surface 220 so as to be firmly coupled to the rotating shaft configured to transmit power. The bushing 300 may be seated on the drum rear surface 220 and be coupled to the drum rear surface 220 so as to form a concentric axis with the center of rotation of the drum rear surface 220.

The drum rear surface 220 may include a flange part 221 coupled to the outer circumferential surface of the drum body 210, and a mounting plate 222 provided inside the flange part 221 so as to be coupled to the driving unit. The bushing 300 may be placed on the mounting plate 222. The rotating shaft configured to rotate the drum 200 is coupled to the mounting plate 222 through the bushing 300, thus being capable of being more firmly coupled to the mounting plate 222. Further, the bushing 300 may prevent deformation of the drum rear surface 220.

The drum rear surface 220 may include intake holes 224 formed therethrough between the flange part 221 and the mounting plate 222 so that regions in front of and behind the drum rear surface 220 communicate with each other through the intake holes 224. Hot air supplied through the circulation flow path part 820 may flow into the drum body 210 through the intake holes 224. The intake holes 224 may be provided as a plurality of holes formed through the drum rear surface 220 or may be provided as a mesh-type net.

The driving unit configured to rotate the drum 200 may be located behind the rear plate 420. The driving unit may include the motor 500 configured to generate rotational power and the reducer 600 configured to reduce the rotational power of the motor 500 and to transmit the reduced power to the drum 200.

The motor 500 may be disposed behind the rear plate 420. Further, the motor 500 may be connected to the rear surface of the rear plate 420 through the reducer 600.

The reducer 600 may be fixed to the rear surface of the rear plate 420, and the motor 500 may be coupled to the rear surface of the reducer 600. That is, the rear plate 420 may provide a support plane configured to support the reducer 600 and the motor 500. However, the present disclosure is not limited thereto, and the motor 500 may be coupled to the rear plate 420.

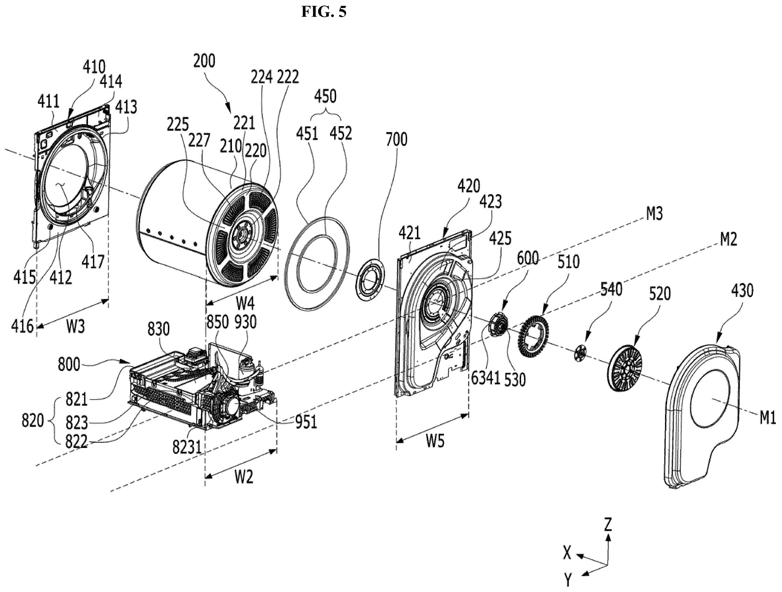

FIG. 5 is an exploded perspective view illustrating the inner elements of the laundry treating apparatus.

The laundry treating apparatus according to one embodiment of the present disclosure may include the drum 200 configured to accommodate laundry, the front plate 410 configured to support the front surface of the drum 200, the rear plate 420 located behind the drum 200, the base 800 provided under the drum 200 and configured to provide a space in which air in the drum 200 is circulated or moisture in the air is condensed, the motor 500 located behind the drum 200 so as to provide rotational power to the drum 200, the reducer 600 configured to reduce the rotational power of the motor 500 and to transmit the reduced rotational power to the drum 200, and a rear cover 430 coupled to the rear plate 420 so as to prevent the motor 500 from being exposed to the outside.

The base 800 may include the circulation flow path part 820 configured to communicate with the drum 200 so as to receive air supplied from the drum 200 or to discharge air to the drum 200.

The front plate 410 may include a front panel 411 configured to form the front plate 410, and the inlet communication hole 412 formed through the front panel 411 so as to communicate with the drum 200. The front plate 410 may further include a front gasket 413 provided on the rear surface of the front panel 411 and configured to surround the radially outer surface of the inlet communication hole 412 so as to accommodate a part of the drum body 210.

The front gasket 413 may rotatably support the drum body 210, and may be provided to come into contact with the outer circumferential surface or the inner circumferential surface of the inlet 211. The front gasket 413 may prevent hot air in the drum 200 from leaking through a gap between the drum body 210 and the front plate 410. The front gasket 413 may be formed of plastic resins or an elastomer, and a separate sealing member may be additionally coupled to the front gasket 413 so as to prevent laundry or hot air from being released from the drum body 210 to the front plate 410.

The front plate 410 may include the duct communication hole 417 formed through the inner circumferential surface of the inlet communication hole 412. Further, the front plate 410 may include the duct connector 416 configured to extend from the lower part of the duct communication hole 417 so as to form a flow path through which the drum body 210 and the circulation flow path part 820 communicate with each other.

The duct connector 416 may communicate with the drum body 210 through the duct communication hole 417, and air discharged from the drum body 210 may flow into the duct connector 416 through the duct communication hole 417 and be guided to the circulation flow path part 820. The air discharged from the drum body 210 may be guided to the circulation flow path part 820 by the duct connector 416, and thus, leakage of air in the drum 200 to the outside may be prevented.

A filter member (not shown) configured to filter out lint or foreign substances from air discharged from the drum 200 so as to prevent the foreign substances from entering the circulation flow path part 820 may be installed in the duct connector 416.

The support wheels 415 rotatably installed on the rear surface of the front panel 411 so as to support the lower part of the drum 200 may be installed on the front plate 410. The support wheels 415 may support the front part of the drum 20, thereby being capable of preventing the rotating shaft connected to the drum 200 from being bent.

A water storage tank support hole 414 provided to pass through the front panel 411 such that the water storage tank 120 (with reference to FIG. 3) configured to store condensed water produced during the drying cycle may be withdrawn therefrom or be supported thereby may be provided in the front plate 410. When the water storage tank support hole 414 is provided at the upper part of the front plate 410, the user does not need to bend his/her back so as to withdraw the water storage tank 120 and thus user convenience may be increased.

The drum 200 configured to accommodate laundry may include the drum body 210 provided with the inlet 211 formed through the front surface thereof so that laundry enters or exits the drum 200 therethrough, and the drum rear surface 220 configured to form the rear surface of the drum 200.

The drum rear surface 220 may include the flange part 221 coupled to the drum body 210, the intake holes 224 formed through the drum rear surface 20 inside the flange part 221, and the mounting plate 222 provided at the center of rotation of the drum rear surface 220 so as to be coupled to the rotating shaft. Air may flow into the rear region of the inside of the drum 200 through the intake holes 224.

The drum rear surface 220 may further include reinforcing ribs 225 configured to extend from the flange part 221 to the center of rotation of the drum rear surface 220. The reinforcing ribs 225 may extend while avoiding the intake holes 224. The reinforcing ribs 225 may prevent reduction in stiffness of the drum rear surface 220 due to the intake holes 224. The reinforcing ribs 225 may be provided to radially extend from the outer circumferential surface of the mounting plate 222 towards the inner circumferential surface of the flange part 221.

In addition, the drum rear surface 220 may further include circumferential ribs 227 configured to extend in the circumferential direction of the drum rear surface 220 so as to connect the reinforcing ribs 225 to each other. The intake holes 224 may be disposed among the reinforcing ribs 225, the circumferential ribs 227 and the flange part 221. The reinforcing ribs 225 and the circumferential ribs 227 may prevent deformation of the drum rear surface 220 even when rotational power from the motor 500 is transmitted to the drum rear surface 220.

The inflow duct 821 may be provided to communicate with the duct communication hole 417 of the front plate 410 so as to communicate with the flow path formed in the front plate 410. The transfer duct 822 may be provided to extend from the end of the inflow duct 821 towards the rear part of the drum 200, and the discharge duct 823 may be provided at the end of the transfer duct 822 so as to guide air to the drum 200.

The air blowing part 8231 may be located at the downstream part of the discharge duct 823, and may provide a space in which the circulation flow path fan 950 is installed. When the circulation flow path fan 950 is operated, air flowing into the inflow duct 821 may be discharged upwards from the air blowing part 8231.

The heat exchange unit 900 configured to cool and heat air circulated from the drum 200 may be installed on the base 800. The heat exchange unit 900 may include a compressor 930 connected to the first heat exchanger 910 and the second heat exchanger 920 so as to supply a compressed refrigerant. The compressor 930 may be provided so as not to directly exchange heat with circulated heat, and may be located outside the circulation flow path part 820.

Further, the heat exchange unit 900 may include the circulation flow path fan motor 951 supported by the rear part of the air blowing part 8231 so as to rotate the circulation flow path fan 950. The circulation flow path fan motor 951 may be coupled to the rear part of the air blowing part 8231.

The laundry treating apparatus according to one embodiment of the present disclosure may further include the connector 850 coupled to the circulation flow path part 820 so as to guide hot air discharged from the circulation flow path part 820 to the rear part of the drum 200 or the rear plate 420.

The connector 850 is disposed above the discharge duct 823, and may thus guide hot air acquired through the second heat exchanger 920 to a region above the discharge duct 823. Further, the connector 850 may be coupled to an opening provided in the upper part of the air blowing part 8231.

The connector 850 may be provided to form a flow path therein. The connector 850 may be provided to guide the flow of air generated by the circulation flow path fan 950 uniformly to the rear plate 420. That is, the connector 850 may be provided such that the area of the flow path in the connector 850 increases as the distance from the air blowing part 8231 increases.

The rear plate 420 may be coupled to or supported by the base 800, and may be located behind the drum 200. The rear plate 420 may include a rear panel 421 located to face the front plate 410, and a duct 423 provided to be recessed from the rear panel 421 so as to form a flow path in which air is circulated and to guide air discharged from the circulation flow path part 820 to the drum 200.

The rear plate 420 may include a mounting part 425 configured such that the driving unit is coupled thereto or supported thereby. The mounting part 425 may be provided to pass through the rear panel 421, and may be disposed in the inner circumferential surface of the duct 423. The mounting part 425 may be provided to be spaced radially inwards apart from the inner circumferential surface of the duct 423.

Here, the driving unit may indicate an assembly of the reducer 600 and the motor 500, as described above. Otherwise, the driving unit may indicate only the motor 500. That is, an element configured to generate rotational power and to transmit the rotational power to the drum 200 may be referred to as the driving unit.

The driving unit may be mounted in the mounting part 425. The mounting part 425 may support the load of the driving unit. The driving unit may be connected to the drum 200 in the state in which the driving unit is supported by the mounting part 425.

The duct 423 may be provided to accommodate a part of the drum rear surface 220. The duct 423 may form a flow path along which air flows, together with the drum rear surface 220.

The driving unit may be installed in the mounting part 425 so as to prevent interference with the duct 423. That is, the driving unit may be disposed to be spaced radially inwards apart from the inner circumferential surface of the duct 423. The driving unit may be installed in the mounting part 425 such that the rear part of the driving unit is exposed to the outside, thus being capable of being cooled by external air.

The driving unit may include the motor 500 configured to generate power to rotate the drum 200. The motor 500 may include a stator 510 configured to generate a rotating magnetic field, and the rotor 520 rotated by the stator 510.

The rotor 520 may be provided in an outer rotor type configured to accommodate the stator 510 and to be rotated along the circumference of the stator 510. Here, a drive shaft 530 may be coupled to the rotor 520 so as to pass through the stator 510 and the mounting part 425, and thus, the rotor 520 may be directly connected to the drum 200. In this case, the rotor 520 may directly transmit power to rotate the drum 200 to the drum 200.

The rotor 520 may be coupled to the drive shaft 530 through a washer 540. The washer 540 may perform a function of connecting the drive shaft 530 to the rotor 520. A contact area between the rotor 520 and the drive shaft 530 may be increased by the washer 540, and thus, rotation of the rotor 520 may be more effectively transmitted to the drum 200.

The reducer 600 may be provided to connect the motor 500 to the drum 200. The reducer 600 may convert power of the motor 500 so at to rotate the drum 200. The reducer 600 may be disposed between the motor 500 and the drum 200, may receive power from the motor 500, may convert the power, and may then transmit the converted power to the drum 200. The reducer 600 may be provided to increase the torque value of the rotor 520 while reducing the RPM of the rotor 520 and then to transmit the converted power to the drum 200.

Specifically, the reducer 600 may be coupled to the drive shaft 530 coupled to the rotor 520 and rotated together with the rotor 520. The reducer 600 may include a gear assembly engaged with the drive shaft 530 and rotated so as to increase the torque of the drive shaft 530 while converting the RPM of the drive shaft 530, and the gear assembly may be connected to the drum rotating shaft 6341 coupled to the drum 200 so as to rotate the drum 200. Therefore, when the drive shaft 530 is rotated, the drum rotating shaft 6341 may be rotated at a lower RPM than the RPM of the drive shaft 530 and a greater torque than the torque of the drive shaft 530.

The performance of the reducer 600 depends on whether or not the drive shaft 530 and the drum rotating shaft 6341 may remain coaxial with each other. That is, when the drive shaft 530 and the drum rotating shaft 6341 are misaligned with each other, coupling of components forming the gear assembly in the reducer 600 to at least one of the drive shaft 530 and the drum rotating shaft 6341 may be loosened or released. Therefore, the power of the drive shaft 530 may not be properly transmitted to the drum rotating shaft 6341, or the drive shaft 530 may be rotated idle.

Further, when the drive shaft 530 and the drum rotating shaft 6341 are even temporarily misaligned with each other, gears in the reducers 600 may be dislocated and may thus collide with each other, and thus, unnecessary vibration or noise may be caused.

Further, when the misalignment angle between the drive shaft 530 and the drum rotating shaft 6341 is severe even temporarily, the reducer 600 may completely deviate from the original position thereof, or may be damaged.

In order to prevent such problems, laundry treating apparatuses including a reducer may be generally configured such that the reducer and a motor are fixed to a support which may maintain the original state thereof without being deformed even when external force is applied thereto.

For example, in a washer, a tub configured to accommodate a drum may be primarily fixed to a cabinet, and a motor and a reducer may be secondarily fixed to a bearing housing produced as a rigid body embedded in the tub through injection molding. Thereby, even when the tub generates considerable vibration, the reducer and the motor, i.e., a driving unit, may be tilted or vibrated together with the bearing housing or a fixed steel plate. Consequently, the coupling state between the reducer and the driving unit may always be maintained, and the coaxial state between a drive shaft and a rotating shaft may be maintained.

However, the laundry treating apparatus according to the present disclosure is provided as a dryer, and thus, a tub fixed to the cabinet 100 is omitted. Further, the rear panel 421 of the cabinet 100 is provided as a relatively thin plate, and thus, although the stator 510 is fixed, the rear panel 421 may be easily vibrated or bent due to repulsive power when the rotor 520 is rotated. When the rear panel 421 is vibrated or bent even temporarily, the centers of rotation of the reducer 600 and the motor 500, which are coupled to the drum 200, are misaligned with each other.

Further, the rear panel 421 is provided as a thin steel plate, and thus, it may be difficult for the rear panel 421 to support both the reducer 600 and the motor 500. For example, in the case in which the reducer 600 and the motor 500 are coupled to the rear panel 421 in parallel to each other, moment of inertia may occur due to the overall length of the reducer 600 and the motor 500 and gravity, and thus, the reducer 600 may sag. Accordingly, the drum rotating shaft 6341 of the drum 200 deviates from the original position thereof due to the reducer 600, and may thus not remain coaxial with the drive shaft 530.

The motor 500 may be supported by coupling the stator 510 to the rear pate 420. When a large amount of laundry is accommodated in the drum 200 or the laundry in the drum 200 is unbalanced, the drum rotating shaft 6341 may deviate from the original position thereof depending on the disposition of the laundry whenever the drum 200 is rotated. Here, since the stator 510 is separated from the drum 200 and is fixed to the rear plate 420, the drum rotating shaft 530 may be vibrated at a different amplitude from the stator 510 or be tilted at a different angle from the stator 510. Therefore, the drum rotating shaft 6341 and the drive shaft 530 may not remain coaxial with each other.

From another point of view, the position of the drum 200 supported by the front plate 410 and the rear plate 420 may be fixed to a certain degree. Therefore, the position of the drum rotating shaft 6341 coupled to the drum 200 may be fixed to a certain degree. Accordingly, even when the drum 200 is vibrated, vibration of the drum 200 may be attenuated by at least one of the front plate 410 or the rear plate 420.

However, in the case in which vibration of the drum 200 is transmitted to the motor 500, although the reducer 600 and the motor 500 are fixed to the rear plate 420, the vibration amplitude of the motor 500 and the rear plate 420 may be greater than the vibration amplitude of the drum rotating shaft 6341. Here, the drum rotating shaft 6341 and the drive shaft 530 may not remain coaxial with each other also.

In order to solve the above problems, in the laundry treating apparatus according to the present disclosure, the motor 500 may be coupled to the reducer 600 so as to be fixed. That is to say, the reducer 600 may serve as a control point of the entirety of the driving unit. That is, the reducer 600 may serve as a reference to determine the vibration and the tilt angle amount of the driving unit.

Since the motor 500 is fixed only to the reducer 600 without being fixed to other elements of the laundry treating apparatus, when vibration or external force is transmitted to the driving unit, the motor 500 may always be tilted or vibrated together with tilting or vibration of the reducer 600.

Accordingly, the reducer 600 and the motor 500 may form one vibration system, and the reducer 600 and the motor 500 may remain fixed to each other without moving relative to each other.

The stator 510 of the motor 500 may be directly coupled to the reducer 600 so as to be fixed. Therefore, the installed position of the drive shaft 530 may not be varied with respect to the reducer 600. The drive shaft 530 and the reducer 600 may be disposed such that the center of the drive shaft 530 and the center of the reducer 600 coincide with each other, and the drive shaft 530 may be rotated in the state in which the drum rotating shaft 6341 and the drive shaft 530 remain coaxial with each other.

A first axis M1 may indicate a virtual line extending in the forward and rearward directions along the center of rotation of the drum 200. That is, the first axis X may be provided parallel to the X-axis.

A second axis M2 and a third axis M3 may indicate virtual lines extending from the front part of the laundry treating apparatus to the upper region of the rear part of the laundry treating apparatus. That is, the second axis M2 and the third axis M3 may be provided parallel to the XZ plane, or may be provided orthogonal to the Y-axis.

The first axis M1 and the second axis M2 may cross each other in the reducer 600. Further, the first axis M1 and the third axis M3 may cross each other in the mounting part 425.

The reducer 600 and the motor 500 may be designed to be disposed along the first axis M1 parallel to the ground when there is no load in the drum 200 or the motor 500 is not operated.

However, when the drum 200 or the motor 500 is vibrated, vibration of the drum 200 or the motor 500 is transmitted to the reducer 600 and thus the reducer 600 is tilted , and thereby, the reducer 600 may be temporarily tilted along the second axis M2.

Here, the motor 500 is coupled to the reducer 600, and may thus be vibrated or tilted together with the reducer 600. Therefore, the motor 500 may be disposed parallel to the reducer 600 on the second axis M2. Accordingly, the drive shaft 6341 and the drum rotating shaft 530 may be disposed in parallel along the second axis M2.

Consequently, even when the reducer 600 is tilted, the motor 500 may be moved integrally with the reducer 600 and the drive shaft 530 and the drum rotating shaft 6341 may remain coaxial with each other.

The reducer 600 may be coupled to the rear plate 420 so as to be fixed. Since the reducer 600 is tilted or vibrated in the state in which the reducer 600 is coupled to the rear plate 420, it may be considered that the rear plate 420 serves as the center of the vibration system including the reducer 600, the motor 500 and the drum 200. In this case, the motor 500 is not directly coupled to the rear plate 420, and may be coupled to only the reducer 600 so as to be fixed.

The reducer 600, the motor 50 and the drum 200 are disposed in parallel along the first axis M1, and then, the reducer 600 may be tilted parallel to the third axis M3 due to vibration of the drum 200 or the motor 500. The third axis M3 may pass through the reducer 600 coupled to the rear plate 420. Here, since the reducer 600 and the motor 500 are coupled to each other, the motor 500 may be tilted parallel to the third axis M3 in the same manner as the reducer 600.

Accordingly, the motor 500 and the drum 200 are coupled to the reducer 600, and thus, the motor 500 and the drum 200 may be tilted parallel to the reducer 600 or vibrated simultaneously with the reducer 600.

The above-described term "coaxial" or "coinciding" does not mean that two elements are physically perfectly coaxial with each other or coincide with each other, but conceptually means that the elements are within a mechanically allowable error range or are within a range recognized as in a coaxial state or a coinciding state by those skilled in the art. For example, the state in which the drive shaft 530 and the drum rotating shaft 6341 are misaligned within 5 degrees may be defined as the coaxial state or the coinciding state. However, such an angle value is only one example, and an error allowed by design may be changed.

Since the drive shaft 530 is rotated relative to the reducer 600 but is fixed so as not to be tilted and the stator 510 is also fixed to the reducer 600, the distance between the stator 510 and the rotor 520 may always be maintained. Accordingly, collision between the stator 510 and the rotor 520 may be prevented, and noise or vibration caused by change in the center of rotation of the rotor 520 around the stator 520 may be fundamentally blocked.

The drum rotating shaft 6341 may be provided to extend towards the drum 200 within the reducer 600, and may be vibrated and tilted together with the reducer 600. That is, the drum rotating shaft 6341 may be provided to be rotated in the reducer 600, but the installed position of the drum rotating shaft 6341 may be fixed. Accordingly, the drum rotating shaft 6341 and the drive shaft 530 may always be disposed parallel to each other, and may thus form a concentric axis. That is to say, the drum rotating shaft 6341 and the drive shaft 530 may maintain the state in which the center of the drum rotating shaft 6341 and the center of the drive shaft 530 coincide with each other.

A sealing unit 450 may be provided between the drum rear surface 220 and the rear plate 420. The sealing unit 450 may seal a gap between the drum rear surface 220 and the rear plate 420 so that air flowing into the duct 423 of the rear plate 420 flows into the intake holes 224 without leaking to the outside.

The sealing unit 450 may be disposed on the outer surface and the inner surface of the duct 423. A first sealing member 451 may be provided outside the duct 423 in the radial direction, and a second sealing member 452 may be provided inside the duct 423 in the radial direction. The first sealing member 451 may prevent hot air between the drum rear surface 220 and the duct 423 from leaking radially outwards, and the second sealing member 452 may prevent hot air between the drum rear surface 220 and the duct 423 from leaking radially inwards.

That is to say, the sealing unit 450 may be disposed outside and inside of the intake holes 224 in the radial direction. The first sealing member 451 may be provided outside the intake holes 224 in the radial direction, and the second sealing member 452 may be provided inside the intake holes 224 in the radial direction.

In order to prevent hot air from leaking, the sealing unit 450 may be provided to come into contact with both the drum rear surface 220 and the rear plate 420. The drum 200 is rotated during the operating process of the laundry treating apparatus, and thus, the drum rear surface 220 continuously applies friction to the sealing unit 450. Therefore, the sealing unit 450 may be formed of a material which may seal the gap between the drum rear surface 220 and the duct 423 without performance degradation even by frictional force or frictional heat generated due to rotation.

Since the motor 500 or the reducer 600 may be coupled to the rear surface of the rear plate 420 and the rear plate 420 may be formed of a thin steel plate, the rear plate 420 may be bent or deformed by load of the reducer 600 or load transmitted to the reducer 600 by the drum 200. That is, in order to install the reducer 600 and the motor 500 on the rear plate 420, the rear plate 420 needs to secure stiffness.

For this purpose, the rear plate 420 may further include a bracket 700 configured to increase stiffness of the rear plate 420. The bracket 700 may be additionally coupled to the rear plate 420, and the reducer 600 and the motor 500 may be coupled to the rear plate 420 by the bracket 700.

The reducer 600 may be simultaneously coupled to the bracket 700 and the rear plate 420. The reducer 600, the rear plate 420 and the bracket 700 may be simultaneously coupled to each other using fastening members passing therethrough. The rear plate 420 may secure stiffness by coupling the bracket 700 thereto. The reducer 600 and the motor 500 may be coupled to the rear plate 420 having secured stiffness.

The reducer 600 may be first coupled to the bracket 700, and then, the bracket 700 may be coupled to the rear plate 420. That is, the reducer 600 is not directly coupled to the rear plate 420, and may be fixed to the rear plate 420 through the bracket 700.

When the motor 500 or the reducer 600 is coupled to the rear surface of the rear plate 420, the motor 500 and the reducer 600 may be exposed to the outside. Therefore, it is necessary to prevent the motor 50 coupled to the rear surface of the rear plate 420 from being exposed to the outside. Further, the duct 423 may be heated by hot air.

Therefore, it is necessary to isolate the rear surface of the duct 423 from heat. The rear cover 430 may be coupled to the rear surface of the rear plate 420 so as to prevent the duct 423 and the motor 500 or the reducer 600 from being exposed to the outside. The rear cover 430 may be spaced apart from the duct 423 and the driving unit.

The rear cover 430 may prevent the motor 500 from being damaged due to external interference or the duct 423 from generating heat loss, thereby being capable of preventing reduction in drying efficiency.

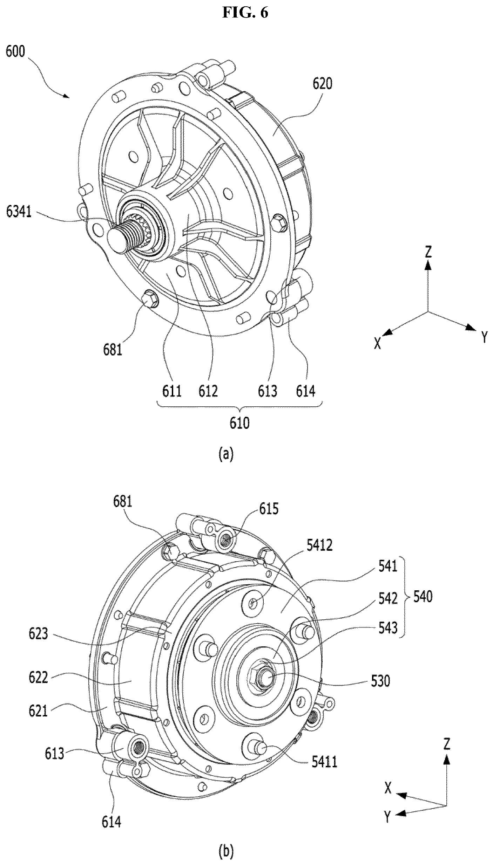

FIGS. 6(a) and 6(b) illustrate the external appearance of the reducer according to one embodiment of the present disclosure.

The reducer 600 may include a reducer housing unit configured to form the external appearance of the reducer 600. The reducer housing unit may include a first housing 610 provided to face the drum, and a second housing 620 provided to face the motor.

The reducer 600 may include a gear box. The gear box may be provided to receive power transmitted from the motor, to increase the torque value of the motor while reducing the RPM of the motor, and then to transmit the converted power to the drum. A great part of the gear box may be accommodated in the second housing 620, and the first housing 610 may be provided to shield the inside of the reducer 600. Thereby, the total thickness of the reducer 600 may be reduced. A detailed description of the gear box will be given later.

The first housing 610 may include a first housing shield body 611 provided to shield the second housing 620, and a first housing shaft receiver 612 configured to extend from the first housing shield body 611 in a direction away from the second housing 620. The first housing shaft receiver 612 may accommodate the drum rotating shaft 6341, and may rotatably support the drum rotating shaft 6341.

The first housing 610 may include the stator couplers 613. The stator couplers 613 may be provided to extend from the circumferential surface of the first housing shield body 611 in a direction away from the first housing shaft receiver 612.

Each of the stator couplers 613 may include a stator fastening hole 615 to which the motor is fastened. The stator fastening hole 615 may be recessed from the stator coupler 613. A separate fastening member may be inserted into the stator fastening hole 615. The stator couplers 613 may be coupled to the motor using the fastening members.

The first housing 610 may further include coupling guides 614 configured to guide coupling of the motor to the first housing 610. The coupling guides 614 may be provided to extend from the circumferential surface of the first housing shield body 611 in the direction away from the first housing shaft receiver 612. The coupling guides 614 may extend from the first housing shield body 611 so as to be connected to the stator couplers 613. The coupling guides 614 may guide the position of the stator 510 when the stator 510 is coupled to the stator couplers 613. Thereby, assemblability may be improved.

Referring to FIGS. 6(a) and 6(b), the second housing 620 may accommodate the gear assembly therein. In general, the gear box coupled to the reducer 600 may include a sun gear, planet gears rotated around the sun gear, and a ring gear configured to accommodate the planet gears so as to guide rotation of the planet gears. The second housing 620 may include a second housing coupling body 621 coupled to the first housing 610, a second housing shield body 622 configured to extend from the second housing coupling body 621 in a direction away from the first housing 610 and to form a space for accommodating the gear box, and a second housing shaft receiver 623 configured to extend from the inner circumferential surface of the second housing shield body 622 in the direction away from the first housing 610 so as to support the drive shaft 530.

The first housing 610 and the second housing 620 may be designed such that the center of the first housing 610 and the center of the second housing 620 are coaxial with each other. Coaxial location of the drive shaft 530 and the drum rotating shaft 6341 is favorable to power transmission. Therefore, the first housing shaft receiver 612 configured to rotatably support the drum rotating shaft 6341 and the second housing shaft receiver 623 configured to rotatably support the drive shaft 530 may be coaxially coupled to each other.

The drive shaft 530 may be inserted into the second housing 620 so as to be rotatably supported in the second housing 620. The washer 540 configured to rotatably support the rotor 520 may be coupled to the drive shaft 530. The washer 540 may include an accommodation body 542 provided with a shaft support hole 543 formed through the center thereof so as to accommodate the drive shaft 530, and a washer coupling body 541 configured to extend from the outer circumferential surface of the accommodation body 542 so as to form a plane to which the rotor 520 is coupled. The shaft support hole 543 may be provided to have a recess shape corresponding to the shape of a protrusion formed on the outer circumferential surface of the drive shaft 530.

The washer 540 may include one or more washer coupling protrusions 5411 provided to protrude from the washer coupling body 541 in a direction away from the reducer 600. Further, the washer 540 may include one or more washer coupling holes 5412 formed through the washer coupling body 541.

The washer coupling protrusions 5411 may be coupled to receiving recesses formed in the rotor 520. Fastening members passing through the rotor 520 may be inserted into the washer coupling holes 5412, and may thus be used to couple the rotor 520 and the washer 540.

The washer coupling protrusions 5411 and the washer coupling holes 5412 may be provided in plural so as to be alternately arranged on the surface of the washer coupling body 541 in the circumferential direction.

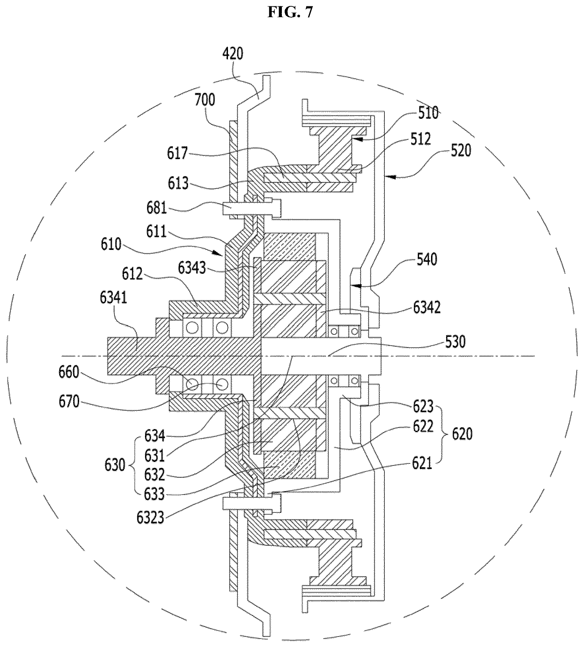

FIG. 7 is an enlarged cross-sectional view illustrating the driving unit, shown in brief in FIG. 4, in more detail.

The driving unit may include the motor 500 configured to generate rotational power and the reducer 600 configured to reduce the rotational velocity of the motor 500 and then to transmit the reduced rotational velocity to the drum 200. The reducer 600 may include the drum rotating shaft 6341 configured to rotate the drum 200.

The motor 500 may include the stator 510 configured to generate a rotating magnetic field by external power, and the rotor 520 provided to surround the outer circumferential surface of the stator 510. Permanent magnets may be arranged on the inner circumferential surface of the rotor 520.

The permanent magnets located on the inner circumferential surface of the rotor 520 may be moved in a specific direction by the rotating magnetic field generated by the stator 510, and the permanent magnets may be fixed to the inner circumferential surface of the rotor 520. Therefore, the rotor 520 may be rotated by the rotating magnetic field of the stator 510.

The drive shaft 530 rotated together with the rotor 520 so as to transmit the rotational power of the rotor 520 may be coupled to the center of rotation of the rotor 520. The drive shaft 530 may be provided to be rotated together with the rotor 520. The drive shaft 530 may be coupled to the rotor 520 through the washer 540.

Although the drive shaft 530 may be directly coupled to the rotor 520, the drive shaft 530 may be more firmly coupled to the rotor 520 through the washer 540 and thus, in this case, may more effectively transmit the rotational power of the rotor 520. Further, in this case, concentrated application of load to the drive shaft 530 may be prevented, and thus, durability of the drive shaft 530 may be increased.

The drive shaft 530 may be directly connected to the drum 200, but the drive shaft 530 is rotated at the same velocity as the rotational velocity of the rotor 520 and thus it may be necessary to reduce the rotational velocity of the drive shaft 530. Therefore, the drive shaft 530 may be connected to the reducer 600, and the reducer 600 may be connected to the drum 200. That is, the reducer 600 may reduce the rotational velocity of the drive shaft 530 so that the drum 200 is rotated at the reduced rotational velocity.

The reducer 600 may include the first housing 610 and the second housing 620 configured to form the external appearance of the reducer 600, and a gear box 630 configured to reduce the power of the drive shaft 530. The second housing 620 may provide a space for accommodating the gear box 630, and the first housing 610 may shield the space provided by the second housing 620.

The second housing 620 may include the second housing coupling body 621 coupled to the first housing 610, the second housing shield body 622 configured to extend rearwards from the inner circumferential surface of the second housing coupling body 621 so as to form the space for accommodating the gear box 630, and the second housing shaft receiver 623 configured to extend rearwards from the second housing shield body 622 so as to accommodate the drive shaft 530.

The gear box 530 may include a ring gear 633 installed along the inner circumferential surface of the second housing shield body 622. One or more planet gears 632 engaged with the ring gear 633 may be provided on the inner circumferential surface of the ring gear 633, and a sun gear 631 engaged with the planet gears 632 and rotated together with the drive shaft 530 may be provided inside the ring gear 633.

The sun gear 631 may be provided to be coupled to the drive shaft 530 so as to be rotated. The sun gear 631 may be provided as a member separately from the drive shaft 530, but the present disclosure is not limited thereto and the sun gear 631 may be formed integrally with the drive shaft 530.

The sun gear 631, the planet gears 632 and the ring gear 633 may be provided as helical gears. When the respective gears 631, 632 and 633 are provided as helical gears, noise may be reduced and power transmission efficiency may be increased. However, the present disclosure is not limited thereto, and the sun gear 631, the planet gears 632 and the ring gear 633 may be provided as spur gears.

As one example of operation of the gear box 630, when the drive shaft 530 and the sun gear 631 coupled to the drive shaft 530 are rotated as the rotor 520 is rotated, the planet gears 632 engaged with the outer circumferential surface of the sun gear 631 may be rotated through engagement between the ring gear 633 and the sun gear 631.

Each of the planet gears 632 may include a planet gear shaft 6323 inserted into the center of rotation of the planet gear 632. The planet gear shaft 6323 may rotatably support the planet gear 632.

The reducer 600 may further include a first carrier 6342 and a second carrier 6343 configured to support the planet gear shafts 6323 of the planet gears 632. The front parts of the planet gear shafts 6323 may be supported by the second carrier 6343, and the rear parts of the planet gear shafts 6323 may be supported by the first carrier 6342.

The drum rotating shaft 6341 may be provided to extend from the center of rotation of the second carrier 6343 in a direction away from the motor 500. The drum rotating shaft 6341 may be provided as an element separately from the second carrier 6343, and may be coupled to the second carrier 6343 so as to be rotated together therewith. In contrast, the drum rotating shaft 6341 may be formed integrally from the second carrier 6343 so as to extend from the second carrier 6343.

The drum rotating shaft 6341 may be coupled to the drum so as to rotate the drum. As described above, the drum rotating shaft 6341 may be coupled to the drum via a connector, such as the bushing, as described above, or may be directly coupled to the drum without a separate connector.

The drum rotating shaft 6341 may be supported by the first housing 610. The first housing 610 may include the first housing shield body 611 provided to shield the accommodating space of the second housing 620, and the first housing shaft receiver 612 configured to extend from the first housing shield body 611 in the direction away from the second housing 620 so as to accommodate the drum rotating shaft 6341. A first bearing 660 and a second bearing 670 may be provided on the inner circumferential surface of the first housing shaft receiver 612 by press fit, thus being capable of rotatably supporting the drum rotating shaft 6341.

The first housing 610 and the second housing 620 may be coupled to each other by reducer fastening members 681. Further, the reducer fastening members 681 may simultaneously pass through both the first housing 610 and the second housing 620 so as to couple the two housings 610 and 620 to each other. In addition, the reducer fastening members 681 may simultaneously pass through the first housing 610, the second housing 620 and the rear plate 420 so as to fix the reducer 600 to the rear plate 420 simultaneously with coupling of the first housing 610 and the second housing 620.

The rear plate 420 may be formed as a steel plate having a small thickness. Therefore, it may be difficult to secure stiffness of the rear plate 420 so as to support all of the reducer 600, the motor 500 coupled to the reducer 600, and the drum 200 connected to the reducer 600. Accordingly, in order to secure stiffness of the rear plate 420 when the reducer 600 is coupled to the rear plate 420, the bracket 700 may be used. The bracket 700 may be formed of a material having higher stiffness than the rear plate 420, and may be coupled to the front or rear surface of the rear plate 420.

The bracket 700 may be coupled to the front surface of the rear pate 420 so as to secure stiffness of the rear plate 420 to couple the reducer 600 to the rear plate 420, and the reducer 600 may be simultaneously coupled both to the rear plate 420 and the bracket 700. In order to couple the rear plate 420, the bracket 700 and the reducer 600, fastening members, such as bolts, may be used.

Further, in order to fix the reducer 600 to the rear plate 420, the reducer fastening members 681 used to couple the first housing 610 and the second housing 620 may be used. That is, the reducer fastening members 681 may pass through the second housing 620, the first housing 610, the rear plate 420 and the bracket 700 at once, thus being capable of coupling the same. In this case, the front surface of the rear plate 420 may be supported by the bracket 700 and the rear surface of the rear plate 420 may be supported by the first housing 610, and thus, the rear plate 420 may secure stiffness even when the reducer 600 is coupled thereto. However, the present disclosure is not limited thereto, and the first housing 610 and the second housing 620 may be first coupled using the reducer fastening members 681 and then the reducer 600 may be coupled to the rear plate 420 using separate fastening members.

Further, stator couplers 613 configured such that the motor 500 is coupled thereto may be provided at the radially outer part of the first housing 610. Each of the stator couplers 613 may include a coupling recess.

The stator 510 may be directly coupled to the rear plate 420, or may be coupled to the stator couplers 613. The stator 510 may include fixing ribs 512 provided on the inner circumferential surface of the stator 510 so as to support the stator 510. The fixing ribs 512 may be coupled to the stator couplers 613. The fixing ribs 512 and the stator couplers 613 may be coupled to each other by stator coupling pins 617.

The motor 500 is coupled to the reducer 600 while being spaced apart from the rear plate 420, and thus, the motor 500 and the reducer 600 may form one vibrator. Therefore, even when vibration is applied from the outside, the drive shaft 530 coupled to the rotor 520 and the drum rotating shaft 6341 connected to the reducer 600 may easily remain coaxial with each other.

The axial direction of the drum rotating shaft 6341 is danger of deviating from the original direction thereof due to vibration of the drum 200. However, since the motor 500 is coupled to the first housing 610 configured to support the drum rotating shaft 6341, when the axial direction of the drum rotating shaft 6341 may deviate from the original direction thereof, the axial direction of the drive shaft 530 also deviates from the original direction thereof in a similar manner to the drum rotating shaft 6341. That is, the motor 500 is moved integrally with the reducer 600, and thus, the drum rotating shaft 6341 and the drive shaft 530 may remain coaxial with each other even when external force is applied from the outside.

The above-described coupling structure may increase efficiency and reliability in transmission of power generated by the motor 500 to the drum 200, and may prevent abrasion of the gear box 630, reduction in power transmission efficiency, and reduction in durability and reliability due to misalignment between the drum rotating shaft 6341 and the drive shaft 530.

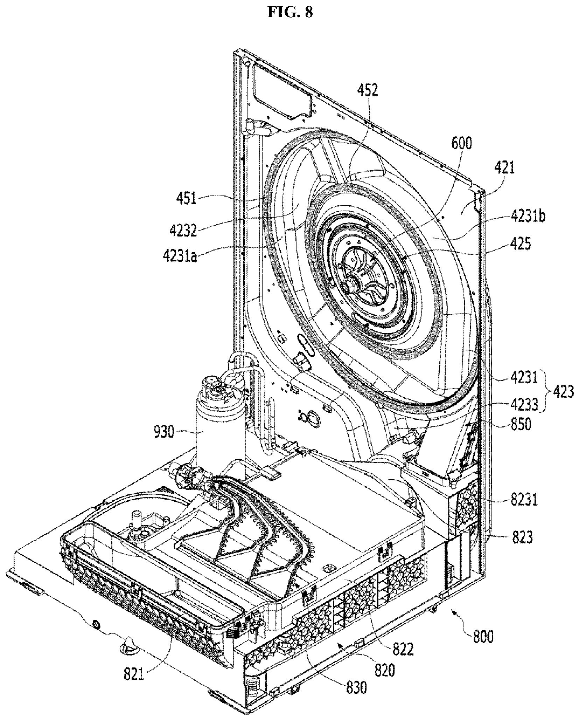

FIG. 8 illustrates the base and the rear plate according to one embodiment of the present disclosure.

Referring to FIG. 8, the rear plate 420 may be located behind the drum. The rear plate 420 may guide hot air discharged from the circulation flow path part 820 to the drum. That is, the rear plate 420 may be located behind the drum, and may form a flow path part so as to uniformly supply hot air to the entirety of the drum.

The rear plate 420 may include the rear panel 421 provided to face the drum rear surface, and the duct 423 recessed rearwards from the rear panel 421 so as to form the flow path. The duct 423 may be provided by pressurizing the rear panel 42 rearwards. The duct 423 may be provided to accommodate a part of the drum rear surface.

The duct 423 may include an inlet part 4233 located behind the circulation flow path part 820, and a flowing part 4231 located behind the drum. The flowing part 4231 may be provided to accommodate a part of the drum. The flowing part 4231 may accommodate the part of the drum, and may form a flow path provided behind the drum.

The flowing part 4231 may be provided in a ring shape so as to face the intake holes formed in the drum rear surface. The flowing part 4231 may be recessed from the rear panel 421. That is, the flowing part 4231 may be provided with an opened front surface, and the flowing part 4231 and the rear surface of the drum may form the flow path.

When the front surface of the flowing part 4231 is opened, hot air moved to the flowing part 4231 may be moved directly to the drum without passing through any separate elements. Therefore, heat loss caused when hot air passes through other elements may be prevented. That is, drying efficiency may be increased by reduction in heat loss of hot air.

The rear plate 420 may include the mounting part 425 provided inside the flowing part 4231 in the radial direction. The mounting part 425 may provide a space to which the reducer 600 or the motor 500 is coupled. That is, the rear plate 420 may include the mounting part 425 provided at the inner part thereof, and the flowing part 4231 provided in a ring shape outside the mounting part 425 in the radial direction.

Specifically, the flowing part 4231 may include an outer circumferential surface 4231a configured to surround an inner space in which hot air flows. Further, the flowing part 4231 may include an inner circumferential surface 4231b configured to surround the inner space in which hot air flows. That is, the outer circumferential surface 4231a may form the outer circumference of the flowing part 4231, and the inner circumferential surface 4231b may form the inner circumference of the flowing part 431.

Further, the flowing part 4231 may include a recessed surface 4232 configured to form the rear surface of the flow path along which hot air moves. The recessed surface 4232 may be provided to connect the outer circumferential surface 4231a and the inner circumferential surface 4231b. That is, the outer circumferential surface 4231a, the inner circumferential surface 4231b and the recessed surface 4232 may form the space in which hot air discharged from the circulation flow path part flows.

Further, the recessed surface 4232 may prevent hot air from leaking rearwards, and may thus guide the hot air towards the drum. That is, the recessed surface 4232 may indicate the recessed surface of the flowing part 4231.

The inlet part 4233 may be located to face the circulation flow path part 820. The inlet part 4233 may be located to face the air blowing part 8231. The inlet part 4233 may be recessed rearwards from the rear panel 421 so as to prevent interference with the air blowing part 8231. The upper portion of the inlet part 4233 may be connected to the flowing part 4231.

The laundry treating apparatus according to one embodiment of the present disclosure may include the connector 850 connected to the air blowing part 8231. The connector 850 may guide hot air discharged from the air blowing part 8231 to the flowing part 4231. The connector 850 may form a flow path therein, and thereby, may guide hot air discharged from the air blowing part 8231 to the flowing part 4231. That is, the connector 850 may form the flow path for connecting the air blowing part 8231 to the flowing part 4231. The connector 850 may be provided such that the cross-sectional area of the flow path in the connector 850 increases as the distance from the air blowing part 8231 increases.

The connector 850 may be located to face the inlet part 4233. The inlet part 4233 may be recessed rearwards so as to prevent interference with the connector 850. Further, the upper end of the connector 50 may divide the flowing part 4231 and the inlet part 4233 from each other. That is, hot air discharged from the connector 850 may flow into the flowing part 4231, and inflow of the hot air into the inlet part 4233 may be prevented.

The connector 850 may be provided to uniformly supply hot air to the flowing part 4231. The connector 850 may be provided such that the width thereof increases as the distance from the air blowing part 8231 increases. The upper end of the connector 850 may be located along the extension line of the outer circumferential surface 4231a in the circumferential direction.

Therefore, hot air discharged from the connector 850 does not flow towards the inlet part 4233, and may be uniformly supplied to the flowing part 4231. The connector 850 prevents the hot air from being concentrated on one side of the flowing part 4231, thus being capable of uniformly supplying the hot air to the inside of the drum. Therefore, laundry drying efficiency may be increased.

The connector 850 may be provided such that the width thereof increases in the upstream direction, and thus, the velocity of hot air moving along the connector 850 may be decreased in the flow direction of the hot air. That is, the connector 850 may function as a diffuser configured to control the velocity of the hot air. The connector 850 may decrease the velocity of the hot air so as to prevent the hot air from being concentratedly supplied to a specific region.

Due to the above-described shape of the connector 850, the inlet part 4233 provided to face the connector 850 and to prevent interference with the connector 850 may be provided such that the width thereof increases as the distance from the air blowing part 8231 increases. The duct 423 may be generally shaped like the number 9, as seen from the front, due to the shape of the inlet part 4233.

Since the drum is provided to be rotated during the drying cycle, the drum may be spaced apart from the flowing part 4231 by a designated distance. Hot air may leak through such a space.

Therefore, the laundry treating apparatus may further include the sealing unit 450 configured to prevent hot air from leaking through the space between the drum and the flowing part 4231. The sealing unit 450 may be located along the circumference of the flowing part 4231.

The sealing unit 450 may include the first sealing member 451 provided along the outer circumference of the flowing part 4231. The first sealing member 451 may be provided between the drum and the outer circumference of the flowing part 4231. Further, the first sealing member 451 may be provided to come into contact with both the drum rear surface 220 and the rear plate 420 so as to more effectively prevent leakage of hot air.

The first sealing member 451 may be provided to come into contact with the front surface of the connector 850. Further, the first sealing member 451 may be provided to come into contact with the upper end of the connector 850. The connector 850 together with the flowing part 4231 may form the flow path in which hot air flows. Therefore, the first sealing member 451 may be provided to come into contact with the connector 850 so as to prevent hot air from leaking through a gap between the drum and the connector 850.

The sealing unit 450 may include the second sealing member 452 provided along the inner circumference of the flowing part 4231. The second sealing member 452 may be provided between the drum and the inner circumference of the flowing part 4231. Further, the second sealing member 452 may be provided to come into contact with both the drum rear surface 220 and the rear plate 420. The second sealing member 452 may prevent hot air flowing along the flowing part 4231 from leaking towards the mounting part 425.

The drum 200 is rotated during the operating process of the laundry treating apparatus, and thus, friction is continuously applied to the sealing unit 450 by the drum rear surface 220. Therefore, the sealing unit 450 may be formed of a material which may seal a gap between the drum rear surface 220 and the flowing part 4231 without performance degradation even by frictional force or frictional heat generated due to rotation.

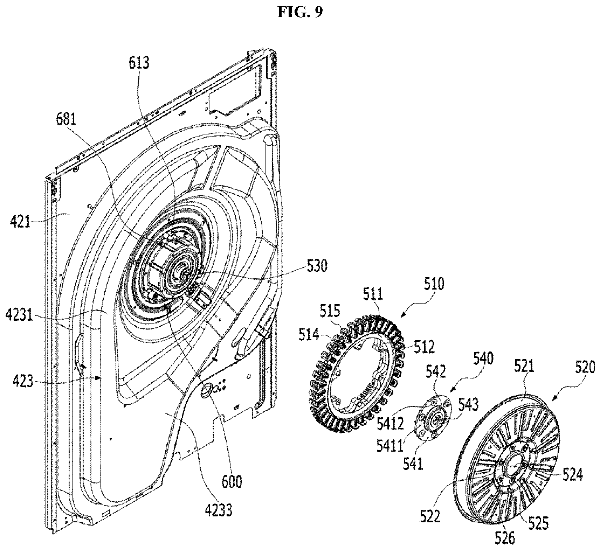

FIG. 9 illustrates a coupling structure between the rear plate, and the reducer and the motor according to one embodiment of the present disclosure.

Referring to FIG. 9, the reducer 600 may be supported by the rear plate 420, and the motor 500 may be coupled to the reducer 600. That is, the rear plate 420 may be provided to support both the reducer 600 and the motor 500.

The motor 500 configured to provide rotational power and the reducer 600 configured to reduce the power of the motor 500 and then to transmit the reduced power to the drum may be located behind the rear plate 420.

The reducer 600 may be installed on the rear plate 420 so as to be located inside the duct 423. The reducer 600 may be located inside the flowing part 4231 in the radial direction so as to prevent interference with the flowing part 4231.

The gear assembly in the reducer 600 may be damaged by heat of hot air moving along the flowing part 4231. Therefore, the flowing part 4231 and the reducer 600 may be provided to be spaced apart from each other by a designated distance.

The reducer 600 may be coupled to the rear plate 420 so as to pass through the rear plate 420. Therefore, the reducer 600 may be connected to the drum located in front of the rear plate 420.

The stator 510 may be coupled to the reducer 600. The stator 510 may be coupled to the reducer 600 so as to be spaced apart from the rear plate 420. Here, the reducer 600 may be located between the drum and the motor 500, and may support the drum and the motor 500 so as to be spaced apart from the rear plate 420. That is, the reducer 600 may become a center of support of the drum and the motor 500.

The stator 510 may include a main body 511 provided in a ring shape, the fixing ribs 512 configured to extend from the inner circumferential surface of the main body 511 and coupled to the stator couplers 613 of the reducer 600, teeth 514 configured to extend from the outer circumferential surface of the main body 511 along the circumference thereof and provided such that coils are wound on the teeth 514, and pole shoes 515 provided at the free ends of the teeth 514 so as to prevent the coils from being released from the teeth 514.

The rotor 520 may include a rotor body 521 provided in a hollow cylindrical shape. The rotor 520 may include an installation body 522 recessed forwards from the rear surface of the rotor body 521. The permanent magnets may be arranged along the inner circumferential surface of the rotor body 521.

The rotor 520 may be coupled to the drive shaft 530 so as to transmit the rotational power of the rotor 520 to the outside through the drive shaft 530. The drive shaft 530 may be connected to the rotor 520 through the washer 540.

Further, the motor 500 may include the washer 540 configured to support the drive shaft 530. The washer 540 may include the washer coupling body 541 coupled to the rotor 520. The washer coupling body 541 may be provided in a disk shape.

The washer 540 may include the accommodation body 542 accommodated in the rotor 520. The accommodation body 542 may be provided to protrude rearwards from the washer coupling body 541. The washer 540 may include the shaft support hole 543 formed through the center of the accommodation body 542. The drive shaft 530 may be inserted into the shaft support hole 543 so as to be supported by the washer 540.

Further, the washer 540 may include the washer coupling holes 5412 formed through the washer coupling body 541. Further, the installation body 522 may include rotor coupling holes 526 provided at positions thereof corresponding to the washer coupling holes 5412. That is, the washer 540 and the rotor 520 may be coupled to each other by coupling members simultaneously passing through both the washer coupling holes 5412 and the rotor coupling holes 526. The washer 540 and the rotor 520 may be coupled to each other to be rotated together therewith.

Further, the washer 540 may include the washer coupling protrusions 5411 protruding rearwards from the washer coupling body 541. Further, the installation body 522 may include washer protrusion accommodation holes 525 provided to correspond to the washer coupling protrusions 5411. The washer coupling protrusions 5411 may be inserted into the washer protrusion accommodation holes 525 so as to support coupling between the washer 540 and the rotor 520.

Further, the rotor 520 may include a rotor installation hole 524 formed through the center of the installation body 522. The rotor installation hole 524 may accommodate the accommodation body 542. Thereby, the washer 540 may be rotated together with the drive shaft 530 by the rotor 520, and may firmly support coupling between the drive shaft 530 and the rotor 520. Therefore, durability and reliability of the entirety of the motor 500 may be secured.

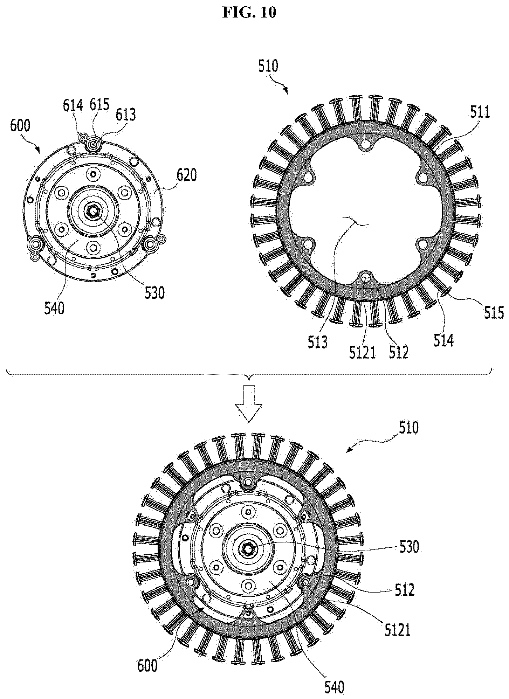

FIG. 10 is a rear view illustrating a coupling structure between the reducer and the stator according to one embodiment of the present disclosure.

The stator 510 may include the main body 511 fixed to the reducer 600 and provided in a ring shape, the fixing ribs 512 configured to extend from the inner circumferential surface of the main body 511 and coupled to the stator coupling holes 615 of the reducer 600, the teeth 514 configured to extend from the outer circumferential surface of the main body 511 along the circumference thereof and provided such that the coils are wound on the teeth 514, the pole shoes 515 provided at the free ends of the teeth 514 so as to prevent the coils from being released from the teeth 514, and a terminal (not shown) controlled to supply current to the coils.

The stator 510 may include an accommodation space 513 formed through the main body 511 and provided inside the main body 511. A plurality of fixing ribs 512 may be provided inside the main body 511 to be spaced apart from each other by a designated angle in the accommodation space 513, fixing rib holes 5121 may be provided in the fixing ribs 512 so that fixing members are installed in the fixing rib holes 5121, and thus, the fixing rib holes 5121 and the stator coupling holes 615 of the reducer 600 may be coupled using the fixing members, such as pins.

When the stator 510 is directly coupled to the reducer 600, a part of the reducer 600 may be accommodated in the stator 510. Particularly, when the reducer 600 is accommodated in the stator 510, the total thickness of the driving unit including the reducer 600 and the motor 500 may be reduced and thus the volume of the drum may be expanded.

For this purpose, the reducer 600 may have a smaller diameter than the diameter of the main body 511. That is, the maximum diameter out of the diameters of the first housing 610 and the second housing 620 may be smaller than the diameter of the main body 511. Thereby, at least a part of the reducer 600 may be accommodated in the main body 511. However, the stator couplers 613 may extend to overlap the fixing ribs 512 in the housing unit of the reducer 600. Thereby, the stator couplers 613 may be coupled to the fixing ribs 512, and a portion of the first housing 610 and the second housing 620 may be located in the main body 511.

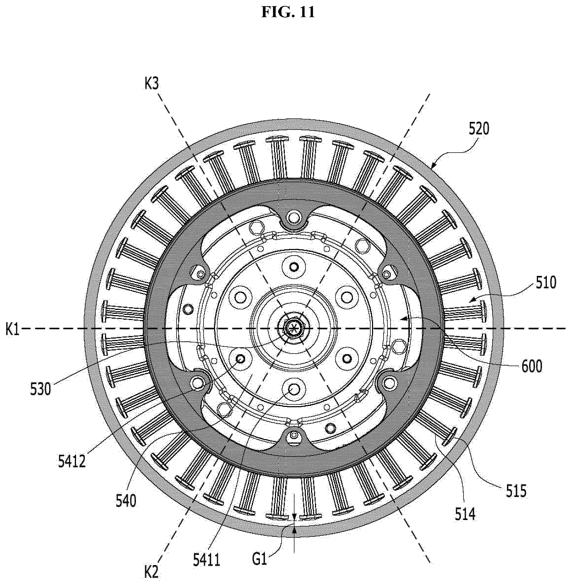

FIG. 11 illustrates coupling between the reducer and the motor according to one embodiment of the present disclosure.

The stator 510 may be coupled to the reducer 600. At least a portion of the reducer 600 may be accommodated in the main body 511 by coupling the stator 510 to the stator couplers 613 protruding outwards from the housing unit of the reducer 600. Thereby, the center of the main body 511, the drive shaft 530 and the center of the reducer 600 may always remain coaxial with one another.

The rotor 520 may be disposed so as to accommodate the stator 510 in the state in which the rotor 520 is spaced apart from the pole shoes 515 by a designated distance. Since the rotor 520 is fixed to the reducer 600 in which the drive shaft 530 is accommodated in the main body 511, a distance G1 between the rotor 520 and the stator 510 may always be maintained.

Therefore, collision between the rotor 520 and the stator 510 or temporary torsional rotation of the rotor 520 on the stator 510 may be prevented, and thus, noise or unnecessary vibration may be blocked.

A first virtual diameter line K1 passing through the center of the reducer 600 and the center of the drive shaft 530, a second virtual diameter line K2 passing through the center of the main body 511, and a third virtual diameter line K3 passing through the center of the rotor 520 may all be disposed at the center of rotation of the reducer 600.

Thereby, since the reducer 600 becomes the center of rotation of the drive shaft 530 and the stator 510 is directly fixed to the reducer 600, misalignment of the drive shaft 530 with the reducer 600 may be prevented. Accordingly, reliability of the reducer 600 may be secured.

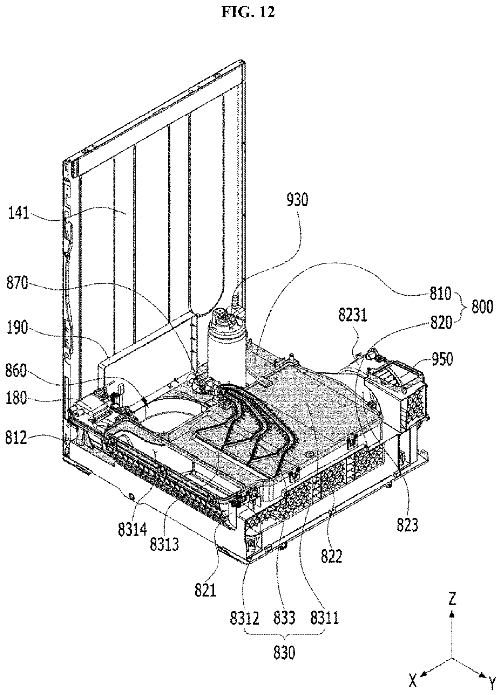

FIG. 12 is a perspective view illustrating the base of the laundry treating apparatus according to one embodiment of the present disclosure.

Referring to FIG. 12, the base 800 may include the circulation flow path part 820 provided on one side of the base 800 so as to circulate air in the drum. Further, a device installation part 810 configured to provide a space in which elements necessary to operate the dryer are installed may be provided on the other side of the base 800. The device installation part 810 may be provided outside the circulation flow path part 820.

In the case of the conventional dryer, the circulation flow path part 820 is provided on the base 800, and the driving unit configured to drive the drum 200 is also installed on the base 800. Since the driving unit occupies a majority part of the installation space on the base 800, the device installation part 810 formed in the space on the base 800 rather than the circulation flow path part 820 has a narrow space, and thus, it is not easy to install other elements of the laundry treating apparatus at the device installation part 810.

However, in the laundry treating apparatus according to the present invention, the motor 500 configured to rotate the drum 200 is spaced apart from the base 800 and disposed behind the drum 200, and thus, the space on the base 800 in which the driving unit was conventionally installed may be used in various ways.

The compressor 930 configured to compress a refrigerant necessary for heat exchange may be installed at the device installation part 810. Further, the base 800 includes a water collection part 860 provided to be spaced apart from the compressor 930 and configured to collect condensed water generated by the circulation flow path part 820. A control box 190 configured to control the compressor 930, the motor, etc. may be installed at the device installation part 810.

The control box 190 may be installed on the base 800 so as to be firmly supported. Further, connection wires for connecting the control box 190 to the elements controlled by the control box 190 may also be firmly supported by the base 800.

As another example, the water collection part 860 may not be disposed between the compressor 930 and the circulation flow path part 820, and may be disposed to overlap the compressor 930 in the forward and rearward directions. The water collection part 860 is located in the space in which the motor was conventionally disposed, and thus, the volume of the water collection part 860 may be expanded. When the volume of the water collection part 860 is increased, the frequency of drainage of collected condensed water may be reduced and thus user convenience may be improved.

The side panels configured to form the side surfaces of the cabinet may be coupled to the side surfaces of the base 800. The side panels may include the left side panel 141 and the right side panel (not shown). The control box 190 may be installed at the device installation part 810 close to any one of the side panels.

The control box 190 may control the overall operation of the laundry treating apparatus. Therefore, the control box 190 may often be checked or repaired.

When the control box 190 is provided close to the left side panel 141, a user may approach the control box 190 only by removing the left side panel 141. Therefore, ease of maintenance may be increased.

When the left side panel 141 is removed, easy access to various elements, such as the compressor 930 and the control box 190, is possible, and thus, the left side panel 141 may be referred to as a service panel.

FIG. 12 illustrates the state in which the device installation part 810 is located at the left side of the base 800 and thus, when the left side panel 141 is removed, the user may approach the control box 190. However, the present disclosure is not limited thereto, and, in the case in which the circulation flow path part 820 is formed at the left side of the base 800 and the device installation part 810 is formed at the right side of the base 800, the control box 190 or compressor 930 may be repaired or checked by removing the right side panel (not shown).

The circulation flow path part 820 may further include the duct cover 830 located above the circulation flow path part 820 so as to form the flow path in which air discharged from the drum flows. The duct cover 830 may be coupled to the open upper surface of the circulation flow path part 820.

The upper surfaces of the inflow duct 821 and the transfer duct 822 are open, and thus, air may enter and exit the inflow duct 821 and the transfer duct 822 through the open upper surfaces thereof. The duct cover 830 may shield the open upper surface of the transfer duct 822. Therefore, the duct cover 830 may allow air of the drum to enter the inflow duct 821, and may prevent the air having entered the inflow duct 821 from leaking through the open upper surface of the transfer duct 822. That is, the duct cover 830 may form one surface of the flow path guiding the air having entered the inflow duct 821 to the discharge duct 823.

The discharge duct 823 may include the air blowing part 8231 configured to discharge air to the outside of the discharge duct 823. The air blowing part 8231 may discharge air having passed through the inflow duct 821 and the transfer duct 822 to the outside of the discharge duct 823.

The air blowing part 8231 may provide a space in which the circulation flow path fan 950 configured to circulate air in the drum is installed. The circulation flow path fan 950 may forcibly circulate air to increase the circulation rate of air, and may thus increase the drying rate of laundry and shorten a time taken to dry the laundry.

When the circulation flow path fan 950 is rotated, air may be discharged through the opening formed at the upper part of the air blowing part 8231. The air discharged from the air blowing part 8231 may again enter the drum so as to be used to dry laundry in the drum.

Various types of fans may be applied as the circulation flow path fan 950. For example, a sirocco fan may be applied so as to enable air to enter in the direction of a rotating shaft and then to discharge air in the radial direction. However, the present disclosure is not limited thereto, and various fans may be used to generate air flow depending on the purposes of design.

The duct cover 830 may include a communication cover body 8312 coupled to the upper part of the inflow duct 821, and a shield cover body 8311 coupled to the upper part of the transfer duct 822. The shield cover body 8311 may extend from the communication cover body 8312, and the shield cover body 8311 may be provided integrally with the communication cover body 8312.

The communication cover body 8312 may include an inflow communication hole 8314 configured such that the drum and the inflow duct 821 communicate with each other therethrough. The inflow communication hole 8314 may guide air discharged from the drum to the inflow duct 821 even when the communication cover body 8312 is coupled to the inflow duct 821.

Further, the shield cover body 8311 may shield the upper surface of the transfer duct 822, and thus, air having entered the inflow duct 821 may be guided to the discharge duct 823 without leaking to the outside of the circulation flow path part 820 through the transfer duct 822.

The shield cover body 8311 may include washing flow path parts 833 provided on the upper surface thereof such that water may flow along the washing flow path parts 833. The washing flow path parts 833 may receive water, and may spray water towards the first heat exchanger located under the duct cover 830.

A cover through hole 8313 vertically formed through the shield cover body 8311 may be provided at the downstream regions of the washing flow path parts 833. Water moving along the washing flow path parts 833 may be sprayed under the shield cover body 8311 through the cover through hole 8313.

The first heat exchanger configured to dehumidify air discharged from the drum may be provided under the cover through hole 8313. Therefore, water having passed through the cover through hole 8313 may be sprayed towards the first heat exchanger so as to wash the first heat exchanger.

A nozzle cover may be coupled to the upper parts of the washing flow path parts 833. The nozzle cover may shield the open upper surface of the washing flow path parts 833. The nozzle cover may prevent air moving along the transfer duct 822 from leaking through the cover through hole 8313. Further, the nozzle cover may shield the upper surfaces of the washing flow path parts 833 so as to prevent water moving along the washing flow path parts 833 from scattering to the outside.

In contrast, the circulation flow path part 820 may further include a duct filter (not shown) provided in front of the first heat exchanger and configured to filter out foreign substances from air having passed through the inflow duct 821. The duct filter (not shown) may be disposed between the inflow duct 821 and the first heat exchanger so as to prevent foreign substances from being accumulated on the front surface of the first heat exchanger, and may thus improve drying efficiency and heat exchange efficiency of the first heat exchanger.

When foreign substances are accumulated on the duct filter (not shown), circulation of air passing through the inflow duct 821 and the transfer duct 822 may be disturbed. In order to solve such a problem, the washing flow path parts 833 may spray water towards the duct filter (not shown) so as to remove the foreign substances accumulated on the duct filter (not shown) due to water pressure.

However, for convenience of description, the laundry treating apparatus in which the duct filter (not shown) is omitted will be described below.

A flow path switch valve 870 coupled to the washing flow path parts 833 so as to supply water necessary for washing to the washing flow path parts 833 may be further provided. The flow path switch valve 870 may be connected to a water supply source, and may thus selectively supply water to the washing flow path parts 833. The water supply source may include the water collection part 860.

The flow path switch valve 870 may be connected to the water collection part 860 by a hose, and may guide water collected in the water collection part 860 to the washing flow path parts 833. The flow path switch valve 870 may guide water collected in the water collection part 860 to the water storage tank 120 (with reference to FIG. 3).

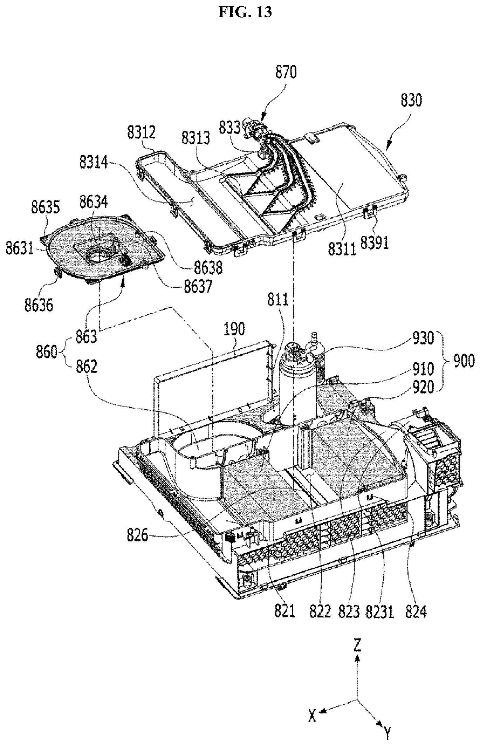

FIG. 13 is an exploded perspective view illustrating the duct cover and a water collection cover separated from the base of FIG. 12.

Referring to FIG. 13, the first heat exchanger 910 and the second heat exchanger 920 configured to sequentially exchange heat with air in the drum 200 may be installed under the duct cover 830 so as to be spaced apart from each other in the forward and rearward directions. Air in the drum 200 having entered into the inflow duct 821 may be dehumidified through heat exchange by the first heat exchanger 910, and the dehumidified air may be heated through heat exchange by the second heat exchanger 920. The heated air may pass through the discharge duct 823, and may be supplied again to the inside of the drum 200.

The circulation flow path part 820 may further include a water cover 826 provided between the first heat exchanger 910 and the bottom surface of the transfer duct 822. The water cover 826 may be provided to be supported by the transfer duct 822.

The water cover 826 may be located under the first heat exchanger 910, and may be provided to support the lower surface of the first heat exchanger 910. The water cover 826 may support the first heat exchanger 910 so that the first heat exchanger 910 is spaced apart from the bottom surface of the transfer duct 822.

The first heat exchanger 910 may produce condensed water through condensation of wet steam discharged from the drum 200. When the condensed water remains in the laundry treating apparatus without being discharged to the outside, odor may be generated or drying efficiency may be reduced. For this purpose, it is necessary to collect the condensed water so as to be spaced apart from the first heat exchanger 910 or the second heat exchanger 920 and to discharge the collected condensed water.

The water cover 826 may support the first heat exchanger 910 so that the first heat exchanger 910 is spaced apart from the bottom surface of the transfer duct 822, and may thus form a space between the bottom surface of the transfer duct 822 and the water cover 826. Condensed water may flow into the water collection part 860 along the space formed by the water cover 826.

The air dehumidified by the first heat exchanger 910 is heated by the second heat exchanger 920, air having passing through the second heat exchanger 920 has a small moisture content and has an increased amount of saturated water vapor depending on heating, and thus, it is difficult to produce condensed water. Therefore, the water cover 826 may be located on the bottom surface of the transfer duct 822 adjacent to the first heat exchanger 910, and may be spaced apart from the second heat exchanger 920.

FIG. 13 illustrates a part of the upper surface of the water cover 826, and thus, a description of the shape of the flow path formed by the water cover 826 and the detailed structure of the water cover 826 will be described later.

The base 800 may include the water collection part 860 provided to be spaced apart from the circulation flow path part 820 so as to collect condensed water generated in the circulation flow path part 820. The water collection part 860 may include a water collection body 862 configured to form a space in which the condensed water is collected.

The water collection part 860 may further include a water collection cover 863 configured to shield the open upper surface of the water collection body 862. Elements vulnerable to moisture may be installed around the water collection part 860. Therefore, it is necessary to prevent the condensed water collected in the water collection body 862 from scattering to the outside. The water collection cover 863 may be coupled to the water collection body 862, and may thus prevent the condensed water from leaking through the upper surface of the water collection body 862.

Further, the water collection part 860 may include a pump configured to move the condensed water collected in the water collection body 862 to the outside. In order to enable the pump to function properly, the inside of the water collection body 862 should be sufficiently sealed. The water collection cover 863 may seal the inside of the water collection body 862 so as to increase reliability of the pump.

The water collection cover 863 may include a water collection cover body 8631 configured to form the shield surface of the water collection body 862. Further, the water collection cover 863 may include at least one of support bodies 8635 provided to support the water collection cover body 8631, and fastening hooks 8636 provided to couple the water collection cover body 8631 to the water collection body 862.

The support bodies 8635 may protrude from the circumference of the water collection cover body 8631, and may be seated on the base. The fastening hooks 8636 may protrude from the water collection cover body 8631. The fastening hooks 8636 may firmly fix the water collection cover body 8631 to the water collection body 862. The fastening hooks 8636 may be inserted into hook holes which will be described later, so as to be fixed.

The condensed water generated in the circulation flow path part 820 is collected in the water collection body 862. The upper surface of the water collection body 862 is open, and thus, the condensed water may scatter to the outside. However, since the water collection body 862 is located adjacent to the control box 190, the compressor 930, etc., the condensed water scattering to the outside of the water collection body 862 may cause failure of these devices.

The water collection cover 863 may shield the open upper surface of the water collection body 862 using the water collection cover body 8631 so as to prevent the condensed water from scattering, and the support bodies 8635 and the fastening hooks 8636 may firmly fix the water collection cover body 8631 to the water collection body 862. Therefore, failure of the devices due to scattering of the condensed water may be prevented.

Further, the water collection cover 863 may include a pump installation part 8634 formed through the water collection cover body 8631 and provided such that the pump is inserted into the pump installation part 8634. Further, the water collection cover 863 may include a drain flow path 8637 configured to protrude upwards from the water collection cover body 8631 and provided in a pipe shape configured to enable the inside and the outside of the water collection body 862 to communicate with each other therethrough.

The pump provided to move the condensed water collected in the water collection body 862 to the outside of the water collection body 862 may be installed at the pump installation part 8634. When the pump is operated, the condensed water collected in the water collection body 862 may be discharged through the drain flow path 8637.

A hose may be connected to the drain flow path 8637 so as to guide the condensed water discharged therefrom to the outside of the water collection body 862. One end of the hose may be coupled to the drain flow path 8637, and the other end of the hose may be connected to the flow path switch valve 870. However, the present disclosure is not limited thereto, and the other end of the hose may be located outside the cabinet so as to directly discharge the condensed water to the outside of the cabinet. The other end of the hose may be connected to the water storage tank 120 (with reference to FIG. 3) located in the upper part of the cabinet so as to guide the condensed water collected in the water collection body 862 to the water storage tank 120.

The water collection cover 863 may further include a return flow path 8638 spaced apart from the drain flow path 8637 and configured to enable the inside and the outside of the water collection body 862 to communicate with each other therethrough. The return flow path 863 may be provided such that the water collection body 862 and the water storage tank communicate with each other therethrough. The return flow path 863 may guide water in the water storage tank again to the water storage body 862.

The return flow path 8638 may be connected to the water storage tank 120 (with reference to FIG. 3) formed in the upper part of the cabinet through a hose. In order to prevent the water storage tank 120 from overflowing with water, when the water storage tank 120 is completely filled with water, the water stored in the water storage tank 120 may be moved to the water collection body 862 through the hose configured to connect the return flow path 8638 to the water storage tank 120. Therefore, the frequency of direct drainage of water stored in the water storage tank 120 by the user may be reduced and thus user convenience may be improved.

The flow path switch valve 870 configured to switch the flow path along which the condensed water collected in the water collection part 860 moves may be further provided. The pump may be connected to the flow path switch valve 870 through the hose. Water stored in the water collection body 862 may be moved to the flow path switch valve 870 by the pump. The flow path switch valve 870 may guide the moved water along various paths.

The flow path switch valve 870 may be connected to the washing flow path parts 833 so as to guide the water to the washing flow path part 833. The water guided to the washing flow path parts 833 may be used to wash the first heat exchanger.

Further, the flow path switch valve 870 may be connected to the water storage tank 120 by the hose so as to guide condensed water moved from the water collection body 862 to the water storage tank 120. The user may directly drain the water storage tank 120 by withdrawing the storage tank 120 in which the condensed water is stored.

The flow path switch valve 870 may be controlled by the control box 190, may be variably operated depending on a point in time of operation of the laundry treating apparatus. For example, when operation of the first heat exchanger 910 is finished during the drying cycle, the control box 190 may control the flow path switch valve 870 so as to guide the condensed water to the washing flow path parts 833. Further, at a point in time when washing of the first heat exchanger 910 is terminated, the control box 190 may control the flow path switch valve 870 so as to guide the condensed water to the water storage tank 120.

As described above, in order to normally operate the pump, the inside of the space from which water is drained by the pump may be sealed. The water collection cover 863 may be firmly coupled to the water collection body 862 using the support bodies 8635 and the fastening hooks 8636, and may thus easily seal the space in which the condensed water is stored. Thereby, reliability in operation of the pump may be improved. A sealing member may be additionally provided on the contact surface between the water collection cover 863 and the water collection body 862 so as to improve space sealability.

The water collection cover 863 provided to seal the inside of the water collection body 862 may be detachably provided on the water collection body 862. Foreign substances, such as lint included in the condensed water generated by the first heat exchanger 910, may enter the water collection body 862. When foreign substances having a large particle size enter the water collection body 862, the foreign substances may disturb operation of the pump.

Therefore, in order to remove foreign substances having entered the water collection body 862 as needed, it is necessary to release the water collection cover 863 from the water collection body 862. Therefore, the water collection cover 863 may be detachably provided on the water collection body 862. Here, the water collection cover 863 may be easily released from the water collection body 862 using the fastening hooks 8636.

That is, in the general service environment, the water collection cover 863 may firmly shield the open upper surface of the water collection body 862 using the support bodies 8635 and the fastening hooks 8636, thus being capable of preventing the condensed water from scattering to the outside.

On the other hand, when it is necessary to release the water collection cover 863 from the water collection body 862 so as to remove foreign substances accumulated in the water collection body 862, the water collection cover 863 may be easily released from the water collection body 862 using the fastening hooks 8636.

The duct cover 830 may include cover mounting hooks 8391 formed along the circumference of the duct cover 830, and the circulation flow path part 820 may include duct protrusions 824 protruding along the circumferential of the circulation flow path part 820 and provided to be fastened to the cover mounting hooks 8391.

The duct cover 830 may be coupled to the circulation flow path part 820 by fastening the duct protrusions 824 to the cover mounting hooks 8391. That is, the duct cover 830 may be firmly coupled to the circulation flow path part 820 by fastening the duct protrusions 824 to the cover mounting hooks 8391 in the state in which the duct cover 830 is placed along the circumferences of the inflow duct 821 and the transfer duct 822.

A sealing member may be additionally provided on the contact surface between the duct cover 830 and the circulation flow path part 820 so as to prevent air in the circulation flow path part 820 from leaking to the outside.

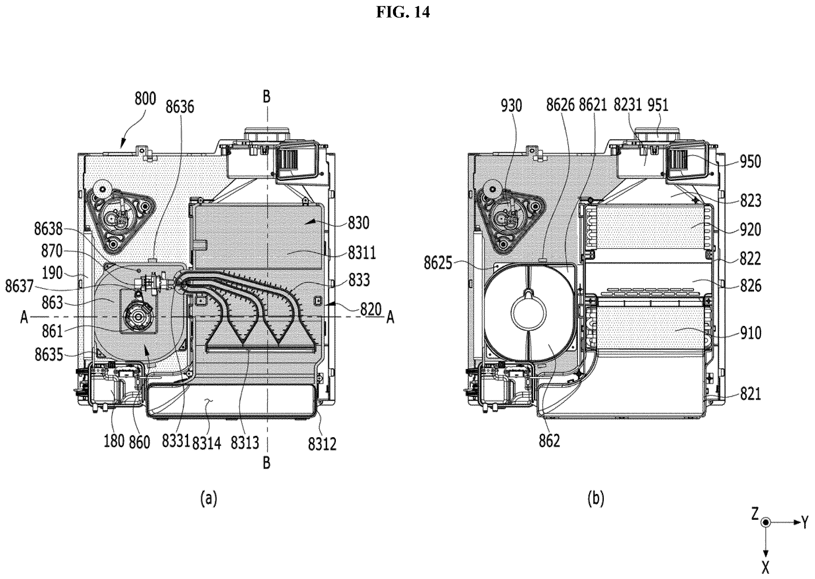

FIG. 14(a) is a top view of the base to which the above-described water collection cover and the duct cover are coupled. FIG. 14(b) is a top view of the base from which the water collection cover and the duct cover are separated.

The conventional dryer includes the motor configured to generate power to rotate the drum, and the motor is provided in the space in which the water collection part 860 is located in these figures. The motor has a structure which rotates the drum using a pulley or a belt. Further, the water collection body configured to store condensed water is disposed between the compressor 930 and the circulation flow path part 820 due to the limit of the physical space. Therefore, the amount of condensed water accommodated in the water collection body is small, and thereby, the frequency of drainage of a water storage tank configured to store the condensed water by a user may be increased.

Further, in the conventional dryer, a space for installation of the control box 190 on the base 800 is not secured due to the above-described disposition of the motor. Therefore, the control box 190 is not supported by the base 800 and is disposed in the upper part of the cabinet, and thus, the distances between the control box and elements requiring control by the control box 190 are increased.

In addition, as control wires for connecting the control box 190 to other elements, such as the motor, are increased, noise of the laundry treating apparatus is increased. Further, the control wires may interfere with the drum.

However, in the laundry treating apparatus according to the present disclosure, the motor 500 is disposed behind the drum 200 so as to be spaced apart from the base 800, the water collection part 860 configured to store condensed water may be disposed in the space in which the conventional motor 500 was mounted, and the control box 190 may also be disposed in the corresponding space.

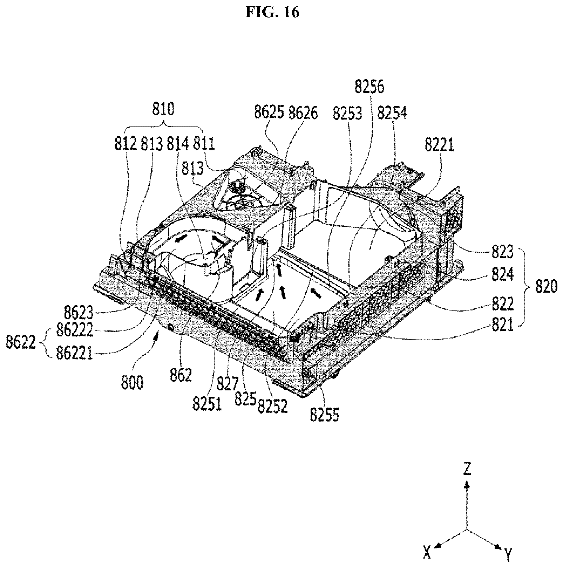

Further, the control box 190 mounted on the base 800 may be stably connected to other elements, and may prevent problems, such as short circuit of control wires connected to the control box 190 due to interference. In addition, the base 800 includes a control box installation part 813 (with reference to FIG. 16) which will be described later, and thus, the control box 190 may be more firmly supported by the base 800.

Since the base 800 secures the space for mounting the above-described elements therein, the capacity of the water collection body 862 configured to store condensed water may be expanded, and thus, a larger amount of condensed water may be stored in the water collection body 862. Therefore, a larger amount of water may be used to wash the first heat exchanger 910, thus being capable of more effectively washing the first heat exchanger 910. Further, the amount of condensed water accommodated in the water collection body 862 is increased, and thereby, the frequency of drainage of the water storage tank 120 by the user so as to discharge the condensed water may be reduced. That is, user convenience may be increased.

Referring to FIG. 14(a), the duct cover 830 may be coupled to the upper portion of the circulation flow path part 820, and the washing flow path parts 833 may be formed on the upper surface of the duct cover 830. The cover through hole 8313 may be formed at the downstream region of the washing flow path parts 833 so as to spray water flowing along the washing flow path parts 833 towards the first heat exchanger.

Although not shown in the drawings, the nozzle cover configured to shield the open upper surfaces of the washing flow path parts 833 so as to prevent water from scattering may be coupled to the upper surfaces of the washing flow path parts 833.

The flow path switch valve 870 may be coupled to the upstream ends of the washing flow path parts 833. The flow path switch valve 870 may selectively supply water to a plurality of flow paths formed in the washing flow path parts 833. The flow path switch valve 870 may receive water supplied from an external water supply source, and may then supply the received water to the washing flow path parts 833.

Further, condensed water generated during the drying cycle may be used to wash the first heat exchanger 910. The water collection cover 863 may be coupled to the upper surface of the water collection body 862 so as to prevent water in the water collection body 862 from scattering to the outside. The pump 861 configured to move water to the flow path switch valve 870 may be provided to pass through the water collection cover 863, and may be installed in the water collection body 862. Although not shown in the drawings, the pump 861 may be connected to the flow path switch valve 870 through a connection pipe, such as the hose.

When it is necessary to wash the first heat exchanger 910, the pump 861 may move condensed water stored in the water collection body 862 to the flow path switch valve 870, and the flow path switch valve 870 may supply the condensed water to the washing flow path parts 833 so as to wash the first heat exchanger 910.

FIG. 14(b) illustrates the base 800 from which the water collection cover 863 and the duct cover 830 are separated. The water collection body 862 may include cover support planes 8625 recessed from the upper surface of the base 800 so that the support bodies 8635 of the water collection cover 863 are placed thereon. Further, the water collection body 862 may include the hook holes 8626 provided such that the fastening hooks 8636 of the water collection cover 863 are inserted thereinto.

The support bodies 8635 may be placed on the cover support planes 8625, and may be firmly fixed thereto using separate fastening members. Further, the fastening hooks 8636 may be inserted into the hook holes 8626. The fastening hooks 8636 may be formed of an elastic material, and may be inserted into the hook holes 8626 so as to be firmly supported thereby.

The control box 190 configured to control operation of the laundry treating apparatus may be installed at the left side of the water collection part 860. Further, the compressor 930 configured to form the heat exchange unit 900 together with the first heat exchanger 910 and the second heat exchanger 920 so as to compress the refrigerant exchanging heat with air in the drum may be installed behind the water collection part 860.

The water collection cover 863 may be firmly coupled to the upper surface of the water collection body 862, and may prevent condensed water collected in the water collection body 862 from scattering towards the control box 190, the compressor 930 or the like. Therefore, failure of such an element by the condensed water may be prevented.

The first heat exchanger 910 and the second heat exchanger 920 may be accommodated and disposed in the circulation flow path part 820 from which the duct cover 830 is removed, in the forward and rearward directions. The water cover 826 configured to support the first heat exchanger 910 may be provided under the first heat exchanger 910. The detailed installed structure of the water cover 826 and the shape thereof will be described later.

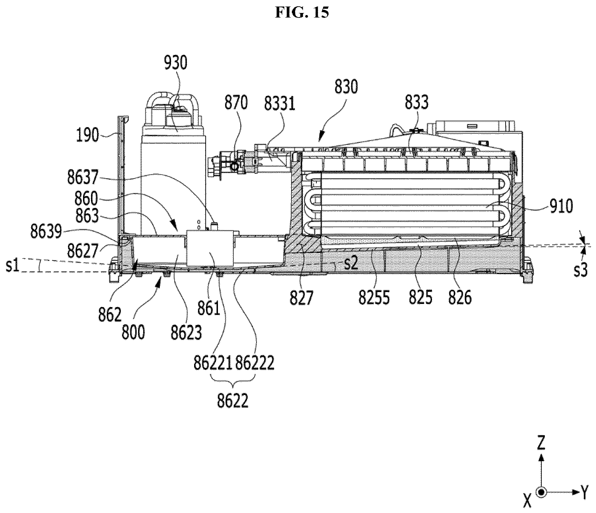

FIG. 15 is a cross-sectional view taken along line A-A of FIG. 14(a), as seen from the front.

Referring to FIG. 15, the water cover 826 configured to support the first heat exchanger 910 may be located under the first heat exchanger 910 located at the right side (in the Y-axis direction). The water cover 826 may be placed on the transfer duct 822, and may support the first heat exchanger 910 so that the first heat exchanger 910 is spaced apart from the bottom surface of the transfer duct 822.

The base 800 may include a collection guide part 825 configured to guide condensed water generated in the circulation flow path part 820 to the water collection part 860. The water may be generated when air in the drum is cooled in the first heat exchanger 910. The collection guide part 815 may be recessed from the bottom surface of the circulation flow path part 820.

The collection guide part 825 may be located below the water cover 826, and may guide the condensed water generated by the first heat exchanger 910 to the water collection part 860. The collection guide part 825 may be formed to be stepped downwards from the bottom surface of the transfer duct 822, and may thus form a flow path along which the condensed water flows. The collection guide part 825 may guide the condensed water to the water collection part 860.

The circulation flow path part 820 may include a water collection communication hole 827 through which the collection guide part 825 and the water collection part 860 communicate with each other. The condensed water flowing through the collection guide part 825 may pass through the water collection communication hole 827, and may be stored in the water collection body 862.

The water collection communication hole 827 may be provided to pass through one surface of the circulation flow path part 820 facing the water collection part 860, and the collection guide part 825 and the water collection part 860 may communicate with each other through the water collection communication hole 827.

In this figure, the water collection communication hole 827 is marked with oblique lines. The water collection communication hole 827 may actually be located behind the position illustrated in this figure (i.e., in the negative X-axis direction). The water collection communication hole 827 may be formed through the side wall of the transfer duct 822. The condensed water generated by the first heat exchanger 910 may flow along the collection guide part 825 inclined towards the water collection communication hole 827, may pass through the water collection communication hole 827, and may then be stored in the water collection body 862.

The collection guide part 825 may include a guide bottom surface 8255 configured to form the bottom surface on which the condensed water moves. The guide bottom surface 8255 may be provided to form a designated angle with the ground so that the condensed water on the guide bottom surface 8255 may be naturally moved towards the water collection communication hole 827. The angle between the lateral direction, i.e., the leftward and rightward directions, of the guide bottom surface 8255 and the ground may be defined as a third inclination angle s3. The third inclination angle s3 may be formed as an angle at which the distance between the guide bottom surface 8255 and the ground decreases as the distance from the water collection communication hole 827 decreases.

The flow rate of the condensed water may be adjusted by controlling the third inclination angle s3. When the flow rate of the condensed water is equal to or greater than a specific value, the condensed water is not capable of sweeping lint or foreign substances located on the guide bottom surface 8255 down. Therefore, the third inclination angle s3 may be provided as a designated angle at which the condensed water is capable of sweeping lint or foreign substances down.

The water collection body 862 may include a water collection bottom surface 8622 configured to form the bottom surface of the space in which the condensed water is collected, and a water collection side surface 8623 configured to form the side surface of the space. The water collection bottom surface 8622 may be provided at a lower position than the collection guide part 825. Therefore, the condensed water may be collected on the water collection bottom surface 8622 by gravity.

The water collection body 862 may include the water collection side surface 8623 configured to form the side surface of the space in which the condensed water is collected. The water collection side surface 8623 may connect the water collection bottom surface 8622 which is recessed from the base 800, to the base 800.

The water collection bottom surface 8622 may be inclined towards a part thereof facing the pump. The water collection bottom surface 8622 may include an inflow surface 86221 configured to face the pump, and a guide surface 86222 configured to extend from the inflow surface 86221 towards the water collection side surface 8623.

The inflow surface 86221 may be flat, and the guide surface 86222 may be inclined. Here, a specific surface which is flat may indicate that the specific surface has an angle to maintain the stationary state of liquid located on the specific surface.

That is to say, the inflow surface 86221 may be formed parallel to the ground at the center of the water collection bottom surface 8622, and the guide surface 86222 configured to connect the inflow surface 86221 to the water collection side surface 8623 may be provided such that the distance between the guide surface 86222 and the ground is increased in the direction from the inflow surface 86221 to the water collection side surface 8623.

In other words, the inflow surface 86221 and the guide surface 86222 may be disposed with designated inclinations. As seen from the front, the guide surface 86222 extending leftwards from the inflow surface 86221 may be inclined from the inflow surface 86222 at a first inclination angle s1, and the guide surface 86222 extending rightwards from the inflow surface 86221 may be inclined from the inflow surface 86222 at a second inclination angle s2.

The first inclination angle s1 and the second inclination angle s2 may be the same. However, the present disclosure is not limited thereto, and the first inclination angle s1 and the second inclination angle s2 may be designed to be specific different angles at which water accommodated in the water collection body 862 may more smoothly flow.

The third inclination angle s3 may be equal to or less than the first inclination angle s1 and the second inclination angle s2. The condensed water on the collection guide part 825 may have an initial flow rate due to the flow of air on the circulation flow path part 820. Therefore, when the third inclination angle s3 is equal to or greater than a specific value, the flow rate of the condensed water may be excessively increased, and thus, the condensed water is not moved towards the water collection communication hole 827, and may be moved to the side surface of the second heat exchanger. That is, the condensed water does not move along the collection guide part 825, and may overflow to the outside. Therefore, the third inclination angle s3 may be less than the first inclination angle s1 and the second inclination angle s2. However, overflow of the condensed water may be prevented using various methods other than control of the third inclination angle s3.

Relationships among the collection guide part 825, the water collection communication hole 827 and the water collection body 862 will be described later.

The pump 861 may be accommodated in the water collection cover 863 which shields the open upper surface of the water collection body 862. Referring to FIG. 13, the pump 861 is accommodated in the pump installation part 8634. When the condensed water is stored in the water collection body 862, the condensed water stagnant in the water collection body 862 for a long time may be contaminated, and the contaminated water may generate odor or algal blooms. In order to prevent such a problem, the pump 861 may discharge water collected in the water collection body 862 as much as possible so as to minimize the amount of residual water.

In order to normally operate the pump 861, the pump 861 should be spaced apart from the water collection bottom surface 8622 by a designated distance or more. However, when the pump 861 is spaced apart from the water collection bottom surface 8622, water accommodated between the pump 861 and the water collection bottom surface 8622 may remain. Therefore, in order to minimize the amount of residual water between the pump 861 and the water collection bottom surface 8622 while spacing the pump 861 apart from the water collection bottom surface 8622, the water collection bottom surface 8622 may be inclined.

When the water collection bottom surface 8622 is provided to be flat without any inclination, water equal to a volume acquired by multiplying the area of the water collection bottom surface 8622 by the distance between the water collection bottom surface 8622 and the pump 861 may remain in the water collection body 862. On the other hand, when the water collection bottom surface 8622 includes the inflow surface 86221 and the guide surface 86222 and is provided to be inclined, water may be concentrated on the inflow surface 86221, and thus, a small amount of water may remain compared to the case in which the water collection bottom surface 8622 is provided to be flat.

That is, when the guide surface 86222 extends from the water collection side surface 8623 to the inflow surface 86221 and thus the distance from the ground is reduced, generation of odor or algal blooms due to water remaining in the water collection body 862 may be prevented.

The flow path switch valve 870 may be coupled to guide flow path parts 8331 protruding from the side surface of the duct cover 830. The guide flow path parts 8331 may extend from the upstream ends of the washing flow path parts 833. The flow path switch valve 870 may be coupled to the guide flow paths 8331, and may shorten a process compared to coupling of the washing flow path parts 833 to the flow path switch valve 870 by rubber hoses, and may prevent water leakage between the flow path switch valve 870 and the washing flow path parts 833.

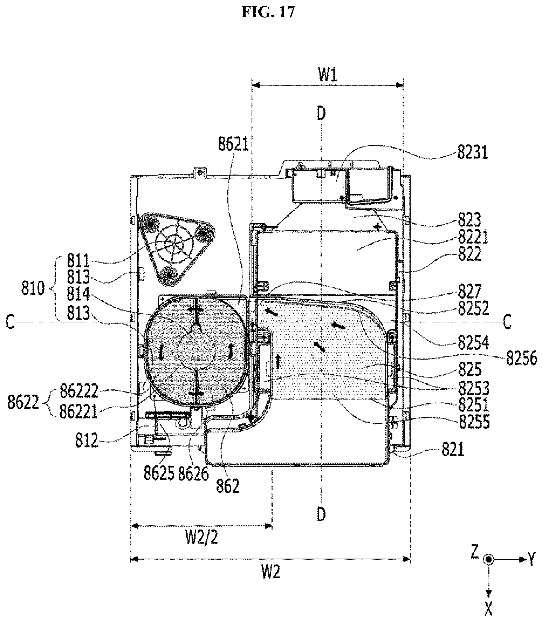

FIGS. 16 and 17 are a perspective view and a top view illustrating the base from which all the elements installed on the base are removed.

Referring to FIGS. 16 and 17, the base 800 may include the circulation flow path part 820 provided on one side of the base 800 so as to circulate air in the drum therethrough, and the device installation part 810 provided on the other side of the base 800 so as to provide the space in which the devices required to operate the laundry treating apparatus are installed, as described above.

The base 800 may include the water collection part 860 provided to communicate with the circulation flow path part 820 so as to collect condensed water generated in the circulation flow path part 820. The water collection part 860 may include the water collection body 862 configured to form the space in which water is stored. The water collection body 862 may be recessed downwards from the base 800. The water collection bottom surface 8622 configured to form the water collection surface of the water collection body 862 in which water is stored may be recessed downwards from the device installation part 810. The water collection side surface 8623 configured to form the side wall of the water collection body 862 may connect the water collection bottom surface 8622 which is recessed from the base 800, to the base 800.

The water collection bottom surface 8622 may include the inflow surface 86221 formed on one surface thereof facing the pump 861 parallel to the ground, and the guide surface 86222 configured to extend from the inflow surface 86221 towards the water collection side surface 8623 so as to be inclined upwards.

The condensed water entering the water collection body 862 along the guide surface 86222 may generate a rotating flow in a direction represented by arrows shown in these figures. Since the rotating flow is generated using the guide surface 86222, foreign substances, such as lint, included in the condensed water may not be moved to the inflow surface 86221 by centrifugal force, and may be accumulated adjacent to the water collection side surface 8623. When the foreign substances reach the inflow surface 86221, the foreign substances enter the pump 861 and may thus damage the pump 861. Therefore, the guide surface 86222 may prevent the foreign substances from entering the pump 861 by generating the above-described flow of the condensed water.

The control box 190 configured to control operation of the laundry treating apparatus may be installed at the side of the water collection part 860 away from the circulation flow path part 820. The base 800 includes the control box installation part 813 configured to provide the space in which the control box 190 is installed. The control box installation part 813 may include recesses formed in the device installation part 810. The control box 190 may be coupled to the base 800 by fitting into the recesses provided in the control box installation part 813.

The control box installation part 813 may indicate the entirety of one surface of the base 800 coming into contact with the control box 190. Further, the control box installation part 813 may indicate one surface of the device installation part 810 facing the control box 190.

That is, a plane of projection of the control box 190 onto the base 800 when the control box 190 installed on the base 800 is projected onto the base 800 from the top may be defined as the control box installation part 813.

The water collection part 860 is disposed between the control box installation part 813 and the circulation flow path part 820. Further, the control box installation part 813 may be disposed to overlap the water collection part 860 in the leftward and rightward directions.

Since the water collection part 860 may be spaced apart from the circulation flow path part 820, when the water collection part 860 is disposed between the circulation flow path part 820 and the control box installation part 813, the space on the base 800 rather than the space on which the circulation flow path part 820 is disposed may be more effectively used.

When the control box 190 is exposed to an excessive amount of moisture, an error or failure of the control box 190 may occur. Therefore, the control box installation part 813 may be disposed to be spaced apart from the circulation flow path part 820 in which wet steam flows, and thereby, stability of the control box 190 may be increased.

That is, damage to the control box 190 may be prevented by disposing the water collection part 860 between the circulation flow path part 820 and the control box installation part 813.

Further, the control box installation part 813 may be located such that at least a portion thereof overlaps the collection guide part 825 in the leftward and rightward directions. Further, the control box installation part 813 may be located such that at least a portion thereof overlaps the water collection communication hole 827 in the leftward and rightward directions.

When the control box installation part 813 is located to overlap the collection guide part 825 or the water collection communication hole 827 in the leftward and rightward directions, the control box installation part 813 may be located adjacent to the water collection part 860 connected to the water collection communication hole 827 so as to collect water. Further, when the control box installation part 813 is located adjacent to the water collection part 860, the control box installation part 813 may be located adjacent to the pump.

The control box 190 may be connected to the pump through the control wire, and may thus control the pump. Therefore, the control box 190 may be easily connected to the pump.

The control box 190 may include coupling protrusions protruding downwards from the lower end thereof, and the coupling protrusions may be fixedly inserted into the recesses provided in the control box installation part 813. However, the present disclosure is not limited thereto, and the control box 190 may be installed in the control box installation parts 813 by various methods through which the control box 190 may be firmly fixed to the control box installation parts 813.

The cover support planes 8625 and the hook holes 8626 may be formed around the circumference of the water collection side surface 8623 so as to couple the water collection cover to the water collection body. The coupling structure between the water collection cover and the water collection body has already been described above with reference to FIG. 13.

The base 800 may include a compressor installation part 811 configured to provide a space in which the compressor is mounted. The device installation part 810 may include the compressor installation part 811.

The compressor installation part 811 may be disposed to overlap the water collection cover 863 in the forward and rearward directions. Further, the compressor installation part 811 may be located behind the water collection cover 863. The compressor installation part 811 may be recessed downwards from the device installation part 810. The compressor installation part 811 may be provided to support the bottom surface of the compressor.

The compressor installation part 811 may be located to overlap the water collection part 860 in the forward and rearward directions. In the conventional dryer, the motor is installed on the base 800, and thus, the space on the base 800 is narrow. Therefore, the water collection part 860 should be provided between the compressor installation part 811 and the circulation flow path part 820. However, the space between the compressor installation part 811 and the circulation flow path part 820 is narrow, and thus, the amount of water collected by the water collection body is not sufficient.

However, in the laundry treating apparatus according to one embodiment of the present disclosure, the motor is installed behind the drum 200, and thus, the space on the base 800 which was conventionally occupied by the motor may be used. The water collection part 860 and the compressor installation part 811 may be disposed in the forward and rearward directions. Therefore, the volume of the water collection body 862 may be expanded, and the water collection body 862 may store a larger amount of condensed water. Therefore, the frequency of drainage of the condensed water by a user may be reduced. Accordingly, user convenience may be increased.

Further, the compressor installation part 811 may be located to overlap the second heat exchanger in the leftward and rightward directions. The refrigerant compressed by the compressor may be supplied to the second heat exchanger, and may heat the circulation flow path part 820. When the compressor installation part 811 is located to overlap the second heat exchanger in the leftward and rightward directions, the distance between the two elements is reduced, and generation of heat loss of the refrigerant moving from the compressor to the second heat exchanger may be prevented. Therefore, heat exchange efficiency may be increased.

Further, the water collection part 860 may be located to overlap the first heat exchanger in the leftward and rightward directions. In general, condensed water is generated by the first heat exchanger. Therefore, when the water collection part 860 is located to overlap the first heat exchanger in the leftward and rightward directions, the flow path along which the condensed water generated by the first heat exchanger moves may be shortened. Therefore, generation of odor or algal blooms due to residual water may be prevented.

The compressor installation part 811 may be located behind the water collection part 860. The compressor may generate noise during operation. Therefore, when the compressor installation part 811 is disposed in the rear portion of the laundry treating apparatus, transfer of noise to a user may be prevented. That is, when the compressor installation part 811 is disposed in the rear portion of the laundry treating apparatus, user convenience may be improved.

Further, when the water collection part 860 is disposed in the front portion of the laundry treating apparatus, the distance between the water collection part 860 and the first heat exchanger may be reduced. The condensed water collected in the water collection body 862 may be used to wash the first heat exchanger and, when the distance between the first heat exchanger and the water collection part 860 is reduced, the length of a hose connecting the two elements may be shortened.

The transfer duct 822 may include a transfer bottom surface 8221 provided to face the second heat exchanger. The transfer bottom surface 8221 may be provided to support the second heat exchanger.

The base 800 may further include the collection guide part 825 formed on the bottom surface of the circulation flow path part 820 facing the first heat exchanger so as to guide the condensed water to the water collection part 860, and the compressor installation part 811 may be located behind the collection guide part 825.

The collection guide part 825 may perform a function of preventing the condensed water generated by the first heat exchanger 910 installed thereon from remaining in the lower portion thereof, and guiding the condensed water to the water collection part 860. The collection guide part 825 may extend rearwards from a spot at which the first heat exchanger 910 is installed to a spot located between the first heat exchanger 910 and the second heat exchanger 920. The collection guide part 825 may be disposed in front of the transfer bottom surface 8221.

The collection guide part 825 may include a recessed stepped portion 8251 provided to prevent the condensed water from overflowing towards the inflow duct 821.

The recessed stepped portion 8251 may connect the inflow duct 821 to the bottom surface of the transfer duct 822 stepwise. The recessed stepped portion 8251 may be provided at the front portion of the collection guide part 825.

The recessed stepped portion 8251 may indicate a portion in which the height of the bottom surface extending along the inflow duct 821 is drastically decreased. The collection guide part 825 may extend rearwards from the recessed stepped portion 8251.

The collection guide part 825 may include an extending stepped portion 8252 configured to prevent the condensed water from overflowing towards the second heat exchanger 920. The extending stepped portion 8252 may be located between the first heat exchanger 910 and the second heat exchanger 920. The extending stepped portion 8252 may indicate a portion in which the height of the bottom surface of the transfer duct 822 is increased stepwise.

Further, the extending stepped portion 8252 may have a curved surface so as to guide the flow of the condensed water flowing therein towards the water collection part 860 in one direction.

The circulation flow path part 820 and the water collection part 860 may communicate with each other through the water collection communication hole 827. Further, the water collection communication hole 827 may guide the condensed water moving along the collection guide part 825 to the water collection body 862. That is, the water collection communication hole 827 may spatially connect the circulation flow path part 820 and the water collection body 862.

The water collection communication hole 827 may be located in front of the second heat exchanger 920. When the water collection communication hole 827 is located in front of the second heat exchanger, contact of the condensed water moving along the collection guide part 825 with the second heat exchanger 920 may be prevented. Further, the condensed water may be guided to the water collection part 860 while being spaced apart from the second heat exchanger 920.

Therefore, reduction in heat exchange efficiency of the second heat exchanger 920 due to evaporation of the condensed water heated by the second heat exchanger 920 may be prevented. Therefore, drying efficiency may be improved.

Referring to FIG. 17, the extending stepped portion 8252 may be provided to be inclined so as to naturally transfer water, moving along the collection guide part 825, towards the water collection communication hole 827. Further, the extending stepped portion 8252 may have a curved surface.

That is to say, the extending stepped portion 8252 may be provided such that the distance between the extending stepped portion 8252 and the recessed stepped portion 8251 increases as the distance from the water collection communication hole 827 decreases. The extending stepped portion 8252 is not limited to the shape which is shown in the figures or described above, and may be provided in various shapes.

The collection guide part 825 may include the guide bottom surface 8255 configured to form the bottom surface on which the condensed water moves. The guide bottom surface 8255 may connect the recessed stepped portion 8251 and the extending stepped portion 8252 to each other. The guide bottom surface 8255 may be provided such that the distance between the guide bottom surface 8255 and the ground is less than the distance between the bottom surface of the inflow duct 821 and the ground. Therefore, overflow of the condensed water transferred on the guide bottom surface 8255 towards the inflow duct 821 may be prevented.

The collection guide part 825 may further include a guide partition 8256 configured to prevent the condensed water from overflowing towards the second heat exchanger 920. The guide partition 8256 may protrude upwards from the guide bottom surface 8255. The guide partition 8256 may serve as a partition which prevents the condensed water flowing on the guide bottom surface 8255 from overflowing towards the second heat exchanger 920 by the volume of air circulating in the circulation flow path part 820.

The second heat exchanger 920 functions to heat circulating air and, when the condensed water overflows towards the second heat exchanger 920, the second heat exchanger 920 may also heat the condensed water, and thus, the condensed water may be evaporated. However, since air heated by the second heat exchanger 920 is supplied to the drum so as to dry laundry in the drum, when the condensed water is evaporated and thus the humidity of air supplied to the drum is increased, drying efficiency may be reduced. Further, when the second heat exchanger 920 configured to heat air supplied to the drum exchanges heat with the condensed water, heat exchange efficiency may also be reduced.

The guide partition 8256 may be formed parallel to the extending stepped portion 8252. That is, the guide partition 8256 may serve to assist the condensed water overflow prevention function performed by the extending stepped portion 8252. The guide partition 8255 may be provided to protrude from the guide bottom surface 8255 so as to be spaced apart from the extending stepped portion 8252 by a designated distance. However, in order to assist the condensed water overflow prevention function, the guide partition 8256 may be provided close to the extending stepped portion 8252.

The guide partition 8256 and the extending stepped portion 8252 may prevent the condensed water from overflowing to the outside of the collection guide part 825, and thereby, heat exchange efficiency and laundry drying efficiency of the laundry treating apparatus may be improved. Although the figures show one guide partition 8256, the present disclosure is not limited thereto and a plurality of guide partitions may be provided.

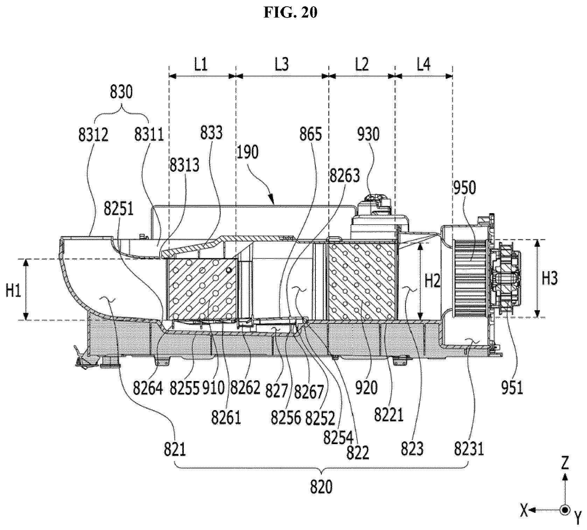

Further, the guide partition 8256 and the extending stepped portion 8252 may form an accommodation surface. A cover partition 8267 (with reference to FIG. 20) of the water cover 826, which will be described later, may be inserted into the accommodation surface. The cover partition 8267 may be inserted into a space between the guide partition 8256 and the extending stepped portion 8252, and may thus couple the water cover 826 to the collection guide part 825.

The collection guide part 825 serves to guide the condensed water to the water collection part 860. However, the side wall of the transfer duct 822 may be located between the water collection body 862 and the collection guide part 825. Therefore, the collection communication hole 827 through which the collection guide part 825 and the water collection body 862 communicate with each other may be formed through the lower portion of the side wall of the transfer duct 822.

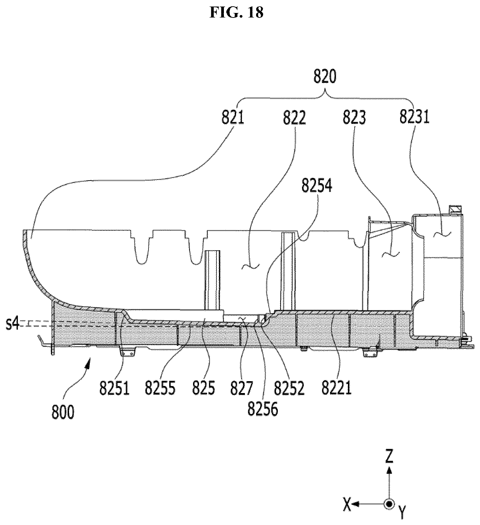

The guide bottom surface 8255 may be provided to have designated inclination angles s3 and s4 (with reference to FIGS. 15 and 18) so as to allow the condensed water to flow towards the collection communication hole 827 by gravity. The guide bottom surface 8255 may be provided to have a gradient in the forward and rearward directions such that the height thereof from the ground decreases in a direction from the recessed stepped portion 8251 to the extending stepped portion 8252. Further, as shown in the figures, the guide bottom surface 8255 may be provided to have a gradient in the leftward and rightward directions such that the height thereof from the ground decreases in a direction closer to the water collection part 860. In other words, the guide bottom surface 8255 may be provided such that the distance between the guide bottom surface 8255 and the ground at the water collection communication hole 827 is the minimum and the distance between the guide bottom surface 8255 and the ground increases as the distance from the water collection communication hole 827 increases.

When the guide bottom surface 8255 is provided to have the above-described gradients, the condensed water generated by the first heat exchanger may naturally flow towards the water collection communication hole 827 in the direction represented by arrows shown in these figures, and thus, generation of various problems, such as odor and reduction in drying efficiency, due to residual water on the guide bottom surface 8255 may be prevented.

The water collection body 862 may include a connection flow path 8621 configured to connect the space in which water is stored to the water collection communication hole 827. The connection flow path 8621 may be provided to be stepped upwards from the water collection bottom surface 8622. The connection flow path 8621 may guide the condensed water having passed through the water collection communication hole 827 to the water collection body 862 in the circumferential direction thereof.

The connection flow path 8621 may be provided outside the circumference of the water collection bottom surface 8622. Therefore, the connection flow path 8621 may connect the water collection bottom surface 8622 to the water collection communication hole 827 to each other stepwise. However, the present disclosure is not limited thereto, and the connection flow path 8621 may be provided as an inclined plane configured to connect the water collection communication hole 827 to the water collection bottom surface 8622.

The connection flow path 8621 may prevent the condensed water stored in the water collection body 862 from overflowing towards the collection guide part 825 when the pump is operated. The connection flow path 8621 may be provided as a stepped portion so as to be located above the pump, and may thus prevent overflow of the condensed water.

The compressor installation part 811 may be located behind the water collection communication hole 827. Since the compressor installation part 811 is located behind the water collection communication hole 827, the distance between the collection guide part 825 and the water collection part 860 may be reduced. Therefore, generation of odor or algal blooms due to the condensed water remaining between the collection guide part 825 and the water collection part 860 may be prevented.

Since the water collection part 860 is located between the inflow duct 821 and the compressor installation part 811, the distance between the transfer duct 822 in which the condensed water is generated and the water collection part 860 may be reduced, the water collection part 860 may be disposed adjacent to the spot at which the condensed water is generated, and thus, generation of problems due to residual condensed water may be prevented.

The compressor installation part 811 may be located to be spaced apart from the transfer duct 822 in the leftward and rightward directions, and may be located to be spaced apart from the water collection part 860 in the direction of extension of the transfer duct 822.

Since the transfer duct 822 extends in the forward and rearward directions of the laundry treating apparatus, when the water collection part 860 is disposed to be spaced apart from the transfer duct in the width direction and the compressor installation part 811 is disposed to be spaced apart from the water collection part 860 in the forward and rearward directions, the space on the base 800 may be effectively used.

The compressor installation part 811 may be located such that at least a portion thereof overlaps the discharge duct 823 in the leftward and rightward directions. Since the discharge duct 823 is disposed at the rear portion of the circulation flow path part 823, when the compressor installation part 811 overlaps the discharge duct 823 in the leftward and rightward directions, the compressor installation part 811 may also be located at the rear portion of the base 800. Therefore, the water collection part 860 may be located in front of the compressor installation part 811, the space occupied by the water collection body 862 may be expanded, and thus, a larger amount of the condensed water may be stored.

The laundry treating apparatus according to one embodiment of the present disclosure may further include the front plate 410 (with reference to FIG. 5), and the water collection part 860 may be located between the front plate 410 and the compressor installation part 811.

The front plate 410 may be located at the front portion of the base 800 and the compressor installation part 811 may be located at the rear portion of the base 800, and thus, when the water collection part 860 is located between the front plate 410 and the compressor installation part 811, the condensed water accommodating capacity of the water collection body 862 may be increased.

The cabinet 100 may further include the left side panel 141 out of the side panels 140 configured to form the side surfaces of the cabinet 100141 (with reference to FIG. 12), and the compressor installation part 811 may be located between the left side panel 141 and the circulation flow path part 820.

Further, the control box 190 configured to control the motor 500 may be installed on the base 800 between the left side panel 141 and the water collection part 860, and at least a portion of the compressor installation part 811 may be located behind the control box 190.

In the conventional laundry treating apparatus, the motor 500 is installed on the base 800, and thus, the space in which the control box 190 is installed is not secured. Therefore, the control box 190 should be located in the upper portion of the cabinet 100. However, in the laundry treating apparatus according to one embodiment of the present disclosure, the motor 500 is located behind the drum 200 separately from the base 800, and thus, the control box 190 may be located on the base 800. Therefore, electric wires for connecting the control box 190 to the compressor 930, the motor 500, etc. may be fixed to the base 800, and thus, problems, such as short circuit of the electric wires due to interference with other elements, may be prevented during operation of the laundry treating apparatus.

Further, the rear plate 420 (with reference to FIG. 8) located between the drum and the motor 500 so as to guide air discharged from the circulation flow path part 820 to the drum may be installed on the base 800. The compressor installation part 811 may be disposed between the water collection part 860 and the rear plate 420.

The reducer 600 connected to the motor 500 so as to reduce the power generated by the motor 500 to rotate the drum may be fixed to the rear surface of the rear plate 420, and the motor 500 may be fixed to the reducer 600 so as to be spaced apart from the rear plate 420.

Since the motor 500 is fixed to the rear plate 420, the water collection part 860 and the compressor installation part 811 may be disposed in the forward and rearward directions, as described above, and thus, the amount of the condensed water accommodated in the water collection body 862 may be increased.

Further, since the compressor installation part 811 is disposed between the water collection part 860 and the rear plate 420, the amount of the condensed water accommodated in the water collection body 862 may be increased.

The control box installation part 813 may be located such that at least a portion thereof overlaps the compressor installation part 811 in the leftward and rightward directions. Further, the control box installation part 813 may be disposed in front of the compressor installation part 811.

When the control box installation part 813 and the compressor installation part 811 are disposed to overlap each other in the leftward and rightward directions, the space on the base 800 may be more effectively used.

Further, the compressor 930 may be connected to the control box 190 so as to be controlled thereby. Therefore, a control wire for connecting the control box 190 to the compressor 930 may be shortened, noise may be reduced, and thus, control reliability may be improved.

The control box installation part 813 may be located between the left side panel 141 (with reference to FIG. 12) and the circulation flow path part 820. Further, the control box installation part 813 may be located between the water collection part 860 and the left side panel 141.

The control box 190 (with reference to FIG. 12) may be installed parallel to the left side panel 141 in the control box installation part 813. The control box 190 may be installed in the control box installation part 813 so as to come into contact with the left side panel 141.

When the control box installation part 813 is located between the circulation flow path part 820 and the left side panel 141, the space on the base 800 may be more effectively used, and thus, efficiency in space utilization may be improved. Further, when the control box installation part 813 is located between the water collection body 862 and the left side panel 141, a very narrow space formed between the water collection part 860 and the left side panel 141 may be used. Therefore, efficiency in space utilization may be improved.

Further, the control box 190 may be provided as a PCB substrate having a thin thickness, and, when the control box 190 is installed parallel to the left side panel 141 in the control box installation part 813, the space located between the water collection body 862 and the left side panel 141 may be used.

When the control box 190 comes into contact with the left side panel 141, the control box 190 may be supported by the left side panel 141. Therefore, release of the control box 190 from the control box installation part 813 due to vibration may be prevented.

The water cover 826 may be coupled to the open upper surface of the connection guide part 825, and the water cover 826 may support the first heat exchanger 910 so that the first exchanger 910 is spaced apart from the guide bottom surface 8255. The water cover 826 may also be coupled to the open upper surface of the connection guide part 825 so as to be spaced apart the guide bottom surface 8255, and inflow support planes 8253 configured to support the water cover 826 may be formed at the left and right sides of the front portion of the collection guide part 825. The inflow support planes 8253 may be provided on the side walls of the transfer duct 822, and may be recessed so that the water cover 826 is firmly supported by the inflow support planes 8253.

A transfer support plane 8254 may be provided behind the collection guide part 825. The transfer support plane 8254 may extend rearwards from the upper end of the guide partition 8256, and may be stepped downwards from the bottom surface of the transfer duct 822 in which the second heat exchanger 920 is installed, in consideration of the thickness of the water cover 826.

The front and rear portions of the water cover 826 may be supported by the inflow support planes 8253 and the transfer support plane 8254, and the water cover 826 may support the first heat exchanger 910 so that the first heat exchanger 910 is spaced apart from the guide bottom surface 8255. A detailed structure of the water cover 826 coupled to the inflow support planes 8253 and the transfer support plane 8254 will be described later.

The conventional dryer is limited in that the width of the transfer duct is less than half of the width of the base due to the space occupied by the driving unit. However, in the laundry treating apparatus according to one embodiment of the present disclosure, the driving unit is located behind the drum, the space which was occupied by the driving unit is usable, and thus, the width W1 of the transfer duct 822 in which air transfers may be expanded. Therefore, the transfer duct 822 may be provided such that the width W1 thereof is greater than or equal to half of the width W2 of the base 800.

The width W1 of the transfer duct 822 may indicate a distance between the side walls of the transfer duct 822 which extend upwards from the base 800 to form the side surfaces of the transfer duct 822. The width W1 of the transfer duct 822 may indicate the distance between the side walls thereof.

The width W1 of the transfer duct 822 may be understood as the width of the transfer duct 822 including the thicknesses of the side walls provided at both sides of the transfer duct 822. That is, the width W1 of the transfer duct 822 may indicate the maximum distance between the outer surface of the right side wall and the outer surface of the left side wall of the transfer duct 822. Further, the width W2 of the base 800 may indicate a distance between the left side surface and the right side surface of the base 800.

The width W1 of the transfer duct 822 is expanded, and thus, the flow rate of air passing through the transfer duct 822 per unit time may be increased. Therefore, air in the drum may be circulated at a higher velocity, and may thus shorten a drying time.

Further, as the width W1 of the transfer duct 822 is expanded, the widths of the first heat exchanger and the second heat exchanger installed in the transfer duct 822 may also be increased. Therefore, air transferred along the transfer duct 822 may be more rapidly dehumidified by the first heat exchanger, and may be more rapidly heated by the second heat exchanger.

That is to say, the transfer duct 822 is provided such that the width W1 thereof is greater than or equal to half of the width W2 of the base 800, and thus, the widths of the first heat exchanger and the second heat exchanger may also be increased, and a larger amount of air may be dehumidified, heated and supplied to the drum. Therefore, the drying time may be shortened, and drying efficiency may be increased.

The transfer duct 822 may be provided such that the width W1 thereof is greater than or equal to half of the width W3 of the front plate 410 (with reference to FIG. 5). Further, the transfer duct 822 may be provided such that the width W1 thereof is greater than or equal to half of the diameter W4 of the drum 200 (with reference to FIG. 5).

As described above, since the driving unit is located behind the drum 200 so as to be spaced apart from the base 800, the transfer duct 822 may be provided such that the width W1 thereof is greater than half of the width W3 of the front plate 410 or half of the diameter W4 of the drum 200.

Such an increase in the width W1 of the transfer duct 822 may increase the flow rate of circulating air, and may shorten a time taken to dry laundry.

As described above, in the conventional dryer, there is a limit in expanding the width of the transfer duct because of the space occupied by the driving unit. Therefore, it is difficult to dispose the transfer duct so as to overlap the center of rotation of the drum in the height direction.

However, in the laundry treating apparatus according to one embodiment of the present disclosure, the motor 500 is disposed in the rear portion of the laundry treating apparatus so as to be spaced apart from the base 800, and thus, the transfer duct 822 may be located to overlap the center of rotation of the drum 200 on the first axis M1 (with reference to FIG. 5) in the height direction (in the Z-axis direction).

The transfer duct 822 overlaps the center of rotation of the drum 200 in the height direction, and thus, the width W1 of the transfer duct 822 may be expanded. Therefore, the flow rate of air passing through the transfer duct 822 per unit time may be increased. Therefore, air in the drum may be circulated at a higher velocity, and thus, the drying time may be shortened.

Further, the transfer duct 822 overlaps the center of rotation of the drum 200 in the height direction, and thus, air transferred along the circulation flow path part 820 may transfer close to the center of rotation of the drum 200. Therefore, air discharged from the circulation flow path part 820 may be discharged close to the center of rotation of the drum 200. Therefore, hot air discharged from the circulation flow path part 820 may be more uniformly supplied to the drum 200, compared to the case in which air discharged from the circulation flow path part 820 is discharged away from the center of rotation of the drum 200.

Further, the first heat exchanger 910 (with reference to FIG. 13) or the second heat exchanger 920 (with reference to FIG. 14) may be located to overlap the center of rotation of the drum 200 in the height direction. When the transfer duct 822 is located to overlap the center of rotation of the drum 200 on the first axis M1, as described above, the first heat exchanger 910 and the second heat exchanger 920 located in the transfer duct 822 may be disposed to overlap the center of rotation of the drum 200 on the first axis M1.

The widths of the first heat exchanger 910 and the second heat exchanger 920 may be increased, and thereby, the amount of air dehumidified or heated per unit time may be increased. Therefore, the drying time may be shortened and drying efficiency may be improved.

FIG. 18 is a cross-sectional view taken along line D-D of FIG. 17, as seen from the right.

Referring to FIG. 18, the transfer duct 822 may include the guide bottom surface 8255 recessed downwards so as to guide the condensed water to the water collection part 860. The collection guide part 825 may include the recessed stepped portion 8251 configured to form the front surface thereof.

Further, the bottom surface of the include duct 821 and the guide bottom surface 8255 may be connected by the recessed stepped portion 8251. A portion of the bottom surface of the transfer duct 822, which is recessed downwards so that the condensed water is transferred thereon, may be defined as the bottom guide surface 8255.

The guide bottom surface 8255 may extend rearwards from the recessed stepped portion 8251, and may be connected to the bottom surface of the transfer duct 822 facing the second heat exchanger 920 stepwise. That is, the guide bottom surface 8255 may be disposed at a lower position than the transfer bottom surface 8221. The collection guide part 825 may include the extending stepped portion 8252 configured to form the rear surface thereof. The guide bottom surface 8255 may be connected to the transfer bottom surface 8221 stepwise by the extending stepped portion 8252.

In other words, the guide bottom surface 8255 may be provided at a lower position than the bottom surface of the inflow duct 821 and the transfer bottom surface 8221. That is, among the guide bottom surface 8255, the bottom surface of the inflow duct 821 and the transfer bottom surface 8221, the guide bottom surface 8255 may be located closest to the ground.

The extending stepped portion 8252 and the recessed stepped portion 8251 may form the space of the collection guide part 825 in which the condensed water is accommodated.

The guide bottom surface 8255 may form the bottom surface of the collection guide part 825 which guides the condensed water generated by the first heat exchanger to the water collection part 860. The collection guide part 825 may include the water collection communication hole 827 formed through the side wall of the movement duct 822 so as to allow the circulation flow path part 820 and the water collection part 860 to communicate with each other. The water collection communication hole 827 may be provided between the recessed stepped portion 8251 and the extending stepped portion 8252.

Further, the guide partition 8256 configured to protrude upwards from the guide bottom surface 8255 so as to prevent the condensed water flowing on the guide bottom surface 8255 from overflowing towards the spot at which the second heat exchanger is installed may be provided between the recessed stepped portion 8251 and the extending stepped portion 8252.

The guide partition 8256 may be spaced apart from the extending stepped portion 8252 by a designated distance, and thereby, overflow of the condensed water flowing through the collection guide part 825 towards the second heat exchanger may be primarily prevented by the guide partition 8256, and may then be secondarily prevented by the extending stepped portion 8252.

The guide bottom surface 8255 may be provided such that the distance between the guide bottom surface 8255 and the ground decreases in the direction from the recessed stepped portion 8251 to the extending stepped portion 8252, as shown in this figure. That is, the guide bottom surface 8255 may be inclined downwards towards the water collection communication hole 827. In other words, the guide bottom surface 8255 may have a gradient so as to guide the condensed water towards the water collection communication hole 827 by gravity. An inclination formed between the guide bottom surface 8255 and the ground in the forward and rearward directions may be defined as a fourth inclination angle s4.

The transfer support plane 8254 connected to the bottom surface of the transfer duct 822 facing the second heat exchanger 920 stepwise may be formed at the upper end of the extending stepped portion 8252. The transfer support plane 8254 may support the water cover coupled to the upper portion of the collection guide part 825.

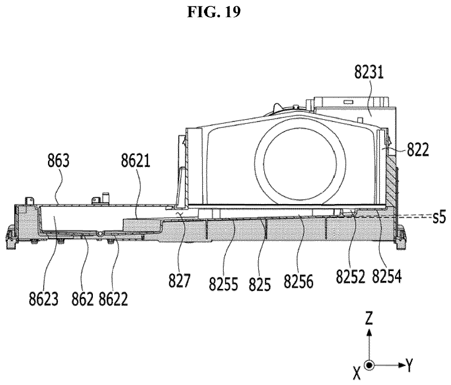

FIG. 19 is a cross-sectional view taken along line C-C of FIG. 17, as seen from the front.

Referring to FIG. 19, as described above, the circulation flow path part 820 may be provided on one side of the base 800, and the water collection part 860 configured to collect condensed water generated in the circulation flow path part 820 may be provided on the other side of the base 800. The water collection part 860 and the circulation flow path part 820 may communicate with each other by the water collection communication hole 827 formed through the side wall of the circulation flow path part 820.

The water collection body 862 may include the connection flow path 8621 configured to connect the water collection bottom surface 8622 to the water collection communication hole 827.

The collection guide part 825 configured to guide the condensed water generated by the first heat exchanger to the water collection part 860 may be formed on the bottom surface of the transfer duct 822. The guide bottom surface 8255 forming the bottom surface of the collection guide part 825 may be provided to have an inclination so as to transfer the condensed water to the water collection communication hole 827 by gravity.

The guide bottom surface 8255 may be provided such that the distance between the guide bottom surface 8255 and the ground decreases as the distance from the water collection communication hole 827 decreases. That is, the distance between the guide bottom surface 8255 and the ground may increases as the distance from the water collection communication hole 827 increases. In other words, the guide bottom surface 8255 may be inclined such that the height thereof decreases as the distance from the water collection communication hole 827 decreases, and owing to such a gradient, the condensed water on the guide bottom surface 8255 may be naturally transferred to the water collection communication hole 827, and the condensed water having passed through the water collection communication hole 827 may be stored in the water collection body 862.

Among inclinations formed between the guide bottom surface 8255 and the ground, an inclination formed between the guide bottom surface 8255 and the ground in the direction from the water collection guide part 825 to the water collection body 862 may be defined as a fifth inclination angle s5. That is, an inclination formed between the guide bottom surface 8255 and the ground in the width direction may be defined as the fifth inclination angle s5.

The fourth inclination angle s4, i.e., the inclination of the guide bottom surface 8255 in the forward and rearward direction defined in FIG. 18, and the fifth inclination angle s5 of the guide bottom surface 8255 may be provided as angles at which the condensed water flowing on the guide bottom surface 8255 may flow towards the water collection communication hole 827 without being stagnant at a specific position of the guide bottom surface 8255. For example, the fifth inclination angle s5 may be equal to the fourth inclination angle s4, or may be equal to or less than the fourth inclination angle s4.

The guide bottom surface 8255 may be connected parallel to the connection flow path 8621 through the water collection communication hole 827. The connection flow path 8621 may be provided to be stepped upwards from the circumference of the water collection bottom surface 8622 forming the bottom surface of the water collection body 862, and may be connected to the guide bottom surface 8255. The connection flow path 8621 may be inclined with respect to the ground in the same manner as the guide bottom surface 8255. Further, an inclination angle between the connection flow path 8621 and the ground may be equal to the fifth inclination angle s5.

That is, the guide bottom surface 8255 and the connection flow path 8621 may be connected into one surface through the water collection communication hole 827, and the water collection bottom surface 8622 may be stepped downwards from such a surface so as to store the condensed water. The water collection bottom surface 8622 may be disposed at a lower position than the guide bottom surface 8255.

Further, the connection flow path 8621 may be provided to come into contact with the water collection side surface 8623. That is, the connection flow path 8621 may be located between the water collection side surface 8623 and the water collection communication hole 827. Therefore, the connection flow path 8621 may guide the condensed water having entered through the water collection communication hole 827 so that the condensed water flows along the water collection side surface 8623.

The connection flow path 8621 may guide the condensed water having passed through the water collection communication hole 827 so that the condensed water does not directly fall to the water collection bottom surface 8622, and flows along the circumference of the water collection body 862 while passing through the upper surface of the connection flow path 8621. When the condensed water is accelerated in the circumferential direction of the water collection body 862 while passing over the connection flow path 8621, the condensed water may flow while rotating along the circumference of the water collection body 862.

When the condensed water flows while rotating along the circumference of the water collection body 862, foreign substances or lint included in the condensed water may be naturally accumulated on the side surface of the water collection body 862. The foreign substances are not moved to the center of the water collection body 862 provided with the pump installed therein, and are accumulated on the side surface of the water collection body 862 by the rotating flow, thereby being capable of preventing occurrence of an error in operation of the pump due to the foreign substances.

Further, when the pump is operated, the condensed water stored in the water collection body 862 may be transferred to the water collection communication hole 827 by centrifugal force, and, in this case, the connection flow path 8621 is stepped from the water collection bottom surface 8622 and may thus prevent the condensed water from flowing to the water collection communication hole 827.

In other words, the connection flow path 8621 may guide the condensed water entering the water collection body 862 through the water collection communication hole 827 so that the condensed water flows along the water collection side surface 8623, and may prevent the condensed water stored in the water collection body 862 from overflowing towards the water collection communication hole 827.

FIG. 20 is a cross-sectional view taken along line B-B of FIG. 14(a), as seen from the right. FIG. 20 illustrates the elements, such as the first heat exchanger, the second heat exchanger, the water cover, the duct cover, the compressor, etc., installed on the base and, when a description of FIG. 20 is given, FIGS. 14(a), 14(b), 15 and 18 will be referred to. Hereinafter, elements added in FIG. 20 will be mainly described.

In the conventional laundry treating apparatus, the water cover configured to support the first heat exchanger so that the first heat exchanger is spaced apart from the bottom surface of the circulation flow path part is located under the second heat exchanger, and may thus support the second heat exchanger also. Therefore, condensed water generated by the first heat exchanger may flow to the second heat exchanger, or may come into contact with the second heat exchanger. Thereby, the condensed water may be evaporated again, and may then enter the inside of the drum.

However, it is necessary to maintain the lower moisture content of air supplied to the inside of the drum in order to improve drying efficiency of laundry and, in the conventional laundry treating apparatus, from this point of view, heat exchange efficiency of the heat exchange unit is reduced and drying efficiency of the entirety of the laundry treating apparatus is reduced.

Referring to FIG. 20, the water cover 826 may be installed under the first heat exchanger 910. The first heat exchanger 910 may be installed to be supported by the water cover 826. The water cover 826 may be coupled to the open upper surface of the collection guide part 825 so as to prevent the condensed water transferred through the collection guide part 825 from coming into contact with the first heat exchanger 910.

The water cover 826 according to one embodiment of the present disclosure may be provided to be spaced apart from the second heat exchanger 920. The water cover 826 may support the first heat exchanger 910, and may be spaced apart from the second heat exchanger 920 so as to prevent the condensed water from evaporating again around the second heat exchanger 920.

Therefore, the condensed water may be effectively collected in the water collection part 860, and heat exchange of the second heat exchanger 920 with the condensed water may be prevented and thus heat exchange efficiency of the second heat exchanger 920 may be improved. Further, as heat exchange efficiency of the second heat exchanger 920 is increased, drying efficiency of the entirety of the laundry treating apparatus may be improved.

The water cover 826 may be installed to be supported by the inflow support planes 8253 and the transfer support plane 8254 formed at the collection guide part 825, and may thus be spaced apart from the guide bottom surface 8255. A shield body 8263 of the water cover 826 may be supported by the transfer support plane 8254 formed at the upper end of the extending stepped portion 8252.

The water cover 826 may include a water transmission body 8261 configured to come into contact with the lower surface of the first heat exchanger 910 so as to guide the condensed water generated by the first heat exchanger 910 to the collection guide part 825, and the shield body 8263 configured to extend rearwards from the water transmission body 8261 so as to shield the open upper surface of the collection guide part 825

The water transmission body 8261 may include barrier ribs 8264 configured to extend from the water transmission body 8261 in a direction away from the first heat exchanger 910. The barrier ribs 8264 may prevent air having entered through the inflow duct 821 from entering the collection guide part 825 without passing through the first heat exchanger 910. A plurality of barrier ribs 8264 may be provided to be spaced apart from each other in the forward and rearward directions. That is, the plurality of barrier ribs 8264 may be disposed sequentially from front to rear so as to be spaced apart from each other.

Further, the cover partition 8267 extending downwards from the shield body 8263 may be disposed between the guide partition 8256 and the extending stepped portion 8252. The cover partition 8267 may prevent the condensed water transferred on the collection guide part 825 from being released from the collection guide part 825 and then overflowing towards the second heat exchanger 920 due to the volume of circulating air passing through the transfer duct 822.

The cover partition 8267 together with the guide partition 8256 located in front thereof and the extending stepped portion 8252 located therebehind may prevent overflow of the condensed water.

The width W1 of the transfer duct 822 (with reference to FIG. 17) may be expanded to be greater than or equal to half of the width W2 of the base 800 (with reference to FIG. 17), and thus, the widths of the first heat exchanger 910 and the second heat exchanger 920 installed in the transfer duct 822 may also be expanded.

As the widths of the first heat exchanger 910 and the second heat exchanger 920 are expanded, air flowing along the circulation flow path part 820 may be dehumidified or heated over a larger area. Therefore, although the lengths L1 and L2 of the first heat exchanger 910 and the second heat exchanger 920 in the forward and rearward directions are slightly reduced, the first heat exchanger 910 and the second heat exchanger 920 may exchange heat with the same or larger amount of air, compared to the conventional heat exchanger.

As the length L2 of the second heat exchanger 920 in the forward and rearward directions is reduced, the distance L3 between the first heat exchanger 910 and the second heat exchanger 920 may be greater than or equal to the length L2 of the second heat exchanger 920 in the forward and rearward directions.

As the width W1 of the transfer duct 822 is expanded, the width of the second heat exchanger 920 may also be expanded. Further, as the width of the second heat exchanger 920 is expanded, the length L2 of the second heat exchanger 920 in the forward and rearward directions may be reduced, and thus, the distance L3 between the first heat exchanger 910 and the second heat exchanger 920 may be increased.

Since the space between the first heat exchanger 910 and the second heat exchanger 920 is increased, contact of the condensed water generated by the first heat exchanger 910 with the second heat exchanger 920 may be prevented. When the condensed water comes into contact with the second heat exchanger 920, the second heat exchanger 920 exchanges heat with the condensed water, and thus, heat exchange efficiency of the second heat exchanger 920 may be reduced. However, since the space between the first heat exchanger 910 and the second heat exchanger 920 is expanded, reduction in heat exchange efficiency of the second heat exchanger 920 may be prevented.

Further, the second heat exchanger 920 is provided to heat air. Since a lot of energy is consumed to heat air, increase in heat exchange efficiency of the second heat exchanger 920 is important in increasing efficiency of the entirety of the laundry treating apparatus.

However, as the area of the second heat exchanger 920 coming into contact with elements rather than air increases, the quantity of heat which should be consumed to heat air may be consumed. Therefore, the second heat exchanger 920 may be installed to minimize the area thereof coming into contact with other elements.

When the second heat exchanger 920 is installed in the transfer duct 822, the lower surface of the second heat exchanger 920 may be supported by the transfer duct 822. Therefore, when the area of the lower surface of the second heat exchanger 920 is reduced, loss of the quantity of heat of the second heat exchanger 920 due to thermal conduction may be prevented.

Therefore, the length L2 of the second heat exchanger 920 in the forward and rearward directions may be less than or equal to the length L1 of the first heat exchanger 920 in the forward and rearward directions. Thereby, heat loss from the lower surface of the second heat exchanger 920 may be reduced. Further, when the length L2 of the second heat exchanger 920 in the forward and rearward directions is reduced, the distance L3 between the first heat exchanger 910 and the second heat exchanger 920 may be increased, and the condensed water may be prevented from coming into contact with the second heat exchanger 920.

The diameter H3 of the circulation flow path fan 950 may be greater than or equal to the height H2 of the second heat exchanger 920. When the width W1 of the transfer duct 822 is increased, the amount of air flowing along the circulation flow path part 820 may be increased. Then, the circulation flow path fan 950 having the increased diameter H3 may increase the circulation rate of air.

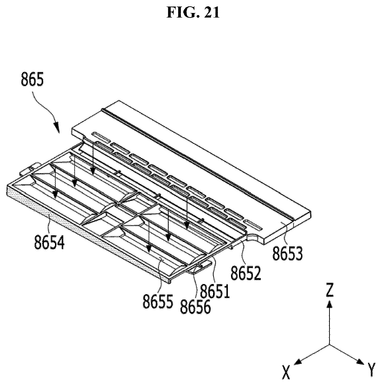

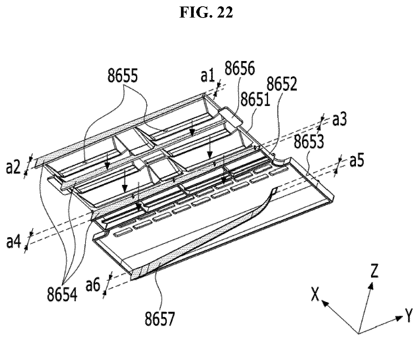

FIG. 21 is a perspective top view of the water cover according to one embodiment of the present disclosure, and FIG. 22 is a perspective bottom view of the water cover according to one embodiment of the present disclosure.

Referring to FIG. 21, the water cover 826 may include the water transmission cover 8261 provided to support the first heat exchanger 910 and to guide the condensed water generated by the first heat exchanger 910 to the collection guide part 825 through the water cover 826, the shield body 8263 provided at the rear of the water transmission cover 8261 so as to shield the open upper surface of the collection guide part 825, and a connection body 8262 configured to connect the water transmission cover 8261 to the shield body 8263.

The first heat exchanger 910 may be supported by the upper surface of the water transmission cover 8261. Water transmission holes 8265 may be formed through the water transmission body 8261. A plurality of water transmission holes 8265 may be provided in various shapes as long as it may easily transmit the condensed water generated by the first heat exchanger 910. The water transmission holes 8265 may be provided as communication holes so as to guide the condensed water generated by the first heat exchanger 910 to the collection guide part 825 through the water transmission body 8261.

Support ribs 8266 configured to protrude from the side surfaces of the water transmission body 8261 so as to support the water transmission body 8261 spaced apart from the guide bottom surface 8255 may be formed on the side surfaces of the water transmission body 8266. The support ribs 8266 may protrude from the left and right side surfaces of the water transmission body 8261. Referring to FIGS. 16 and 17, the support ribs 8266 may be supported by the inflow support planes 8253 provided at the side surfaces of the collection guide part 825.

The rear portion of the shield body 8263 may be supported by the transfer support plane 8254 of the collection guide part 825. The support ribs 8266 are supported by the inflow support planes 8253, the shield body 8263 is supported by the transfer support plane 8254, and thereby, the water cover 826 may withstand the load of the first heat exchanger 910, and may support the first heat exchanger 910 so that the first heat exchanger 910 is spaced apart from the collection guide part 825.

Referring to FIG. 22, the water cover 826 may further include the barrier ribs 8264 configured to extend downwards from the lower surface of the water transmission body 8261. The barrier ribs 8264 may be installed between the space between the guide bottom surface 8255 and the water transmission body 8261. During the drying cycle, air discharged forwards from the drum 200 is dehumidified by the first heat exchanger 910, is heated by the second heat exchanger 920, and is then supplied again to the rear portion of the drum 200. In order to improve heat exchange efficiency and drying efficiency, air discharged from the drum 200 may pass through only a space in which the first heat exchanger 910 and the second heat exchanger 920 are installed.

However, the collection guide part 825 configured to guide the condensed water to the water collection body 862 may be formed on the bottom surface of the transfer duct 822 in which the first heat exchanger 910 and the second heat exchanger 920 are installed, as described above. Thereby, there is the possibility that air discharged forwards from the drum 200 enters the collection guide part 825 located under the first heat exchanger 910. When the discharged air enters the collection guide part 825, the corresponding air may not sufficiently exchange heat with the first heat exchanger 910, and thus, the dehumidification degree of the air is reduced. In this case, drying performance may be reduced due to reduction in heat exchange efficiency.

Therefore, it is desirable to prevent air from entering into the space between the guide bottom surface 8255 and the water transmission body 8261 supporting the first heat exchanger 910. The barrier ribs 8264 extending downwards from the water transmission body 8261 may be installed in the above space between the water transmission body 8261 and the guide bottom surface 8255, and may thus prevent excessive inflow of air into the space. Here, a plurality of barrier ribs 8264 may be provided to be spaced apart from each other in the forward and rearward directions.

The barrier ribs 8264 may be provided to be spaced apart from the guide bottom surface 8255 so as not to disturb the flow of the condensed water transferred on the guide bottom surface 8255. That is, the barrier ribs 8264 may prevent circulating air from leaking to the collection guide part 825 by blocking a designated part of the space formed between the water transmission body 8261 and the guide bottom surface 8255.

The shield body 8263 may include the cover partition 8267 configured to extend downwards from the lower surface thereof. The cover partition 8267 may be formed in a structure corresponding to the shape of the extending stepped portion 8252 of the collection guide part 825. In the case in which the extending stepped portion 8252 is provided parallel to the recessed stepped portion 8251, the cover partition 8267 may be provided parallel to the extending stepped portion 8252. In the case in which the extending stepped portion 8252 is provided to gradually get closer to the recessed stepped portion 8251 in the direction from left to right, the cover partition 8267 may be provided to gradually get closer to the water transmission body 8261 in the direction from left to right in the same manner as the extending stepped portion 8252.

When the water cover 826 is installed above the collection guide part 825, the cover partition 8267 may be located in front of the extending stepped portion 8252. Further, the cover partition 8267 may be located between the extending stepped portion 8252 and the guide partition 8256.

The cover partition 8267 may prevent the condensed water within the collection guide part 825 from overflowing towards the second heat exchanger 920 due to the volume of air moving from front to rear when air in the drum 200 is circulated.

The condensed water located in the collection guide part 825 may be transferred rearwards by air flowing towards the transfer duct 822. Here, the guide partition 8256, the cover partition 8267 and the extending stepped portion 8252 may prevent the condensed water from flowing to the outside of the collection guide part 825 and thus overflowing towards the second heat exchanger 920.

The barrier ribs 8264 may extend downwards from the water transmission body 8261 to different lengths depending on the positions of the barrier ribs 8264. The barrier ribs 8264 may block the space between the water cover 826 and the guide bottom surface 8255 while not disturbing the flow of the condensed water on the collection guide part 825. Since the guide bottom surface 8255 may be inclined towards the water collection communication hole 827, as described above, when the barrier ribs 8264 extend from the water transmission body 8261 by the same length, the distance between the guide bottom surface 8255 and the barrier ribs 8264 increases as the distance from the water collection communication hole 827 decreases. Therefore, air may enter the corresponding space, and thus, heat exchange efficiency may be reduced.

Therefore, the lengths of the barrier ribs 8264 extending from the water transmission body 8261 increase as the distance from the water collection communication hole 827 decreases. As shown in this figure, the length of the barrier ribs 8264 extending from the water transmission body 8261 may be increased in the direction from right to left (in the Y-axis direction). Further, when a plurality of barrier ribs 8264 is provided at corresponding positions in the forward and rearward directions (i.e., in the X-axis direction, the barrier rib 8264 located at a rear position may extend to a greater length than the barrier rib 8264 located at a front position. That is, the barrier ribs 8264 may be provided to have lengths corresponding to the inclination of the guide bottom surface 8255 facing the ends of the barrier ribs 8264.

The barrier ribs 8264 may be provided to correspond to the inclination of the guide bottom surface 8255, as described above, and thereby, reduction in heat exchange efficiency due to inflow of air in the drum 200 into the collection guide part 825 without passing through the first heat exchanger 910 may be prevented.

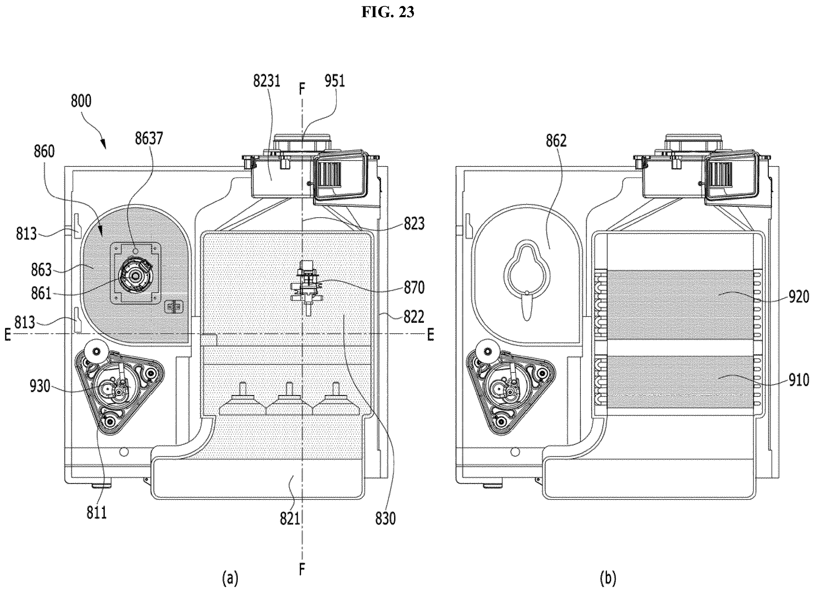

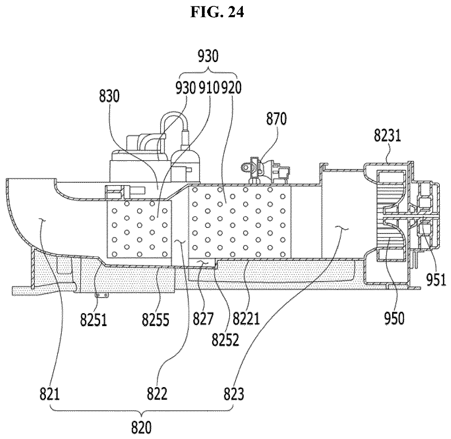

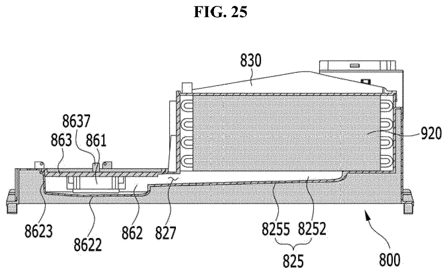

FIGS. 23(a) and 23(b) illustrate a laundry treating apparatus according to another embodiment of the present disclosure, and specifically, are top views of a base on which a compressor is disposed in front of a water collection part. FIG. 24 is a cross-sectional view taken along line F-F of FIG. 23(a), as seen from the right. FIG. 25 is a cross-sectional view taken along line E-E of FIG. 23(a), as seen from the front.

The illustration shown in FIGS. 23(a) and 23(b) will be understood with reference to FIGS. 14(a) and 14(b), the illustration shown in FIG. 24 will be understood with reference to FIG. 15, and the illustration shown in FIG. 25 will be understood with reference to FIG. 20. Other elements except for modified elements in this embodiment, which are substantially the same as those in the former embodiment in which the compressor is located behind the water collection part, will be denoted by the same reference numerals even though they are denoted in different drawings. Hereinafter, the disposition relationships between a compressor installation part and the water collection part will be mainly described.

Referring to FIGS. 23(a) and 23(b), a circulation flow path part 820 configured to circulate air in a drum may be disposed on one side of a base 800, and a compressor installation part 811 spaced apart from the circulation flow path part 820 to accommodate a compressor 930 mounted therein and a water collection part 860 may be disposed on the other side of the base 800.

The compressor installation part 811 may be disposed such that at least a portion thereof overlaps the water collection part 860 in the forward and rearward directions. Further, the compressor installation part 811 may be disposed in front of the water collection part 860.

When the water collection part 860 is disposed to overlap the compressor installation part 811 in the forward and rearward directions, the capacity of the water collection part 860 to accommodate the condensed water may be increased. Therefore, the frequency of drainage of the condensed water by a user may be reduced, and thus, user convenience may be increased.

Since compression efficiency of the compressor 930 is reduced when the compressor 930 is overheated, it is favorable to properly cool the compressor 930. Since the second heat exchanger 920 serves to heat the air in the drum, the disposition of the compressor 930 adjacent to the second heat exchanger 920 may be disadvantageous for cooling of the compressor 930.

In the case in which the compressor installation part 811 is disposed in front of the water collection part 860, the distance between the compressor 930 and the second heat exchanger 920 may be increased compared to the case in which the compressor installation part 811 is disposed behind the water collection part 860. Therefore, the disposition of the compressor installation part 811 in front of the water collection part 860 may be advantageous for cooling of the compressor 930. When cooling efficiency of the compressor 930 is increased, compressor efficiency of the compressor 930 may be increased, heat exchange efficiency of the second heat exchanger 920 may also be increased, and thus, drying efficiency of the laundry treating apparatus may be improved.

The circulation flow path part 820 may include an inflow duct 821 configured such that air discharged from the drum flows thereinto, a discharge duct 823 configured to discharge the air towards the drum, and a transfer duct 822 configured to connect the inflow duct 821 to the discharge duct 823.

A first heat exchanger 910 and the second heat exchanger 920 may be installed in the transfer duct 822. The first heat exchanger 910 and the second heat exchanger 920 may sequentially exchange heat with air discharged from the drum so as to dehumidify and heat the air.

The water collection part 860 may be disposed such that at least a portion thereof overlaps the second heat exchanger 920 in the leftward and rightward directions. Further, the compressor installation part 811 may be disposed such that at least a portion thereof overlaps the first heat exchanger 910 in the leftward and rightward directions.

When the water collection part 860 is disposed to overlap the second heat exchanger in the leftward and rightward directions and the compressor installation part 811 is disposed to overlap the first heat exchanger 910 in the leftward and rightward directions, the distance between the compressor installation part 811 and the second heat exchanger 920 may be increased, as described above. Therefore, cooling efficiency of the compressor 930 may be improved.

Further, when the compressor installation part 811 is disposed to overlap the first heat exchanger 910 and the water collection part 860 is disposed to overlap the compressor installation part 811 in the forward and rearward directions, the water collection part 860 may be located at the rear portion of the base 800.

When the water collection part 860 is located at the rear portion of the base 800, the distance between a water storage tank (with reference to FIG. 3) configured to store condensed water so that a user may remove the condensed water stored in the water collection part 860 and the water collection part 860 is reduced, and thus, the length of a flow path connecting the water storage tank to the water collection part 860 may be reduced, and power consumption of a pump 861 configured to move water upwards may be reduced.

Further, a general laundry treating apparatus, such as a washer, is installed in a space (for example, a boiler room, a bathroom or the like) in which water is capable of being directly drained, and it is not necessary for a user to separately drain water used in washing. When the laundry treating apparatus according to this embodiment is installed in the space in which water is capable of being directly drained in the same manner as the washer, the condensed water may be discharged from the water collection part 860 directly to the outside of the cabinet using the pump 861.

In the case in which water is discharged from the water collection part 860 directly to the outside of the cabinet, when the water collection part 860 is located adjacent to the rear surface of the cabinet, power consumed by the pump 861 may be reduced.

Further, the water collection part 860 may be disposed such that at least a portion thereof overlaps the discharge duct 823 in the leftward and rightward directions. In addition, the compressor installation part 811 may be disposed such that at least a portion thereof overlaps the inflow duct 821.

The discharge duct 823 may be located at the rear portion of the circulation flow path part 820. Further, the inflow duct 821 may be located at the front portion of the circulation flow path part 820. Therefore, when the water collection part 860 overlaps the discharge duct 823 in the leftward and rightward directions and the compressor installation part 811 overlaps the inflow duct 821 in the leftward and rightward directions, the compressor installation part 811 may be disposed at the front portion of the base 800. Further, the water collection part 860 may be disposed at the rear portion of the base 800.

Therefore, cooling efficiency may be increased and thus drying efficiency may be improved, as described above. Further, power consumption of the pump 861 may be reduced.

In addition, the water collection part 860 may be disposed to overlap a control box installation part 813 in the leftward and rightward directions. When the water collection part 860 is disposed to overlap the control box installation part 813, a control wire connected to the pump 861 may be shortened, and thus, control reliability may be increased.

The compressor 930 installed in the compressor installation part 811 may generate a large amount of heat. When an excessive amount of heat is applied to a control box, noise is generated, and thus, reliability may be reduced. Therefore, the compressor installation part 811 may be disposed in front of the control box installation part 813. Deterioration of reliability of the control box may be prevented by locating the compressor 930 and the control box to be spaced apart from each other.

Further, the water collection part 860 may be disposed between the compressor installation part 811 and the rear plate 420 (with reference to FIG. 5). When the water collection part 860 is disposed between the compressor installation part 811 and the rear plate 420, the compressor installation part 811, the water collection part 860 and the rear late 420 may be sequentially disposed in the forward and rearward directions.

Therefore, the compressor installation part 811 may be disposed at the front portion of the base 800, and the water collection part 860 may be disposed at the rear portion of the base 800. Therefore, cooling efficiency of the compressor 930 may be increase, and power consumed by the pump 861 may be reduced.

Referring to FIG. 24, the base 800 may include a collection guide part 825 configured to guide condensed water generated by the first heat exchanger 910 to the water collection part 860. Further, the circulation flow path part 820 may include a water collection communication hole 827 configured such that the collection guide part 825 and the water collection part 860 communicate with each other therethrough.

The collection guide part 825 may be disposed to overlap the compressor installation part 811 in the leftward and rightward directions. Further, the water collection communication hole 827 may be located behind the compressor installation part 811.

The collection guide part 825 may include a guide bottom surface 8255 recessed downwards from the bottom surface of the transfer duct 822 so as to guide the condensed water generated by the first heat exchanger 910. The guide bottom surface 8255 may be provided at a lower position than the bottom surface of the inflow duct 821 and a transfer bottom surface 8221.

The collection guide part 825 may include a recessed stepped portion 8251 configured to form the front surface of the collection guide part 825 and an extending stepped portion 8252 configured to form the rear surface of the collection guide part 825. The recessed stepped portion 8251 may connect the inflow duct 821 and the guide bottom surface 8255 to each other stepwise. The extending stepped portion 8252 may connect the bottom surface of the transfer duct 822 and the guide bottom surface 8255 to each other stepwise.

The water collection communication hole 827 may be located under the second heat exchanger 920. When the water collection communication hole 827 is located under the second heat exchanger 920, the length of the collection guide part 825 in the forward and rearward directions may be increased compared to the case in which the water collection communication hole 827 is disposed between the first heat exchanger 910 and the second heat exchanger 920.

Therefore, the transfer distance of the condensed water to reach the water collection part 860 may be increased. Therefore, a larger amount of the condensed water may be accommodated. The frequency of drainage of the condensed water by a user may be reduced, and thus, user convenience may be increased.

The collection guide part 825 may be provided to be inclined towards the water collection communication hole 827. That is, the guide bottom surface 8255 may be provided such that the distance between the guide bottom surface 8255 and the ground decreases as the distance from the water collection communication hole 827 decreases. Due to such an inclination, the condensed water flowing along the collection guide part 825 may be transferred towards the water collection communication hole 827 by gravity. When the condensed water is transferred through the water collection communication hole 827, the condensed water may pass through a region under the second heat exchanger 920.

Referring to FIG. 25, the water collection communication hole 827 may allow the collection guide part 825 and the water collection part 860 to communicate with each other under the second heat exchanger 920. The guide bottom surface 8255 may be inclined downwards towards the water collection communication hole 827.

That is, the guide bottom surface 8255 may be provided such that the distance between the guide bottom surface 8255 and the ground decreases as the distance from the water collection communication hole 827 decreases. A water cover may be coupled to the open upper surface of the collection guide part 825. The water cover may prevent the condensed water transferred along the collection guide part 825 from coming into contact with the first heat exchanger 910 and the second heat exchanger 920.

Further, the extending stepped portion 8252 forming the rear end of the collection guide part 825 may be located under the second heat exchanger 920. Since the extending stepped portion 8252 is located under the second heat exchanger 920, the space of the collection guide part 825 extending from the recessed stepped portion 8251 to the extending stepped portion 8252 may be expanded so as to collect a larger amount of the condensed water.

A water collection body 862 may include a water collection bottom surface 8622 configured to form the bottom surface of the water collection body 862 in which the condensed water is collected, and a water collection side surface 8623 configured to form the side surface of the water collection body 862. The water collection side surface 8623 may connect the water collection bottom surface 8622 to the upper surface of the base 800 stepwise.

A water collection cover 863 may be coupled to the open upper surface of the water collection body 862 so as to prevent water collected in the water collection body 862 from scattering to the outside. The pump 861 may be installed to pass through the water collection cover 863, and may move the condensed water collected in the water collection body 862 to the outside.

When the water collection part 860 is located behind the compressor 930, as described above, the collection guide part 825 may be expanded to collect a larger amount of the condensed water, and the frequency of drainage of the condensed water by a user may be reduced, and thus, user convenience may be increased.

Hereinafter, the control box 190 according to the present disclosure will be described in detail with reference to the accompanying drawings.

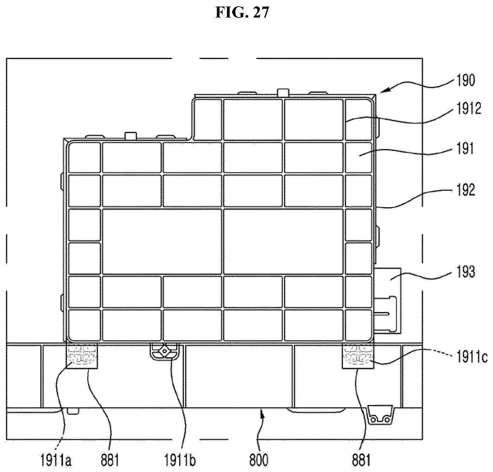

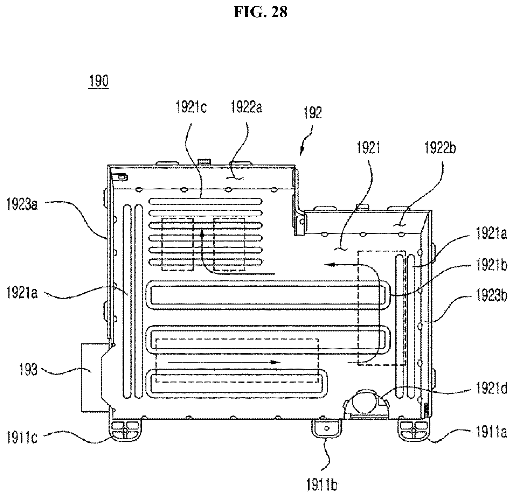

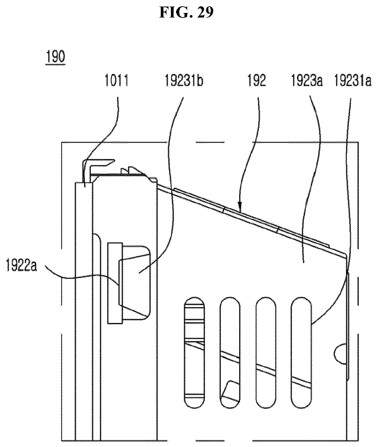

FIG. 26 is a perspective view illustrating the base and the control box according to one embodiment of the present disclosure, FIG. 27 is a side view illustrating the base and the control box according to one embodiment of the present disclosure, FIG. 28 is a rear view of the control box according to one embodiment of the present disclosure, and FIG. 29 is a side view of a portion of the control box according to one embodiment of the present disclosure

As shown in FIG. 26, the control box 190 which supplies power to the respective elements of the laundry treating apparatus according to the present disclosure and controls the respective elements is provide on one side of the base 800.

The above-described control box 190 may be located on one side of the base 800 so as to be exposed to the outside by opening a corresponding one of the side panels 140 of the laundry treating apparatus. Therefore, the control box installation part (not shown) in which the control box 190 is installed is formed in one side of the base 800.

The control box 190 may include a stationary plate 191 coupled to the control box installation part, a PCB (not shown) fixed to the stationary plate and configured to supply power to the respective elements of the laundry treating apparatus and to control the elements, a cover plate 192 configured to cover the PCB coupled to the stationary plate 191, and a cooling fan 194 configured to radiate heat generated from the control box 190.

Here, the PCB may include a controller (not shown) configured to control the elements of the laundry treating apparatus, and a plurality of power supply units (not shown) configured to supply power so as to operate the respective elements.

The PCB may include the power supply units (not shown) configured to supply power and the controller (not shown) configured to control the respective elements, and in this case, the power supply units and the controller may be formed by separate PCBs or a single PCB.

Here, the PCB may include at least two power supply units configured to supply power to the respective elements of the laundry treating apparatus. For example, at least two power supply units configured to supply different currents may be provided to supply power to operate the controller and to supply power to operate the driving unit (i.e., the motor 500 configured to operate the drum 200, the circulation flow path fan motor 951 configured to the circulation flow path fan 950, etc.).

The stationary plate 191 is provided as a board on which the PCB may be mounted, is coupled to the control box installation part, and supports the PCB and the cover plate 192 against the base 800. First, second and third support protrusions 1911a, 1911b and 1911c are provided on the lower surface of the stationary plate 191, and a plurality of support protrusion insert recesses 881 into which the first, second and third support protrusions 1911a, 1911b and 1911c are inserted are formed in the control box installation part at positions corresponding to the first, second and third support protrusions 1911a, 1911b and 1911c.

Here, the support protrusion insert recesses 881 may be formed in the upper surface of the control box installation part adjacent to the outer surface of the base 800, and may fix the first, second and third support protrusions 1911a, 1911b and 1911c using separate fastening members (not shown) passing through the side surface of the base 800.

A plurality of reinforcing ribs 1912, which intersects each other, may be provided on the outer surface of the stationary plate 191 so as to increase strength of the stationary plate 191, and engaging protrusions 1922a configured to fix the cover plate 192, which will be described later, may be formed on the upper and side surfaces of the stationary plate 191.

The cover plate 192 may be formed in a box shape so as to cover the PCB provided on the stationary plate 191, and may be fixed to the stationary plate 191. The cover plate 192 may include a cover panel 1921 configured to face the inner surface of the laundry treating apparatus, first and second upper panels 1922a and 1922b bent from the upper surface of the cover panel 1921 to the upper surface of the stationary plate 191, and first and second side panels 1923a and 1923b bent from both sides of the cover panel 1921 to the side surfaces of the stationary plate 191. In addition, a lower panel (not shown) bent from the lower end of the cover panel 1921 to the lower end of the stationary plate 191 may be further provided at the lower end of the cover panel 1921. The cover plate 192 may be coupled to the stationary plate 191 so as to cover the PCB coupled to the stationary plate 191.

The stationary plate 191 may be formed by injection molding using synthetic resin. Particularly, the stationary plate 191 may be formed of the same material as the base 800. Here, the PCB may be installed on the stationary plate 191, and the stationary plate 191 may be electrically isolated from the PCB. Therefore, the stationary plate 191 may be formed of synthetic resin which is an insulating material.

Further, the cover panel 1921 may be formed by press working using a metal plate having a designated thickness. The first and second upper panels 1922a and 1922b and the first and second side panels 1923a and 1923b may be formed of the same material as the cover panel 1921 integrally with the cover panel 1921. That is, the first and second upper panels 1922a and 1922b and the first and second side panels 1923a and 1923b may be formed integrally with the cover panel 1921 through bending by press working.

The PCB of the control box 190 may generate heat depending on operation of the power supply units and the controller, and the heat generated by the PCB may remain in a space formed by the stationary plate 191 and the cover plate 192.

Therefore, a plurality of radiation grooves 1921a and 1921b configured to radiate heat generated by the PCB may be further formed on the cover plate 192. That is, the plurality of radiation grooves 1921a and 1921b recessed into or protruding from the control box 190 may be formed on the cover panel 1921 of the cover plate 192 in order to increase the area of the cover panel 1921.

The radiation grooves 1921a and 1921b may be formed adjacent to the above-described plurality of power supply units so as to correspond to the positions of the power supply units. Further, separate radiation fins (not shown) may be provided on the power supply units so as to effectively radiate heat generated when power is converted. These radiation fins may be formed parallel to the flow direction of air, and the respective radiation grooves 1921a and 1921b may also extend parallel to the direction of formation of the radiation fins.

Specifically, the radiation grooves 1921a and 1921b may include first radiation grooves 1921a corresponding to the radiation fins disposed in the vertical direction, and second radiation grooves 1921b corresponding to the radiation fins disposed in the horizontal direction.

Further, the cooling fan 194 may be provided on the control box 190 so as to more effectively transfer and discharge heat generated by the PCB in the control box 190. The cooling fan 194 may be provided on the first side panel 1923a (or the second side panel 1923b). Further, a plurality of discharge holes 1921c and 19231a configured to discharge air transferred by the cooling fan 194 therethrough may be formed in the cover panel 1921 and the first side panel 1923a (or the second side panel 1923b).

Here, the plurality of discharge holes 1921c and 19231a may be formed at positions at which the transfer path of air transferred in the control box 190 by the cooling fan 194 may be maximized.

Particularly, the cooling fan 194 may be formed at the lower portion of the first side panel 1923a (or the second side panel 1923b), and the discharge holes 1921c and 19231a may be formed through the upper portion of the first side panel 1923a (or the second side panel 1923b). In this case, air introduced from the cooling fan 194 may form a D-shaped or C-shaped flow path in the control box 190, and may be discharged through the discharge holes 1921c and 19231a.

The above-described power supply units may include the plurality of radiation fins (not shown), and the radiation fins of the respective power supply units may be formed in a direction parallel to the transfer path of air transferred in the control box 190 by the cooling fan 194.

The cover panel 1921 may be formed to have a smaller area than the area of the stationary plate 191. Particularly, the lateral width of the cover panel 1921 may be equal to the lateral width of the stationary plate 191, and the vertical height of the cover panel 1921 may be less than the vertical height of the stationary plate 191.

When the vertical height of the cover panel 1921 is less than the vertical height of the stationary plate 191, the first and second upper panels 1922a and 1922b located at the upper end of the cover panel 1921 may be formed to be inclined downwards from the stationary plate 191 towards the cover panel 1921. When the first and second upper panels 1922a and 1922b are formed to be inclined downwards towards the cover panel 1921, water falling along the inclined portion of the control box 190 may flow down towards the cover panel 1921 due to the inclination of the first and second upper panels 1922a and 1922b.

The first and second upper panels 1922a and 1922b may be formed to have different heights, and the discharge holes 1921c and 19231a may be formed in one of the first upper panel 1922a and the second upper panel 1922b, which has a relatively high height.

That is, air in the control box 190 may rise in the control box 190 due to heat generated by the power supply units, and one of the first upper panel 1922a and the second upper panel 1922b, which has the relatively high height, may form a space in which heat generated in the control box 190 may be collected.

Further, among the discharge holes 1921c and 19231a, rear surface discharge holes 1921c configured to discharge air rising towards the first upper panel 1922a having the relatively high height out of the first and second upper panels 1922a and 1922b to the outside of the control box 190 may be formed in a portion of the cover panel 1921 adjacent to the first upper panel 1922a.

Moreover, among the discharge holes 1921c and 19231a, side surface discharge holes 19231a configured to discharge air rising towards the first upper panel 1922a having the relatively high height to the outside of the control box 190 may be formed in the first side panel 1923a (or the second side panel 1923b) adjacent to the first upper panel 1922a.

Further, air introduced into the control box 190 from the outside of the control box 190 by the cooling fan 194 provided on the first side panel 1923a (or the second side panel 1923b) may forcibly cool the power supply units of the PCB in the control box 190, and heat generated by the power supply units may be transferred along the flow of air and be discharged to the outside through the rear side discharge holes 1921c formed in the cover panel 1921 and the side surface discharge holes 19231a formed in the first side panel 1923a (or the second side panel 1923b).

As is apparent from the above description, the present invention provides a laundry treating apparatus which includes a driving unit configured to reduce the rotational velocity of a rotor and then to transmit the reduced rotational velocity to a drum, and allowing the center of rotation of the rotor and the center of rotation of the drum to form a concentric axis.

Further, the present invention provides a laundry treating apparatus which may effectively use the remainder of a space on a base other than a circulation flow path part configured to circulate air in a drum.

Further, the present invention provides a laundry treating apparatus which may install a control box configured to control operation of the laundry treating apparatus on a base.

Further, the present invention provides a laundry treating apparatus which includes a control box installation part allowing a control box configured to control the laundry treating apparatus to be installed on a base adjacent to a side panel of a cabinet

Further, the present invention provides a laundry treating apparatus which may shorten the lengths of connection wires configured to connect a control box configured to control operation of the laundry treating apparatus to others element so as to reduce noise and to increase reliability.

Further, the present invention provides a laundry treating apparatus which may improve a control box installed on a base so as to increase a control box cooling effect.

The present invention is not limited to the above-described effects, and it is to be understood that other effects which are not described herein will be apparent to those skilled in the art from the claims.

## Claims

1. A laundry treating apparatus comprising:
a cabinet (100);
a drum (200) rotatably provided in the cabinet (100) so as to accommodate laundry;
a base (800) disposed below the drum (200) adapted to provide a space configured such that air in the drum (200) is circulated therein or moisture in the air is condensed therein;
a motor (500) configured to provide power to rotate the drum (200);
a heat exchange unit (900) comprising a first heat exchanger (910) placed on the base (800) configured to condense the moisture in the air, a second heat exchanger (920) placed on the base (800) configured to heat the air, and a compressor (930) configured to supply a refrigerant for exchange of heat with the air to the first heat exchanger (910) or the second heat exchanger (920);
a control box (190) comprising a PCB configured to control operation of the motor (500), the compressor (930) or the blower fan (950) and to supply power,
wherein:
the motor (500) is disposed behind the drum (200) so as to be separated from and spaced apart from the base (800); and
the base (800) comprises:
a circulation flow path part (820) formed on one side of the base (800) in a forward and rearward direction to communicate with the drum (200), configured to circulate the air in the drum (200), and provided with the first heat exchanger (910) and the second heat exchanger (920) disposed therein;
a water collection part (860) provided outside the circulation flow path part (820) and configured to communicate with the circulation flow path part (820) and to collect water condensed in the circulation flow path part (820); and
a control box installation part (813) provided on a remaining side of the base (800) in a lateral direction of a flow path, and configured such that the control box (190) is mounted in the control box installation part (813),
wherein the water collection part (860) is disposed between the control box installation part (813) and the circulation flow path part (820).

2. The laundry treating apparatus according to claim 1, wherein the base (800) further comprises a collection guide part (825) recessed from a portion of a bottom surface of the circulation flow path part (820) facing the first heat exchanger (910) configured to guide the condensed water to the water collection part (860), and
the control box installation part (813) is located to overlap the collection guide part (825) in leftward and rightward directions.

3. The laundry treating apparatus according to claim 2, wherein:
the collection guide part (825) comprises a water collection communication hole (827) formed through one surface of the circulation flow path part (820) facing the water collection part (860) configured to make the collection guide part (825) and the water collection part (860) communicate with each other; and
the control box installation part (813) is located to overlap the water collection communication hole (827) in the leftward and rightward directions.

4. The laundry treating apparatus according to claim 1, wherein:
the base (800) further comprises a compressor installation part (811) provided to be spaced apart from the circulation flow path part (820) such that the compressor (930) is placed on the compressor installation part (811); and
a portion of the control box installation part (813) is located to overlap the compressor installation part (811) in leftward and rightward directions.

5. The laundry treating apparatus according to claim 1, wherein:
the cabinet (100) comprises side panels (140) configured to form side surfaces thereof; and
the control box installation part (813) is located between the circulation flow path (820) part and any one of the side panels (140).

6. The laundry treating apparatus according to any one of claims 2 to 5, further comprising a rear plate (420) installed on the base (800) and located between the drum (200) and the motor (500) configured to guide air discharged from the circulation flow path part (820) to the drum (200).

7. The laundry treating apparatus according to claim 6, further comprising a reducer (600) fixed to a rear surface of the rear plate (420), located between the drum (200) and the motor (500), and configured to reduce power supplied by the motor (500) so as to rotate the drum (200).

8. The laundry treating apparatus according to any one of claims 1 to 7, wherein the control box (190) further comprises:
a stationary plate (191) coupled to the base (800) and configured such that the PCB is fixed to one surface of the stationary plate (191);
a cover plate (192) coupled to the stationary plate and formed in a box shape configured to cover the PCB; and
a cooling fan (194) provided on one side of the cover plate (192) and configured to generate flow of air in a space formed by the cover plate (192).

9. The laundry treating apparatus according to claim 8, wherein a plurality of support protrusions (1911a, 1911b, 1911c) is formed on a lower end of the stationary plate (191), and a plurality of support protrusion insert recesses (881) is formed in the base such that the support protrusions (1911a, 1911b, 1911c) are fixedly inserted into the support protrusion insert recesses (881).

10. The laundry treating apparatus according to claim 8 or 9, wherein the cover plate (192) comprises:
a cover panel (1921) spaced apart from the stationary plate (191);
upper panels (1922a, 1922b) configured to extend from an upper portion of the cover panel (1921) to an upper portion of the stationary plate (191); and
side panels (1923a, 1923b) configured to extend from both side surfaces of the cover panel (1921) to both side surfaces of the stationary plate (191),
wherein the cooling fan (194) is provided on one of the side panels (1923a, 1923b).

11. The laundry treating apparatus according to claim 10, wherein the upper panels (1922a, 1922b) are formed to be inclined downwards towards the cover panel (1921).

12. The laundry treating apparatus according to claim 10 or 11, wherein rear surface discharge holes (1921c) configured to discharge air moved by the cooling fan (194) therethrough are formed in a portion of the cover panel (1921) adjacent to the upper panels (1922a, 1922b).

13. The laundry treating apparatus according to claim 10 or 11, wherein the upper panels (1922a, 1922b) comprise at least two upper panels having different heights, and rear surface discharge holes (1921c) configured to discharge air moved by the cooling fan (194) therethrough are formed in a portion of the cover panel (1921) adjacent to one upper panel having a relatively high height out of the at least two upper panels.

14. The laundry treating apparatus according to claim 10, wherein the PCB comprises at least two power supply units configured to supply power to respective elements, and air moved by the cooling fan (194) sequentially passes through the at least two power supply units,
wherein each of the at least two power supply units comprises radiation fins configured to extend in a direction parallel to a flow direction of the air, and
wherein a plurality of radiation grooves (1921a, 1921b), configured to correspond to disposition of the at least two power supply units, is formed on the cover panel (1921).

## Patentansprüche

1. Waschbehandlungsvorrichtung, die aufweist:
ein Gehäuse (100);
eine Trommel (200), die drehbar in dem Gehäuse (100) vorgesehen ist, um Wäsche aufzunehmen;
eine Basis (800), die unter der Trommel (200) angeordnet ist und eingerichtet ist, einen Raum bereitzustellen, der so konfiguriert ist, dass Luft in der Trommel (200) darin umgewälzt wird oder Feuchtigkeit in der Luft darin kondensiert wird;
einen Motor (500), der konfiguriert ist, Kraft bereitzustellen, um die Trommel (200) zu drehen;
eine Wärmeaustauscheinheit (900), die einen ersten Wärmetauscher (910), der auf der Basis (800) angeordnet und konfiguriert ist, die Feuchtigkeit in der Luft zu kondensieren,
einen zweiten Wärmetauscher (920), der auf dem Basis (800) angeordnet und konfiguriert ist, die Luft zu erwärmen, und einen Verdichter (930) aufweist, der konfiguriert ist, dem ersten Wärmetauscher (910) oder dem zweiten Wärmetauscher (920) ein Kältemittel zum Wärmeaustausch mit der Luft zuzuführen;
einen Steuerkasten (190), der eine PCB aufweist, die konfiguriert ist, den Betrieb des Motors (500), des Verdichters (930) oder des Gebläseventilators (950) zu steuern und Strom zuzuführen,
wobei:
der Motor (500) hinter der Trommel (200) angeordnet ist, so dass er von der Basis (800) getrennt und von dieser beabstandet ist; und
die Basis (800) aufweist:
einen Umwälzungsströmungswegteil (820), der an einer Seite der Basis (800) in Vorwärts- und Rückwärtsrichtung ausgebildet ist, um mit der Trommel (200) in Verbindung zu stehen, der konfiguriert ist, die Luft in der Trommel (200) umzuwälzen, und der mit dem ersten Wärmetauscher (910) und dem zweiten Wärmetauscher (920) versehen ist, die darin angeordnet sind;
einen Wassersammelteil (860), der außerhalb des Umwälzungsströmungswegteils (820) vorgesehen ist und konfiguriert ist, mit dem Umwälzungsströmungswegteil (820) in Verbindung zu stehen und im Umwälzungsströmungswegteil (820) kondensiertes Wasser zu sammeln und
einen Steuerkasten-Installationsteil (813), der an einer verbleibenden Seite der Basis (800) in einer lateralen Richtung eines Strömungswegs vorgesehen und so konfiguriert ist, dass der Steuerkasten (190) in dem Steuerkasten-Installationsteil (813) montiert ist, wobei der Wassersammelteil (860) zwischen dem Steuerkasten-Installationsteil (813) und dem Umwälzungsströmungswegteil (820) angeordnet ist.

2. Wäschebehandlungsvorrichtung nach Anspruch 1, wobei die Basis (800) ferner einen Sammelführungsteil (825) aufweist, der von einem Abschnitt einer Bodenfläche des Umwälzungsströmungswegteils (820), der dem ersten Wärmetauscher (910) zugewandt ist, ausgespart ist und konfiguriert ist, das Kondenswasser zum Wassersammelteil (860) zu leiten, und
der Steuerkasten-Installationsteil (813) so angeordnet ist, dass er den Sammelführungsteil (825) in linker und rechter Richtung überlappt.

3. Wäschebehandlungsvorrichtung nach Anspruch 2, wobei:
der Sammelführungsteil (825) ein Wassersammel-Verbindungsloch (827) aufweist, das durch eine Oberfläche des Umwälzungsströmungswegteils (820) hindurch ausgebildet ist, die dem Wassersammelteil (860) zugewandt ist, das konfiguriert ist, den Sammelführungsteil (825) und den Wassersammelteil (860) miteinander in Verbindung zu bringen; und
der Steuerkasten-Installationsteil (813) so angeordnet ist, dass er das Wassersammel-Verbindungsloch (827) in linker und rechter Richtung überlappt.

4. Wäschebehandlungsvorrichtung nach Anspruch 1, wobei:
die Basis (800) ferner einen Verdichter-Installationsteil (811) aufweist, der so vorgesehen ist, dass er vom Umwälzungsströmungswegteil (820) beabstandet ist, so dass der Verdichter (930) auf dem Verdichter-Installationsteil (811) angeordnet ist; und
ein Abschnitt des Steuerkasten-Installationsteils (813) so angeordnet ist, dass er den Verdichter-Installationsteil (811) in linker und rechter Richtung überlappt.

5. Wäschebehandlungsvorrichtung nach Anspruch 1, wobei:
das Gehäuse (100) Seitenplatten (140) aufweist, die konfiguriert sind, dessen Seitenflächen zu bilden; und
der Steuerkasten-Installationsteil (813) zwischen dem Umwälzströmungswegteil (820) und einer der Seitenplatten (140) angeordnet ist.

6. Wäschebehandlungsvorrichtung nach einem der Ansprüche 2 bis 5, die ferner eine auf der Basis (800) installierte und zwischen der Trommel (200) und dem Motor (500) angeordnete hintere Platte (420) aufweist, die konfiguriert ist, aus dem Umwälzungsströmungswegteil (820) abgegebene Luft zur Trommel (200) zu leiten.

7. Wäschebehandlungsvorrichtung nach Anspruch 6, die ferner eine Reduzierung (600) aufweist, die an einer Rückseite der hinteren Platte (420) befestigt ist, sich zwischen der Trommel (200) und dem Motor (500) befindet und konfiguriert ist, die vom Motor (500) gelieferte Kraft zu reduzieren, um die Trommel (200) zu drehen.

8. Wäschebehandlungsvorrichtung nach einem der Ansprüche 1 bis 7, wobei der Steuerkasten (190) ferner aufweist:
eine feststehende Platte (191), die mit dem Basis (800) gekoppelt und so konfiguriert ist, dass die PCB an einer Oberfläche der feststehenden Platte (191) befestigt ist;
eine Abdeckplatte (192), die mit der feststehenden Platte gekoppelt ist und in einer Kastenform ausgebildet ist, die konfiguriert ist, die PCB abzudecken; und
ein Kühlgebläse (194), das an einer Seite der Abdeckplatte (192) vorgesehen ist und konfiguriert ist, einen Luftstrom in einem von der Abdeckplatte (192) gebildeten Raum zu erzeugen.

9. Wäschebehandlungsvorrichtung nach Anspruch 8, wobei mehrere Stützvorsprünge (1911a, 1911b, 1911c) an einem unteren Ende der feststehenden Platte (191) ausgebildet sind und mehrere Stützvorsprung-Einsatzaussparungen (881) in der Basis ausgebildet sind, so dass die Stützvorsprünge (1911a, 1911b, 1911c) fest in die Stützvorsprung-Einsatzaussparungen (881) eingesetzt sind.

10. Wäschebehandlungsvorrichtung nach Anspruch 8 oder 9, wobei die Abdeckplatte (192) aufweist:
eine Abdeckplatte (1921), die von der feststehenden Platte (191) beabstandet ist;
obere Platten (1922a, 1922b), die so konfiguriert sind, dass sie sich von einem oberen Abschnitt der Abdeckplatte (1921) zu einem oberen Abschnitt der feststehenden Platte (191) erstrecken; und
Seitenplatten (1923a, 1923b), die so konfiguriert sind, dass sie sich von beiden Seitenflächen der Abdeckplatte (1921) zu beiden Seitenflächen der feststehenden Platte (191) erstrecken,
wobei das Kühlgebläse (194) an einer der Seitenplatten (1923a, 1923b) vorgesehen ist.

11. Wäschebehandlungsvorrichtung nach Anspruch 10, wobei die oberen Platten (1922a, 1922b) so ausgebildet sind, dass sie nach unten zur Abdeckplatte (1921) geneigt sind.

12. Wäschebehandlungsvorrichtung nach Anspruch 10 oder 11, wobei rückseitige Auslasslöcher (1921c), die konfiguriert sind, die vom Kühlgebläse (194) bewegte Luft dort hindurch abzugeben, in einem Abschnitt der Abdeckplatte (1921) ausgebildet sind, der zu den oberen Platten (1922a, 1922b) benachbart ist.

13. Wäschebehandlungsvorrichtung nach Anspruch 10 oder 11, wobei die oberen Platten (1922a, 1922b) mindestens zwei obere Platten mit unterschiedlichen Höhen aufweisen, und rückseitige Auslasslöcher (1921c), die konfiguriert sind, die vom Kühlgebläse (194) bewegte Luft dort hindurch abzugeben, in einem Abschnitt der Abdeckplatte (1921) ausgebildet sind, der zu einer oberen Platte benachbart ist, die eine verhältnismäßig hohe Höhe unter den mindestens zwei oberen Platten aufweist.

14. Wäschebehandlungsvorrichtung nach Anspruch 10, wobei die PCB mindestens zwei Stromversorgungseinheiten aufweist, die konfiguriert sind, jeweilige Elemente mit Strom versorgen, und wobei vom Kühlgebläse (194) bewegte Luft nacheinander durch die mindestens zwei Stromversorgungseinheiten strömt,
wobei jede der mindestens zwei Stromversorgungseinheiten Kühlrippen aufweist, die so konfiguriert sind, dass sie sich in einer Richtung parallel zur Strömungsrichtung der Luft erstrecken, und
wobei mehrere Kühlnuten (1921a, 1921b), die so konfiguriert sind, dass sie der Anordnung der mindestens zwei Stromversorgungseinheiten entsprechen, an der Abdeckplatte (1921) ausgebildet ist.

## Revendications

1. Machine à traiter le linge, comprenant :
une carrosserie (100) ;
un tambour (200) monté de manière rotative dans la carrosserie (100) pour recevoir du linge ;
une base (800) disposée sous le tambour (200) et adaptée pour présenter un espace prévu de sorte que l'air présent dans le tambour (200) y circule ou que l'humidité contenue dans l'air s'y condense ;
un moteur (500) prévu pour fournir la puissance nécessaire à la rotation du tambour (200) ;
une unité d'échange de chaleur (900) comprenant un premier échangeur de chaleur (910) placé sur la base (800) et prévu pour condenser l'humidité présente dans l'air, un deuxième échangeur de chaleur (920) placé sur la base (800) et prévu pour chauffer l'air, et un compresseur (930) prévu pour refouler un fluide frigorigène pour un échange de chaleur avec l'air dans le premier échangeur de chaleur (910) ou le deuxième échangeur de chaleur (920) ;
un boîtier de commande (190) comprenant une carte de circuit imprimé, PCB, prévue pour commander le fonctionnement du moteur (500), du compresseur (930) ou du ventilateur (950) et pour fournir de l'énergie,
où :
le moteur (500) est disposé derrière le tambour (200) de manière à être séparé de la base (800) et espacé de celle-ci ; et
la base (800) comprend :
une partie de trajet de circulation (820) formée sur un côté de la base (800) dans une direction antéropostérieure de manière à communiquer avec le tambour (200), prévue pour faire circuler l'air dans le tambour (200), et pourvue du premier échangeur de chaleur (910) et du deuxième échangeur de chaleur (920) disposés à l'intérieur ;
une partie de collecte d'eau (860) prévue à l'extérieur de la partie de trajet de circulation (820) et prévue pour communiquer avec la partie de trajet de circulation (820) et pour recueillir l'eau condensée dans la partie de trajet de circulation (820) ; et
une partie d'installation de boîtier de commande (813) prévue sur un côté restant de la base (800) dans une direction latérale d'un trajet d'écoulement, et prévue de telle manière que le boîtier de commande (190) est monté dans la partie d'installation de boîtier de commande (813),
où la partie de collecte d'eau (860) est disposée entre la partie d'installation de boîtier de commande (813) et la partie de trajet de circulation (820).

2. Machine à traiter le linge selon la revendication 1, où la base (800) comprend en outre une partie de guidage de collecte (825) en retrait d'une partie de la surface inférieure de la partie de trajet de circulation (820) faisant face au premier échangeur de chaleur (910), prévue pour guider l'eau de condensation vers la partie de collecte d'eau (860), et
où la partie d'installation de boîtier de commande (813) est disposée de manière à recouvrir la partie de guidage de collecte (825) vers la gauche et vers la droite.

3. Machine à traiter le linge selon la revendication 2, où :
la partie de guidage de collecte (825) comprend un orifice de communication de collecte d'eau (827) formé à travers une surface de la partie de trajet de circulation (820) faisant face à la partie de collecte d'eau (860), prévue pour établir une communication entre la partie de guidage de collecte (825) et la partie de collecte d'eau (860) ; et
où la partie d'installation de boîtier de commande (813) est disposée de manière à chevaucher l'orifice de communication de collecte d'eau (827) vers la gauche et vers la droite.

4. Machine à traiter le linge selon la revendication 1, où :
la base (800) comprend en outre une partie d'installation de compresseur (811) prévue de manière espacée de la partie de trajet de circulation (820) de sorte que le compresseur (930) est placé sur la partie d'installation de compresseur (811) ; et
où une partie de la partie d'installation de boîtier de commande (813) est disposée de manière à chevaucher la partie d'installation de compresseur (811) vers la gauche et vers la droite.

5. Machine à traiter le linge selon la revendication 1, où :
la carrosserie (100) comprend des panneaux latéraux (140) prévus pour former ses surfaces latérales ; et
la partie d'installation de boîtier de commande (813) est disposée entre la partie de trajet de circulation (820) et un panneau latéral (140) quelconque.

6. Machine à traiter le linge selon l'une des revendications 2 à 5, comprenant en outre une plaque arrière (420) installée sur la base (800) et disposée entre le tambour (200) et le moteur (500), prévue pour guider l'air refoulé de la partie de trajet de circulation (820) vers le tambour (200).

7. Machine à traiter le linge selon la revendication 6, comprenant en outre un réducteur (600) fixé à une surface arrière de la plaque arrière (420), disposé entre le tambour (200) et le moteur (500), et prévu pour réduire la puissance fournie par le moteur (500) de manière à faire tourner le tambour (200).

8. Machine à traiter le linge selon l'une des revendications 1 à 7, où le boîtier de commande (190) comprend en outre :
une plaque fixe (191) raccordée à la base (800) et prévue de sorte que la carte de circuit imprimé est fixée à une surface de la plaque fixe (191) ;
une plaque de couverture (192) raccordée à la plaque fixe et en forme de boîtier, prévue de manière à recouvrir la carte de circuit imprimé ; et
un ventilateur de refroidissement (194) disposé sur un côté de la plaque de couverture (192) et prévu pour générer un flux d'air dans un espace formé par la plaque de couverture (192).

9. Machine à traiter le linge selon la revendication 8, où une pluralité de saillies de support (1911a, 1911b, 1911c) sont formées à une extrémité inférieure de la plaque fixe (191), et une pluralité d'évidements d'insertion de saillies de support (881) sont formés dans la base de sorte que les saillies de support (1911a, 1911b, 1911c) sont insérées de manière fixe dans les évidements d'insertion de saillies de support (881).

10. Machine à traiter le linge selon la revendication 8 ou la revendication 9, où la plaque de couverture (192) comprend :
un panneau de couverture (1921) espacé de la plaque fixe (191) ;
des panneaux supérieurs (1922a, 1922b) prévus pour s'étendre depuis une partie supérieure du panneau de couverture (1921) jusqu'à une partie supérieure de la plaque fixe (191) ; et
des panneaux latéraux (1923a, 1923b) prévus pour s'étendre depuis les deux surfaces latérales du panneau de couverture (1921) jusqu'aux deux surfaces latérales de la plaque fixe (191),
le ventilateur de refroidissement (194) étant prévu sur l'un des panneaux latéraux (1923a, 1923b).

11. Machine à traiter le linge selon la revendication 10, où les panneaux supérieurs (1922a, 1922b) sont formés de manière à être inclinés vers le bas en direction du panneau de couverture (1921).

12. Machine à traiter le linge selon la revendication 10 ou la revendication 11, où des orifices de refoulement de surface arrière (1921c), prévus pour refouler l'air déplacé par le ventilateur de refroidissement (194), sont formés dans une partie du panneau de couverture (1921) adjacente aux panneaux supérieurs (1922a, 1922b).

13. Machine à traiter le linge selon la revendication 10 ou la revendication 11, où les panneaux supérieurs (1922a, 1922b) comprennent au moins deux panneaux supérieurs de hauteurs différentes, et où des orifices de refoulement de surface arrière (1921c), prévus pour refouler l'air déplacé par le ventilateur de refroidissement (194), sont formés dans une partie du panneau de couverture (1921) adjacente à l'un des panneaux supérieurs présentant une hauteur relativement élevée parmi lesdits au moins deux panneaux supérieurs.

14. Machine à traiter le linge selon la revendication 10, où la carte de circuit imprimé comprend au moins deux unités d'alimentation électrique prévues pour alimenter en énergie des éléments respectifs, et l'air déplacé par le ventilateur de refroidissement (194) traverse séquentiellement lesdites au moins deux unités d'alimentation,
où chacune des au moins deux unités d'alimentation électrique comprend des ailettes de rayonnement prévues de manière à s'étendre dans une direction parallèle à la direction d'écoulement de l'air, et
où une pluralité de rainures de rayonnement (1921a, 1921b), prévues de manière à correspondre à la disposition des au moins deux unités d'alimentation électrique, sont formées sur le panneau de couverture (1921).
